# EUROPEAN PATENT SPECIFICATION

(11) **EP 3 236 352 B1**
(45) Date of publication and mention of the grant of the patent: **28.12.2022**
(21) Application number: 17167428.6
(22) Date of filing: 20.04.2017
(51) Int. Cl.: G06F 8/38, G06F 9/451

(54) **AUTOMATED GRAPHICAL USER INTERFACE CONFIGURATION**
AUTOMATISCHE KONFIGURATION EINER GRAFISCHEN BENUTZERSCHNITTSTELLE
CONFIGURATION D'INTERFACE GRAPHIQUE UTILISATEUR AUTOMATISÉE

(30) Priority: 21.04.2016 US 201662325670 P; 20.02.2017 US 201715437267
(43) Date of publication of application: 25.10.2017
(73) Proprietor: AVEVA Software, LLC, Lake Forest, CA 92630 (US)
(72) Inventor: KANE, Douglas Paul, Vashon WA 98070 (US); COBLE, Christopher R., Ladera Ranch, CA 92694 (US); WEINRICH, Steven Michael, York, PA 17402 (US); KAMBACH, Julius Robert, Murrieta CA 92562-6350 (US); KRAJEWSKI III, John Joseph, Rancho Santa Margarita,CA 92688 (US); SINGH, Manoranjan Kumar, Foothill Ranch, CA 92610 (US); TRAN, Dave, Rancho Santa Margarita, CA 92688 (US); KUMAR, Raju Uthu, Rancho Santa Margarita, CA 926688 (US)
(74) Representative: WBH Wachenhausen Patentanwälte PartG mbB

(56) References cited:
- WO-A1-01/65322
- WO-A1-2014/151574
- US-A1- 2015 193 418

## Description

### TECHNICAL FIELD

Aspects of the present disclosure generally relate to development, configuration, and/or execution of processor-executable applications that monitor and/or control components in industrial processes. More particularly, aspects relate to systems and methods for automatically generating graphical user interfaces for use in industrial software design, management, and/or execution.

### BACKGROUND

Typical industrial processes are extremely complex and receive substantially greater volumes of information than any human could possibly digest in its raw form. By way of example, it is not unheard of to have thousands of sensors and control elements (e.g., valve actuators) monitoring/controlling aspects of a multi-stage process within an industrial plant. These sensors are of varied type and report on varied characteristics of the process. Their outputs are similarly varied in the meaning of their measurements, in the amount of data sent for each measurement, and in the frequency of their measurements. As regards the latter, for accuracy and to enable quick response, some of these sensors/control elements take one or more measurements every second. Multiplying a single sensor/control element by thousands of sensors/control elements (a typical industrial control environment) results in an overwhelming volume of data flowing into the manufacturing information and process control system. Sophisticated data management and process visualization techniques have been developed to handle the large volumes of data generated by such system.

Highly advanced human-machine interface/process visualization systems exist today that are linked to data sources such as the above-described sensors and controllers. Such systems acquire and digest (e.g., filter) the process data described above. The digested process data in-turn drives a graphical display rendered by a human machine interface (HMI). Examples of such systems are the well-known Wonderware INTOUCH^{™} HMI software system for visualizing and controlling a wide variety of industrial processes and the ArchestrA^{™} (e.g., the application server or AppServer for INTOUCH^{™}) comprehensive automation and information software open architecture designed to integrate and extend the life of legacy systems by leveraging the latest, open industry standards and software technologies.

Control system development/configuration environments allow for the configuration, development, and deployment of applications to runtime environments on control components in industrial processes. For example, Wonderware System Platform, available from Schneider Electric, provides various services including visualization, configuration, deployment, communication, security, data connectivity, data storage and management, people collaboration, and the like.

Known control system development/configuration environments require manual customization and scripting (e.g., coding) to support navigation through graphical components of an HMI application, layout of graphical components, and management of multiple display screens. Unfortunately, manually configuring HMI applications can be very complex and difficult. WO2014151574A1 describes a process control monitoring method that uses navigation pane for navigating within a graphical depiction of a process control plant. US20150193418A1 describes a display configuration system that enables a graphical designer to create reusable graphical display elements that can be easily modifies by, for example, other graphical designers with less experience in graphical design programming. WO0165322A1 describes an industrial plant asset management system comprising of a synchronized multiple view graphical user interface combining simultaneous real time and database display capability.

### SUMMARY

Aspects of the disclosure leverage navigation models (e.g., an asset hierarchy) to enable automatic navigation through graphical user interface screens of an HMI application, placement of graphical components on each screen, and/or management of screens across multiple display devices.

In an aspect, an automated graphical user interface system includes at least one configuration processor and processor-executable instructions stored on a computer-readable storage medium. When executed by the processor, the instructions display a navigation model that includes a hierarchy of navigation items. The instructions, when executed, receive a selection of one of the navigation item via an input device. The instructions, when executed, traverse the navigation model in response to receiving the selection to locate other navigation items that have metadata associated with the selected navigation item. The instructions, when executed, generate a graphical user interface screen that has a plurality of panes in response to locating the other navigation items. And the instructions, when executed in response to generating the graphical user interface screen, automatically populate at least one of the panes with visual content representing the selected navigation item and at least one of the remaining panes with visual content representing each of the located navigation items.

In another aspect, a computing device implements a method of automatically configuring graphical user interface screens. An application executing on the computing device displays a navigation model that includes a hierarchy of navigation items. The executing application receives a selection of one of the navigation items from an input device. The executing application traverses the navigation model to locate other navigation items that have metadata associated with the selected navigation item. In response to locating the other navigation items, the executing application generates a graphical user interface screen having a plurality of panes and populates at least one of the panes with visual content representing the selected navigation item and the remaining panes with visual content representing each of the other located navigation items automatically in response to generating the graphical user interface screen.

In yet another aspect, a computer readable storage device stores processor readable instructions that, when executed by a processor, implement a method of automatically configuring graphical user interface screens. The method includes displaying a navigation model that includes navigation items arranged hierarchically. The method further includes receiving a selection of one of the navigation items from an input device. The executing instructions traverse the navigation model to locate other navigation items that have metadata associated with the selected navigation item. In response to locating the other navigation items, the executing instructions generate a graphical user interface screen having a plurality of panes and populates at least one of the panes with visual content representing the selected navigation item and the remaining panes with visual content representing each of the other located navigation items automatically in response to generating the graphical user interface screen.

Other objects and features will be in part apparent and in part pointed out hereinafter. The scope of the invention is defined by the claims.

### BRIEF DESCRIPTION OF THE DRAWINGS

FIG. 1 is a block diagram illustrating exemplary automated generation of graphical user interface components according to an embodiment.
FIG. 2 is a block diagram illustrating a system that enables automated generation of the graphical user interface components of FIG. 1 according to an embodiment.
FIG. 3 is a block diagram illustrating an exemplary navigation model according to an embodiment.
FIG. 4 is a block diagram illustrating linked hierarchy controls according to an embodiment.
FIG. 5 is a screenshot illustrating an exemplary navigation editor according to an embodiment.
FIG. 6 is block diagram illustrating an exemplary graphical user interface screen layout according to an embodiment.
FIGS. 7A-7F illustrate an exemplary graphical component placement process according to an embodiment.

Corresponding reference characters indicate corresponding parts throughout the drawings.

### DETAILED DESCRIPTION

Aspects of the disclosure are described herein in terms of Human Machine Interfaces (HMI), Supervisory Control and Data Acquisition (SCADA), and/or process automation. One having ordinary skill in the art will understand that the described concepts are not limited to these environments and may apply generally to dynamically composing any runtime graphical user interface by looking for available visual content to display, with that visual content organized in a hierarchy and tagged with metadata.

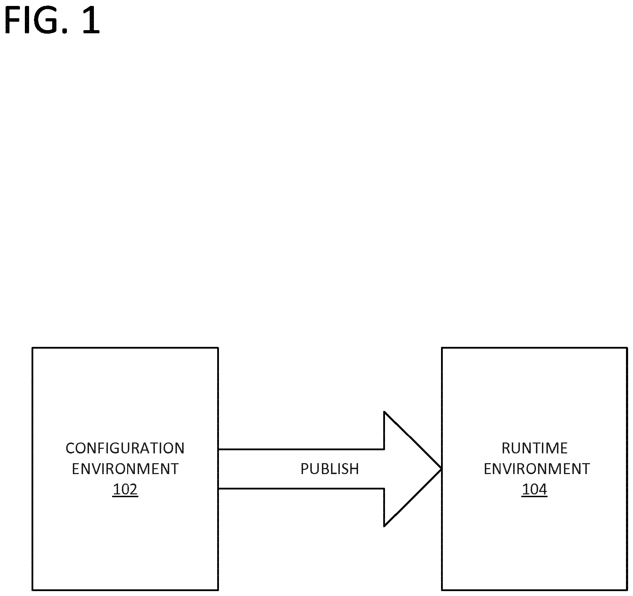

FIG. 1 illustrates an exemplary generation of graphical user interface components in accordance with an embodiment of the disclosure. Aspects of the disclosure enable automatic navigation through graphical user interface screens of an application based on an asset hierarchy and/or custom hierarchy, placement of graphical components (e.g., visual elements) with a predefined layout format based on the navigation model and metadata information defined on the graphical components, and automatically generate graphical user interface screens to create a data-driven HMI application experience.

In an embodiment, a user develops a layout and/or a navigation model during design time in a configuration environment 102. For example, a user can create a layout container component that includes a navigation model within. As used herein, the term "navigation model" includes a hierarchy of navigation items built by a user in a configuration environment either from scratch or using an asset model as input. The navigation model drives the composition of the view of visual content during runtime. In addition, the term "layout" includes a definition of how a screen is divided into named panes (e.g., rectangular segments) with the expectation that certain visual content will be placed in certain panes based on a user configuration. The layout container component is responsible for saving and loading the layout and its underlying navigation model. When a user creates a layout, the configuration environment creates a navigation model with one navigation item (e.g., a root navigation item). As used herein, the term "navigation item" includes an individual navigation item that contains properties for visual representation of an asset (e.g., equipment such as valves, tanks, and the like) and actions (e.g., "Show content X in location Y") to execute when selected by a user in a configuration environment and/or a runtime environment. A navigation item may or may not have a context to an asset model. When a user drags and drops content onto a pane within the layout editor a ShowContentAction is created to show the dropped content on the pane. The ShowContentAction stores information regarding the pane, the layout, and/or the content within the pane. The layout information and navigation model may each be saved by serialization into a blob. As used herein, the term "custom actions" includes actions (e.g., "put content X in pane Y") created by dragging and dropping content from a toolbox-like area to a specific pane. These actions exist on custom navigation nodes that are manually created. Custom actions may also be referred to as "explicit actions" in one or more embodiments. As used herein, the term "implicit actions" includes actions and/or content that already exist in a hierarchy of content and the auto-fill algorithm is attempting to place the content in a pane that is a best match for the content. These actions exist on an included hierarchy of content (e.g., asset hierarchy, equipment hierarchy).

As illustrated, the navigation model (e.g., as .aaNav files) is published from the configuration environment 102 to the runtime environment 104 as part of a layout (e.g., as XML files) and/or as part of a view application (e.g., ViewApp).

In accordance with one or more embodiments, when the application is started in the runtime environment 104 the startup layouts are loaded and displayed on the configured screens. At that point, the navigation model that drives the visual content is hosted by a view application. In accordance with an aspect of the disclosure, a navigation model has at least two uses, depending on whether it is used with a layout or a view application. When the navigation model is used with a layout, the layout acts as a small widget of behavior with the expectation that the entire widget will be placed in a pane and used during runtime. When the navigation model is used with a view application (e.g., a ViewApp), the view application knows about which screen profile is being targeted, allowing the user to place layouts on screens and then compose the visual content across all of the screens.

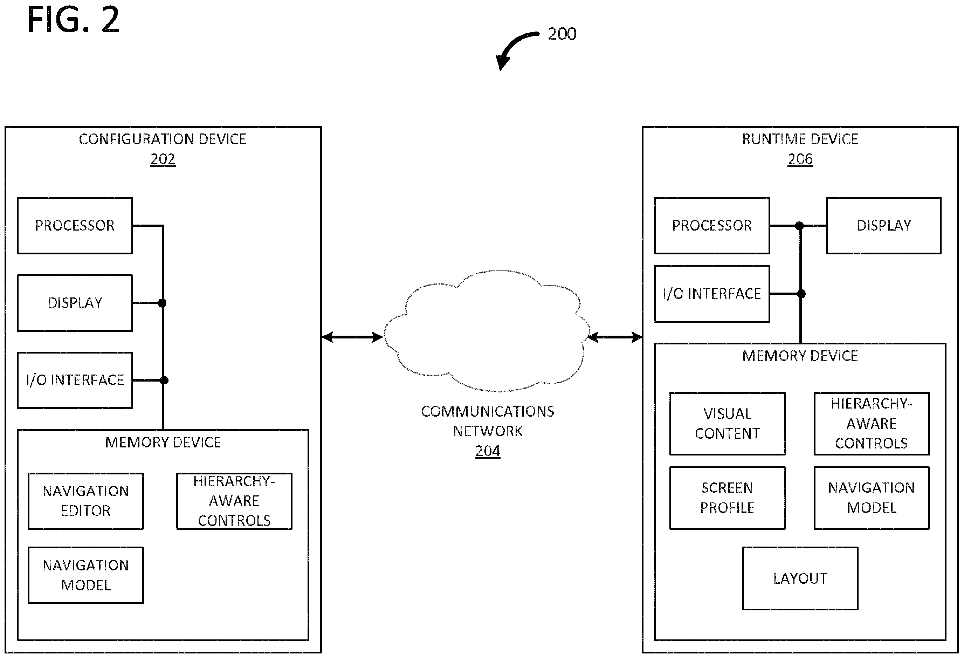

FIG. 2 illustrates a system, generally indicated at 200, within which an embodiment of the disclosure may be incorporated. The system 200 in the illustrated embodiment includes a configuration device 202, a communications network 204, and a runtime device 206.

The configuration device 202 includes at least one processor, a memory, a display, and an input/output (I/O) interface and is configured to provide the configuration environment 102 via a software environment. The memory of configuration device 202 includes a navigation editor, a navigation model, and hierarchy aware controls. As used herein, the term "navigation editor" includes an editor enabling a user to build a navigation model. And the navigation editor comprises a configuration environment (e.g., a ViewApp Editor, Layout Editor, etc.) in accordance with one or more embodiments. As used herein, the term "hierarchy aware control" includes a control configured in a configuration environment (e.g., design time) and utilized in a runtime environment that knows how to react to a hierarchy (i.e., a navigation model) and displays the requested hierarchy information as required. Exemplary hierarchy aware controls include a tree control, a menu control, a tile list, a tab control, and the like. For instance, trees and menus may show multiple levels of a navigation model while a list or tab control may display one level of the navigation model in accordance with one or more embodiments.

In this manner, configuration device 202 comprises a special-purpose computing device for automated graphical user interface configuration. The one or more processors, memory, display, and I/O interface are communicatively connected and/or electrical connected to each other. The configuration processor is adapted to execute processor-executable instructions stored in the memory for implementing the automated graphical user interface configuration system and method. In an embodiment, the I/O interface is a network interface card (NIC) or modem connecting configuration device 202 to communications network 204. Additionally or alternatively, the I/O interface is a human input device, such as a touchscreen, a mouse, a keyboard, or the like.

The communications network 204 is capable of facilitating the exchange of data among various components of system 200, including configuration device 202 and runtime device 206. The communications network 204 in the embodiment of FIG. 2 includes a wide area network (WAN) that is connectable to other telecommunications networks, including other WANs or portions of the Internet or an intranet, including local area networks (LANs). The communications network 204 may be any telecommunications network that facilitates the exchange of data, such as those that operate according to the IEEE 802.3 (e.g., Ethernet) and/or the IEEE 802.11 (e.g., Wi-Fi) protocols, for example. In another embodiment, communications network 204 is any medium that allows data to be physically transferred through serial or parallel communication channels (e.g., copper wire, optical fiber, computer bus, wireless communication channel, etc.). In an embodiment, communications network 204 comprises at least in part a process control network. In another embodiment, communications network 204 comprises at least in part a SCADA system. In yet another embodiment, communications network 204 comprises at least in part an enterprise manufacturing intelligence (EMI) / operational intelligence (OI) system.

The runtime device 206 includes at least one processor, a memory, a display, and an I/O interface. The memory of runtime device 206 includes a graphic runtime module, visual content, a screen profile, hierarchy aware controls, a navigation model, and a layout. In an embodiment, the term "screen profile" includes a definition of how a set of screens are physically composed across display devices and the term "graphic runtime modules (GRM)" includes an engine by which HMI graphical components are rendered to a screen on a display device with real-time data values from process control devices. In this manner, runtime device 206 comprises a special-purpose computing device for automated graphical user interface configuration. The one or more processors, memory, display, and I/O interface are communicatively connected and/or electrical connected to each other. The processor is adapted to execute processor-executable instructions stored in the memory for implementing the automated graphical user interface configuration system and method. In an embodiment, the I/O interface is a network interface card (NIC) or modem connecting runtime device 206 to communications network 204. Additionally or alternatively, the I/O interface is a human input device, such as a touchscreen, a mouse, a keyboard, or the like.

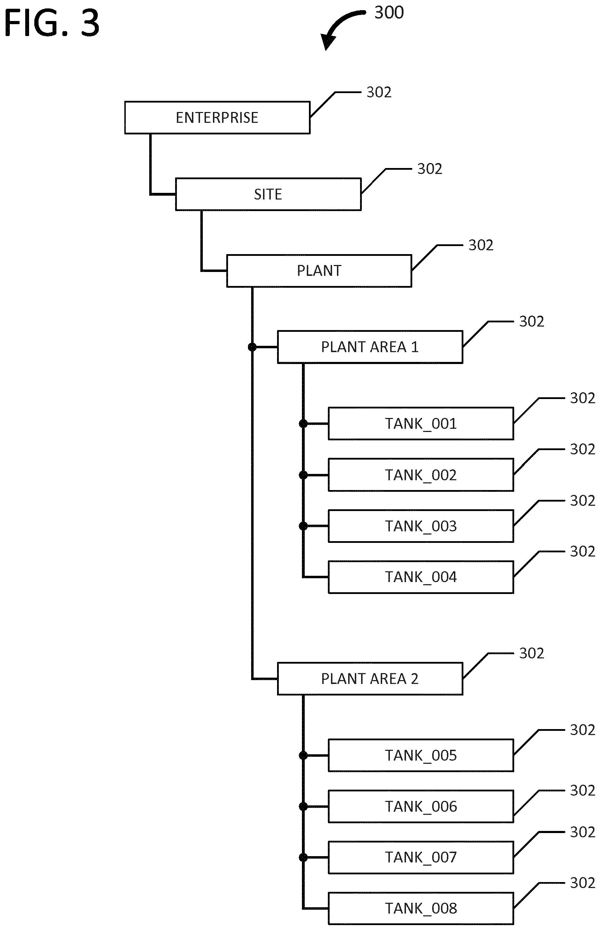

FIG. 3 illustrates a navigation model, generally indicated at 300, in accordance with an embodiment. The navigation model 300 is comprised of navigation items 302. In configuration environment 102 (e.g., a ViewApp, Layout, etc.) navigation model 300 defines the navigation through display screens for an end-user (e.g., runtime) experience. Each navigation item 302 holds a configuration that allows the navigation item to express itself visually in several ways, ranging from simple text to complex visual content representations. Each navigation item 302 also holds properties to toggle visibility, checked state, and like properties. Each navigation item 302 is configured to hold one or more actions to execute when selected by a user.

In an embodiment, configuration environment 102 includes a single navigation model 300 that may be customized to meet user needs. The navigation model 300 may include multiple root nodes that serve as different visual representations of the application in a single navigation model. The navigation model 300 defines the navigation hierarchies, references to visual content utilized by navigation aware controls, and the actions to execute when selected. These behaviors are separated from the actual control which will present the navigation model 300 data to the user. This separation allows runtime environment 104 to visually express navigation model 300 in multiple ways at runtime. The power of this multiple expression behavior becomes more apparent when multiple hierarchy aware controls are used together to represent a single navigation model 300 to the user. In an embodiment, navigation model 300 is not an individual item in a project, but is part of one or more objects in the project. For example, navigation model 300 may be serialized with a layout object, serialized with a ViewApp object, and the like. The navigation model 300 travels with the import/export of the object with which it is serialized.

In runtime environment 104 all published navigation models 300 from configuration environment 102 (e.g., various layouts and the single ViewApp) reside within a published application folder. Navigation aware controls request specific navigation items 302 based on human readable path strings which are references into particular hierarchies of navigation model 300. The runtime environment 104 executes requests from the navigation aware controls to return results based on the request. In an embodiment, navigation aware controls are unaware of which specific navigation model 300 they are using, but rely on the path string that identifies the link into a particular navigation model's hierarchy. During runtime, a navigation model path string may be injected into a "NavigationModel" property of the control and the control must react accordingly based on the control's configuration. Examples of URI usage are further described herein.

Each individual navigation item 302 in navigation model 300 contains the necessary information to display a visual representation of an item in various forms, and one or more actions executed when a user triggers (e.g., selects via a GUI on a display device) the navigation item. In an embodiment, navigation items 302 are "all inclusive." In another embodiment, navigation items 302 include the ability to be all inclusive regardless of which type of hierarchy aware control is being used to represent the navigation item. The navigation item 302 does not need to support all visual representations possible.

The navigation items 302 may be organized (e.g., by a user) in configuration environment 102 in a single flat list or in a hierarchy to comprise navigation model 300. There is no difference between a navigation item that is a leaf node as compared to a navigation item that contains child navigation items. In other words, navigation items containing other navigation items can also trigger actions when selected and are not simply containers for navigation items.

In an embodiment, navigation items 302 have a context to the asset model. In this embodiment, a user can override default values of the asset model and tailor them for usage in navigation model 300 (e.g., override name "WSTINTANK_004" with "West InTake Tank 4"). In another embodiment, navigation items 302 have a context into a visual toolbox (GTB). In yet another embodiment, navigation items 302 are query related and evaluated at runtime. Exemplary query navigation items include a content most recently used (MRU) query that returns the last number of items viewed by the user and a query to return all specific content types for assets in alarm. As used herein, the term "content type" includes a defined value in a project that acts as a tag to define the nature and usage of a particular visual content component (e.g., an asset) in the project and the term "content types" includes a list of content types available to a user for tagging content (e.g., metadata to describe content in the project). And the term "visual content" as used herein includes a graphical (i.e., visual) widget that may be displayed on a screen by a display device. Exemplary graphical widgets include HMI graphical components, Windows Presentation Foundation (WPF) controls, a WinForms control, a web snippet, a document, and the like.

Referring further to the embodiment of FIG. 3, navigation items 302 include an auto-fill behavior. In this embodiment, each navigation item 302 controls whether available panes on currently displayed layouts should be auto-filled. Before an auto-fill algorithm (described further herein) can execute, the appropriate layouts must be applied to the available screens. The layouts are determined by looking at the current navigation item 302 to determine if there are any specific layouts that should be applied to the screens. If any screens are still empty without layouts, the parent navigation item 302 is queried to continue to search for layouts appropriate for screens. This process continues until the root node of the navigation hierarchy is reached, or all screens have layouts. In an embodiment, it is possible for a user to explicitly mark a screen as empty without a layout in configuration environment 102 (e.g., design time). In this embodiment the layout on the screen is closed. Once the appropriate layouts are determined, the auto-fill algorithm executes against the available layouts.

Auto-filling includes one or more options to control how content is automatically injected into panes without the user having to individually configure the view. In a "none" mode, no content is automatically displayed unless specific commands have been created to display content. In the "none" mode the user has to manually assign the content to specific panes via drag/drop operations. Any commands in parent navigation items or child navigation items are not considered to be used to fill in screens or panes. The "none" mode is available on custom navigation items 302. In a "fill from current" mode, the user assigns layouts to screens, but any content on the selected navigation item 302 would automatically be filled into the available panes using a best available pane algorithm.

In a "fill from current and look up" mode, for example, the auto-fill algorithm looks for layouts that initially fill the screens prior to determining which content should be displayed in particular panes. The current navigation item 302 is inspected for any commands that place layouts or contents in a full screen. For any screens that are still empty, the auto-fill algorithm looks up to the parent navigation item 302 for additional ShowLayout or ShowScreen commands to apply to the empty screens. Once the contents have been established on screens, any content residing on the current navigation item 302 is displayed on the screen using a best available pane algorithm for each individual piece of content. For any panes that are still empty, the auto-fill pane algorithm looks up to the parent navigation item 302 for additional commands/content to apply to the empty panes. This process continues until all panes are filled or the root of navigation model 300 is reached. If the auto-fill pane algorithm intends to replace pane content with exactly the same content it already has, that command is skipped so the existing content is not disturbed. In an embodiment, some panes are not filled and are made empty.

A "fill from current and look up then down" mode can be configured as identical to the "fill from current and look up" mode with one addition. If the auto-fill pane algorithm has reached the root of navigation model 300 and there are still empty screens/panes, the first child of the current navigation item 302 is inspected to see if it has content that applies to the available screens/panes. This process continues down the navigation model 300 using the first child at each level until a leaf node is hit, then the auto-fill algorithm stops. In an embodiment, the "fill from current and look up then down" mode is a default mode.

The auto-fill algorithm makes no distinction between explicit or implicit commands on any navigation item 302 when deciding whether to use the content of the action to place in a pane. This lack of distinction also holds true for when the auto-fill algorithm is looking upward or downward in the navigation model 300. Explicit actions are triggered by the presence of a pane name on a screen for placement. Regardless of what layout is actually on the screen, the auto-fill algorithm will use an explicit action on any level of the navigation model 300 if the pane name specified in the action is present on the target screen and the pane is available to receive the content. A single navigation item may have multiple explicit actions targeted at a single pane along with other explicit actions at different levels of the navigation model 300 if the auto-fill mode is "fill from current and look up" or "fill from current and look up then down" and the explicit actions use the pane name. Implicit actions are triggered by an available pane that matches the content type of the content. A multi-content pane can be the destination of multiple implicit action calls while executing the auto-fill algorithm. For instance, if a pane is configured to host multiple contents and tagged to host overview type pieces of content, and there is a hierarchy of LI, L2, and L3 navigation items 302 with each navigation item having an overview type content, then the overview pane would display three pieces of content. In an embodiment with multi-content panes (e.g., a single pane filled with content from different levels in navigation model 300) the order of the content is dependent upon how it was filled with the auto-fill algorithm.

Content types enable a user to tag visual content for specific purposes. Exemplary content types include "Faceplate", "Overview", and the like. Content types enable a user to control where content of a particular type is displayed within runtime environment 104. In an embodiment, a user can tag content on assets with certain content types so they are automatically utilized when the asset model is utilized in navigation model 300.

At a high level, a hierarchy control (e.g., hierarchy aware control) reads and/or is injected with the navigation model it should display and displays a particular portion of navigation model 300 based on its configuration. A particular hierarchy aware control knows how many levels of the hierarchy (e.g., of navigation model 300) to display based on its configuration. For instance, a tree control has the ability to display multiple levels of navigation model 300 but a grid control may only be able to display a single level. For controls that can display multiple levels, one or more properties control how many levels it displays from navigation model 300. Moreover, each hierarchy aware control acts in a publish/subscribe ("pub/sub") model with other tightly coupled hierarchy aware controls to allow multiple controls to visualize a single navigation model 300. In an embodiment, only one navigation item 302 in the runtime navigation model 300 for a ViewApp is active at a time. The manner in which that single navigation item is selected can happen via various methodologies (e.g., mouse, keyboard, touchscreen, etc.).

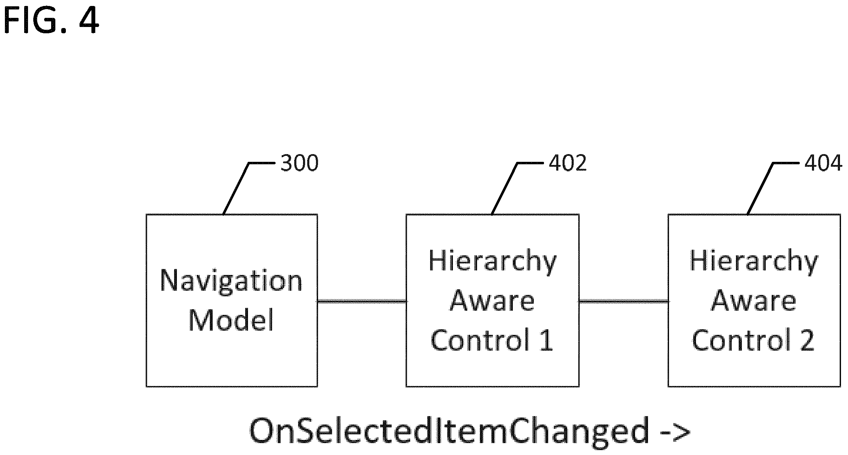

In an embodiment, a user may link two or more hierarchy controls together to achieve advanced behaviors in runtime environment 104. Linking hierarchy controls enables multiple navigation controls to visually express a single navigation model 300 in multiple ways. Within configuration environment 102 (e.g., at design time) a user may point the navigation model 300 of one hierarchy aware control to an existing hierarchy aware control. FIG. 4 illustrates an exemplary embodiment of wiring together multiple navigation aware controls. When a currently selected navigation item 302 changes in one or more ways a navigation model service is notified. The navigation model service then looks at all subscribers to the service. The selection change is sent to the first subscriber of the navigation model 300, which in the illustrated embodiment is a first hierarchy aware control 402 (e.g., "HierarchyAwareControll"). The first hierarchy aware control 402 is linked directly against a node in navigation model 300 and performs a linking process. The first hierarchy aware control 402 determines whether it holds the selected navigation item 302 itself, and if so, visually selects it. If there are any subscribers to the first hierarchy aware control 402 it publishes the new selected node at the current level. When the first hierarchy aware control 402 holds the selected navigation item 302 the current selection was changed and the downstream second hierarchy aware control 404 refreshes to reflect this new value. After refreshing the downstream hierarchy aware control by reading the children and populating the view the process begins again.

Referring further to FIG. 4, if the first hierarchy aware control 402 determines it is not holding the selected navigation item 302 itself the first hierarchy aware control 402 determines if it is holding a parent of the selected navigation item 302. If it is holding a parent of the selected navigation item 302 it visually selects the parent. If there are any subscribers to the first hierarchy aware control 402 it publishes the new selected node at the current level. If the first hierarchy aware control 402 determines it is holding neither the selected navigation item 302 nor a parent of the selected navigation item 302 the first hierarchy aware control 402 maintains the existing selection and takes no further action (e.g., does not forward the OnSelectedltemChanged to any subscribing controls).

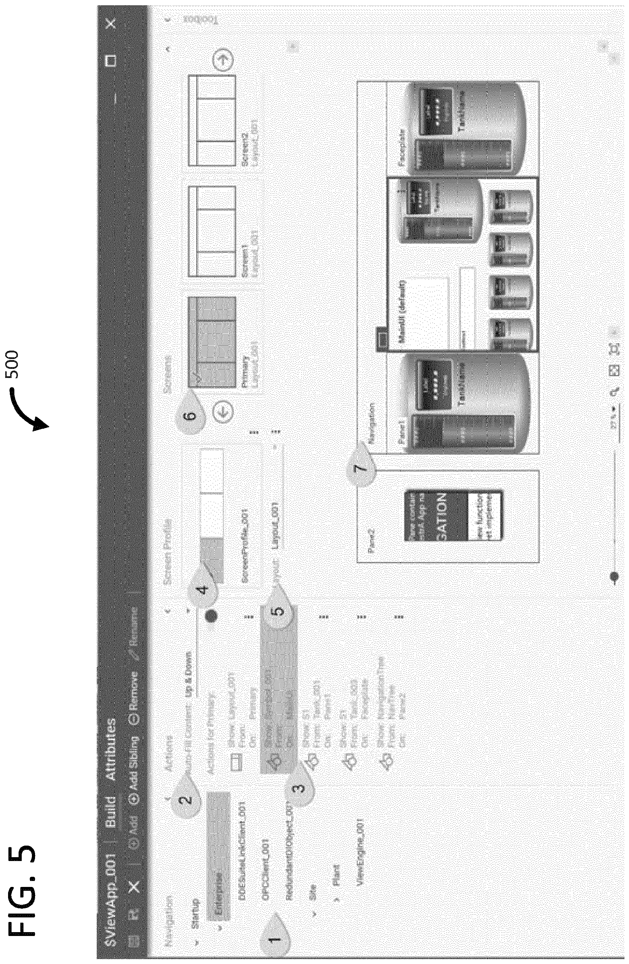

FIG. 5 illustrates an exemplary view application editor 500 GUI according to an embodiment. In an embodiment, the view application editor 500 includes a navigation model editor, which is an editor for creating and modifying navigation model 300. The editor 500 works in configuration environment 102 to present a "what you see is what you get" (WYSIWYG) experience to build the visual representation of what is displayed at each level in the navigation model 300. The view application editor 500 includes a representation 1 of navigation model 300 holding a hierarchy of navigation items 302, a representation 2 of auto-fill behavior specific to the selected navigation item 302, a list 3 of actions for showing which content will be placed in which pane, an overview 4 of screens that are part of the screen profile (e.g., ViewApp), a representation 5 of the current layout being used on the current screen, a representation 6 of which layouts are being utilized on which screens, and a WYSIWYG visual representation 7 of how the content is applied to the current screen using the current layout.

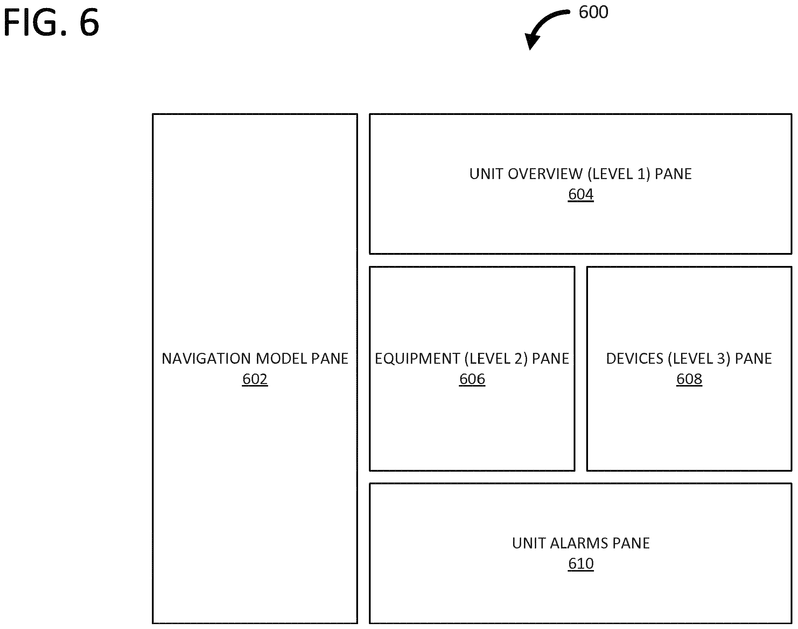

FIG. 6 illustrates an exemplary layout 600 of a graphical user interface screen of runtime environment 104 according to an embodiment. The layout 600 includes a navigation model pane 602, a unit overview pane 604, an equipment pane 606, a devices pane 608, and a unit alarms pane 610.

The view application editor 500 is a view composition engine that drives the final presentation of the layout 600 to the screen. To fully compose layout 600 actions from multiple levels of navigation model 300 are combined together to fill as many panes as possible based on the currently selected navigation item 302. This implies that what the user sees at any particular moment is a combination of content which is shown by the currently selected navigation item and other content shown by the parent nodes and first child nodes (e.g., when the auto-fill mode is "up and down") of the currently selected navigation item.

When a navigation item 302 triggers opening one or more pieces of content to panes, a process begins to fill the panes. All screens across the screen profile are considered empty. Layouts are determined across the available screens using inheritance. Thus, if the current level of the navigation model 300 specifies a layout for use on a screen then it is applied to that screen. If any screens are left empty the parent navigation item 302 is queried to determine if a layout is specified for that screen. All panes across all now-determined layouts are assumed to be empty while the composition engine determines what should be visible in each pane. The content is shown in the appropriate pane(s) given the pane type or a direct reference to the pane. Layouts that have pre-existing content coming from the layout would not be considered for a pane type match. Other panes that do not display content are enumerated to retrieve their individual types. For each pane type, the current level in the navigation model 300 is queried to see if any explicit actions exist that specify a pane name that exists in the destination screen and/or if any implicit actions exist based on content of that type. In an embodiment, this request is used for navigation items 302 when the navigation item has a context into the navigation model 300 because a navigation item 302 may have several different types of content on it (e.g., overview, faceplate, etc.). If any actions are found at that level of navigation model 300, they are displayed in the panes that were determined across the available screens using inheritance. For empty panes, the parent of the current navigation item 302 is retrieved and the search starts again, attempting to satisfy all the content types of the pane. The search ends when either all content is found for the panes or the root of navigation model 300 is reached. In an embodiment in which there are multiple panes with the same content type the pane is chosen based on the alphabetical order of the pane name.

Referring further to FIG. 6, navigation model pane 602 holds a tree control with the entire asset model of LI, L2, and L3 displays in an embodiment. The unit overview pane 604 includes an LI display of primary graphic overviews. The equipment pane 606 includes an L2 display of groups of equipment graphics. The devices pane 608 includes an L3 display of faceplates for a specific device.

When a user selects a navigation item 302 in navigation model pane 602 on a screen of runtime device 206 that opens an LI display then the LI display is opened in unit overview pane 604. The runtime device 206 then looks for L2, L3 and embedded alarm control (EAC) content on the LI navigation item. When runtime device 206 finds no L2, L3, or EAC content the process ends. When runtime device 206 finds L2, L3, and/or EAC content then the content is displayed in each corresponding pane.

When a user selects a navigation item 302 in navigation model pane 602 on a screen of runtime device 206 that opens an L2 display then the L2 display is opened in equipment pane 606. The runtime device 206 then looks for LI, L3, and EAC content on the L2 navigation item. When runtime device 206 finds LI, L3, and/or EAC content then the content is displayed in each corresponding pane. When runtime device 206 finds no LI, L3, or EAC content, runtime device 206 goes up a level from the L2 navigation item to the LI navigation item and looks for LI, L3, and/or EAC content on the LI navigation item. When runtime device 206 finds an LI display the LI display is displayed in unit overview pane 604.

When a user selects a navigation item 302 in navigation model pane 602 on a screen of runtime device 206 that opens an L3 display then the L3 display is opened in devices pane 608. When runtime device 206 finds LI, L2, and/or EAC content then the content is displayed in each corresponding pane. When runtime device 206 finds no LI, L2, or EAC content, runtime device 206 goes up a level from the L3 navigation item to the L2 navigation item and looks for LI, L2, and/or EAC content on the L2 navigation item. When runtime device 206 finds an L2 display the L2 display is displayed in equipment pane 606. The runtime device 206 then goes up a level from the L2 navigation item to the LI navigation item and looks for LI and/or EAC content on the LI navigation item. When the runtime device 206 finds an LI display the LI display is displayed in unit overview pane 604.

A ViewApp follows the same pattern as the layout described above, but is at an abstraction level higher than the layout. At the layout level, the only visible places to place content are in panes 602-610. At the ViewApp level, the initial places to put content are based on the screen profile supported by the ViewApp. The ViewApp must first specify which layouts belong on which screen profiles. Commands executed after that would populate the panes 602-610 in each of the layouts.

When one of panes 602-610 has hierarchy navigation enabled, a user may swipe up to move to the previous navigation item 302 or swipe down to move to the next sibling navigation item 302. In an embodiment, panes 602-610 each include small indicators (e.g., arrows) at the top and bottom of the pane that accomplish the same behavior when selected (e.g., clicked). The top indicator holds the name of the previous navigation item 302 and the count of previous navigation items, and the bottom indicator holds the name of the next navigation item 302 and the count of next navigation items to aid the user. Selection of the up/down indicators triggers activation of a new navigation item 302. When a particular pane 602-610 has been populated with a piece of content, the pane will have to know which navigation item 302 caused that content to end up in the pane. For example, to process an up to down swipe the pane will need to determine from navigation model 300 the previous sibling navigation item 302 and the content that will end up in this pane to process the visual slide. In an embodiment, the up to down swipe will execute the navigation item in the same manner as a click (e.g., via a mouse) on a navigation aware control to trigger the same item. To know which visual content to slide in, the pane forwards a request for content based on the behaviors of the previous sibling navigation item 302 (i.e., asking the previous navigation item "what do you expect is in this pane when you are triggered?"). The result of the request is visually slid into the pane. Panes 602-610 in layout 600 may be filled in using the auto-fill algorithm described herein. In a single layout 600 the content displayed in panes 602-610 may come from different navigation items 302. Using hierarchy navigation in any pane 602-610 will utilize the specific navigation item 302 for swiping behavior which placed that original content in the pane.

When a particular pane 602-610 is set to a "multiple" mode and has been populated with multiple pieces of content, content navigation enables a user to move through the multiple pieces of content in the pane. In an embodiment, content navigation is accomplished by swiping left or right in the pane to move the previous sib ling content and next sibling content, respectively. In another embodiment, the pane displays swipe indicators to allow users to see which swipes are available along with a count of the number of previous and/or next sibling contents as a reference. In an embodiment, panes 602-610 each include small indicators (e.g., arrows) at the left and right of the pane that accomplish the same behavior when selected (e.g., clicked). For instance, in a multi-content pane the left/right indicators move back and forth to visibly display one piece of content at a time. Selection of the left/right indicators cycles through the pieces of content rather than displaying and/or triggering any navigation items.

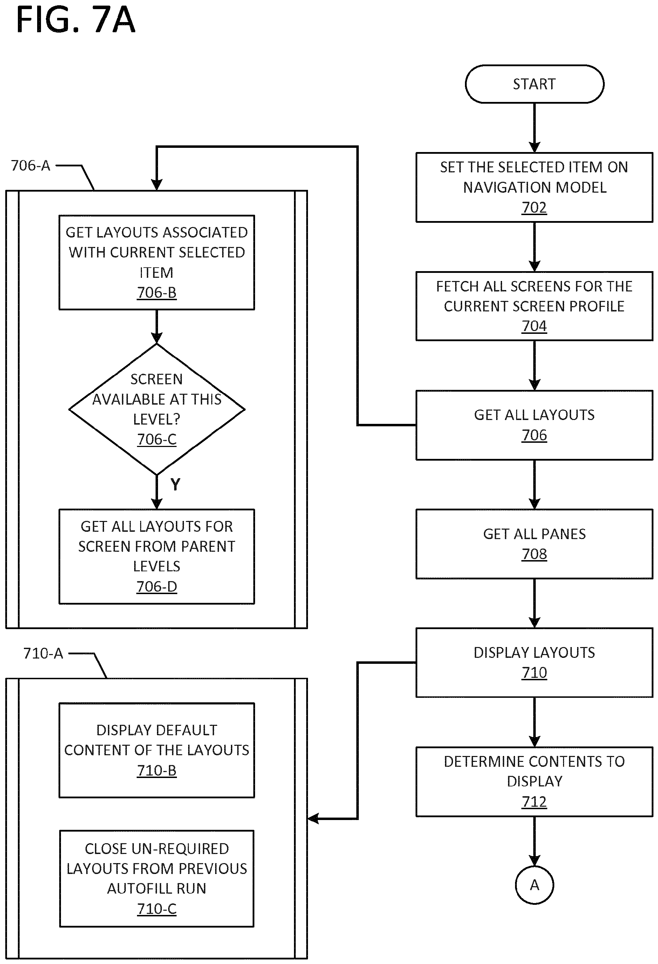

FIGS. 7A-7F illustrate the auto-fill algorithm in accordance with an embodiment. The algorithm determines how panes 602-610 will be filled when actions on a selected navigation item 302 are executed. In accordance with one or more embodiments, the algorithm considers factor such as the content type of contents and available panes 602-610, existing content on layout 600, and/or clearing of contents after execution of the algorithm. The algorithm enables the automatic filling of panes through navigation in both configuration environment 102 and runtime environment 104. In the exemplary embodiment described below, a processor of runtime device 206 executes processor-executable instructions stored in the memory to perform the auto-fill algorithm via runtime environment 104.

Referring to FIG. 7A, upon selection of a displayed navigation item 302 the auto-fill algorithm sets the selected navigation item 302 on the navigation model 300 at step 702. At step 704, the auto-fill algorithm fetches all screens for the current screen profile. The auto-fill algorithm then gets all layouts at step 706. In an embodiment, step 706 includes subprocess 706-A in which the auto-fill algorithm gets layouts associated with the currently selected navigation item 302 at step 706-B, determines whether a screen is available at the required level for the selected navigation item 302 at step 706-C, and gets all layouts for the available screen from parent navigation items of the currently selected navigation item within the navigation model 300 at step 706-D.

The auto-fill algorithm then gets all unlocked panes at step 708. In an embodiment, step 708 includes walking the screens and enumerating all of the panes. Generally, panes are unlocked but if content was placed in a pane at the layout level then it would be considered locked. In an embodiment in which a user has configured a pane to not participate in auto-fill that pane will also be considered locked.

At step 710, the auto-fill algorithm displays the layouts. In an embodiment, step 710 includes subprocess 710-A in which the default content of the layouts are displayed at step 710-B and/or un-required layouts from previous auto-fill executions are closed at step 710-C. The auto-fill algorithm then determines which contents to display at step 712.

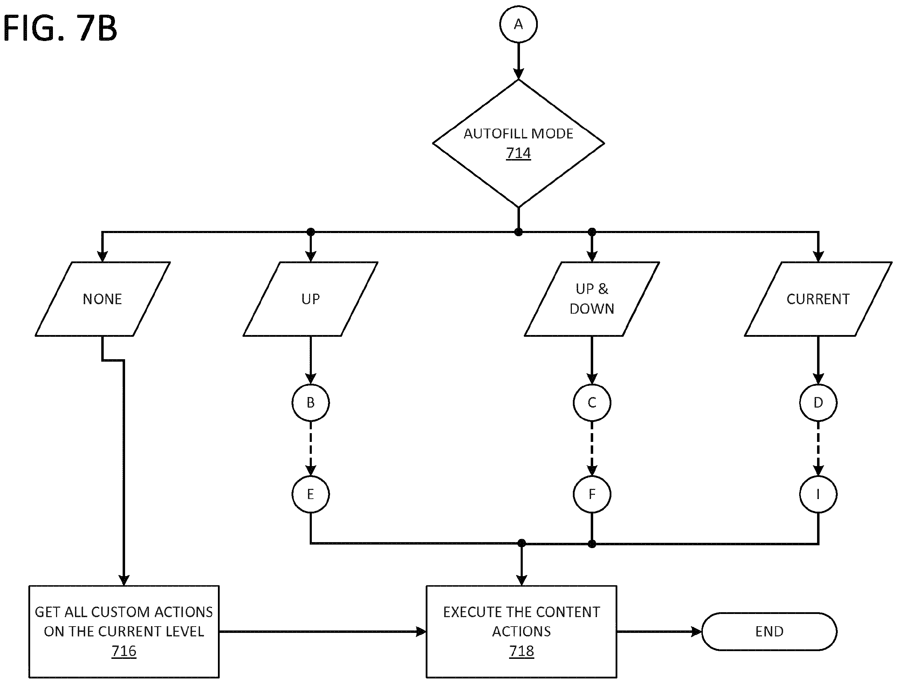

Referring to FIG. 7B, the auto-fill algorithm determines the auto-fill mode at step 714. When no auto-fill mode is selected, the auto-fill algorithm gets all custom actions on the current level (e.g., level of selected navigation item 302) at step 716 and executes the content actions at step 718 before ending. When the auto-fill mode is "up," "up and down," or "current" the auto-fill algorithm performs different processes that include common steps.

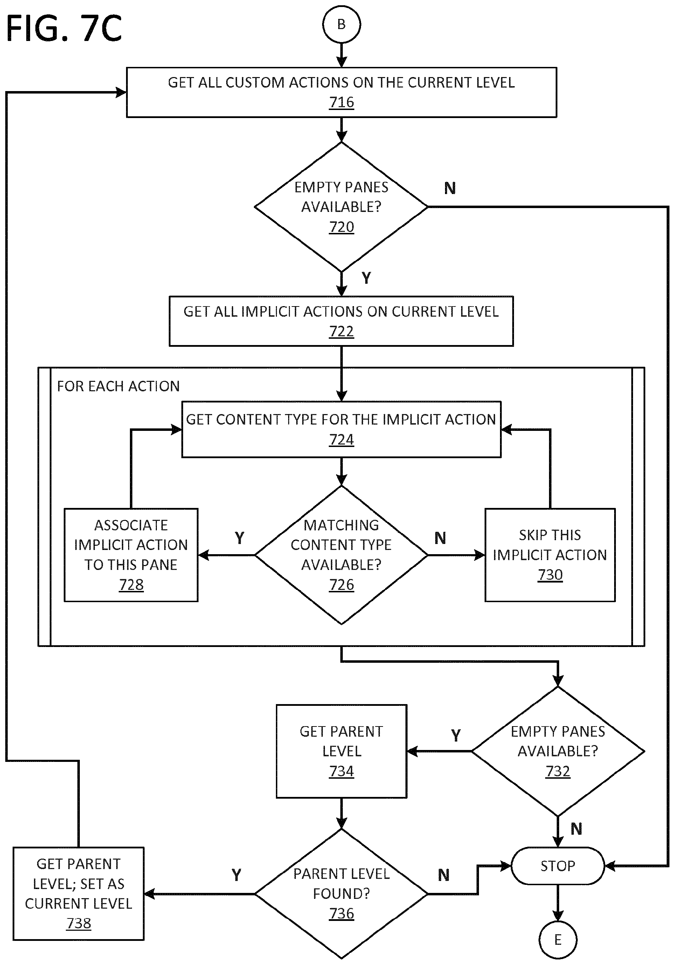

Referring to FIG. 7C, in which the auto-fill mode is "up," the algorithm gets all custom actions on the current level at step 716. At step 720, the algorithm determines whether any empty panes are available to fill with visual content. If no empty panes are available, the algorithm stops and executes the content actions at step 718 (FIG. 7B) before ending. When there are empty panes available, the algorithm gets all implicit actions on the current level at step 722. Then for each action, the algorithm performs a subprocess that includes steps 724, 726, 728, and 730. At step 724, the algorithm gets the content type for the current implicit action. The algorithm determines, at step 726, whether matching content type is available. When matching content type is available, the algorithm associates the implicit action to this pane at step 728. When matching content type is unavailable, the algorithm skips this implicit action as shown at step 730.

After completing the subprocess for each implicit action, the algorithm determines whether there are any empty panes available at step 732. When no panes are available, the algorithm stops and executes the content actions at step 718 before ending. When at least one empty pane is available, the algorithm attempts to get the parent level of the currently selected navigation item 302 at step 734. When the algorithm determines, at step 736, that no parent level can be found, the algorithm stops and executes the content actions at step 718 before ending. When a parent level is found the algorithm gets the parent level and sets it as the current level for which to process the actions at step 738 before continuing back to step 716.

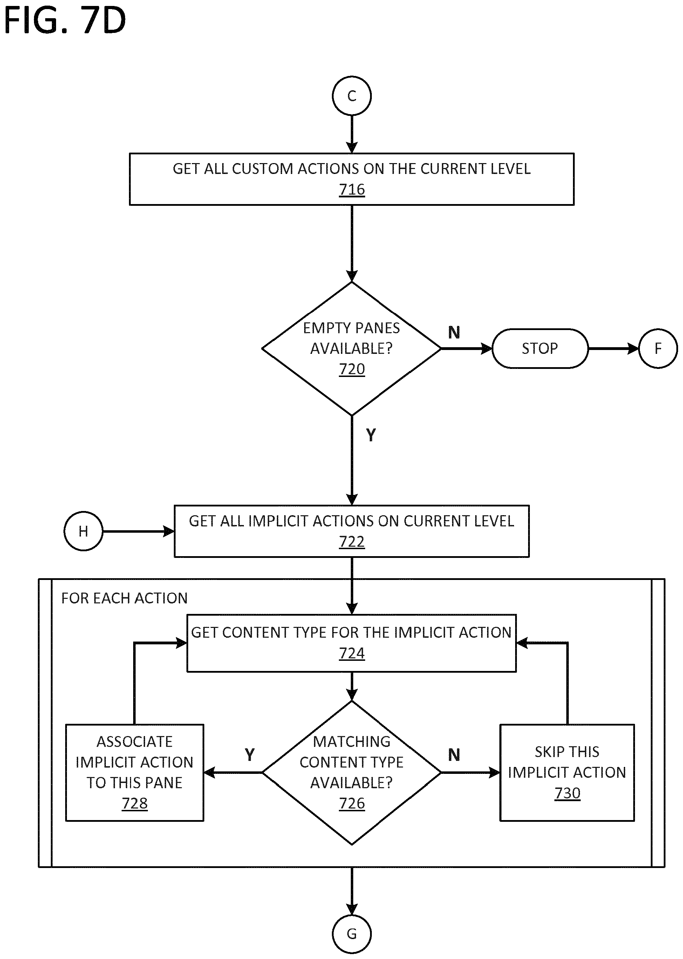

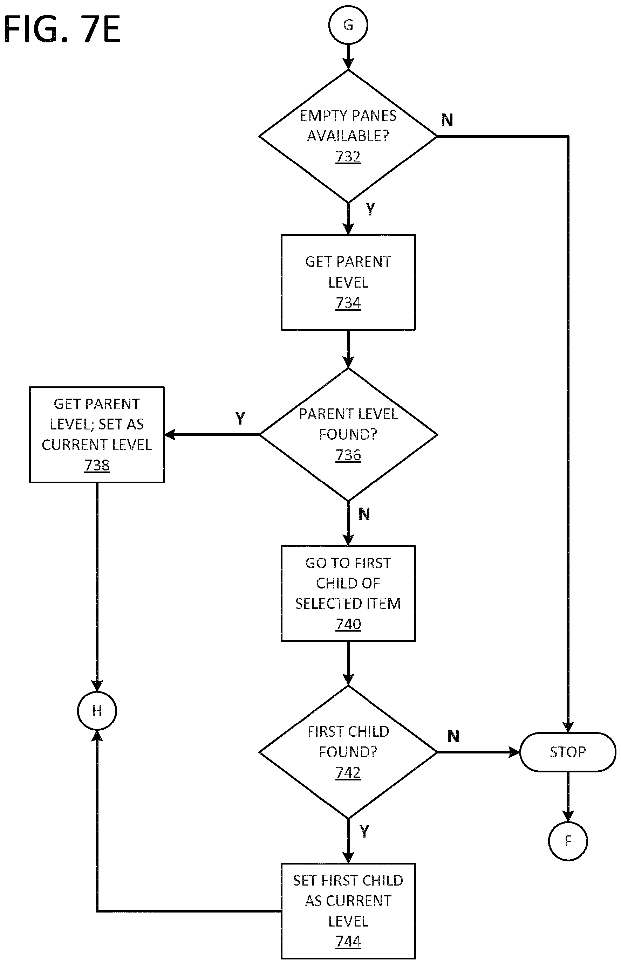

Referring to FIGS. 7D and 7E, in which the auto-fill mode is "up and down," the algorithm performs steps 716 and 720-736 as described above with respect to the "up" mode. But when the algorithm determines, at step 736, that a parent level is found the algorithm gets the parent level and sets it as the current level for which to process the actions at step 738 before continuing back to step 722. When no parent level can be found, the algorithm goes to the first child navigation item of the selected navigation item 302 within the navigation model 300 at step 740. When no first child navigation item is found at step 742, the algorithm stops and executes the content actions at step 718 before ending. When the first child navigation item is found at step 742, the algorithm sets the first child navigation item as the current level for which to process the actions at step 744 before continuing back to step 722.

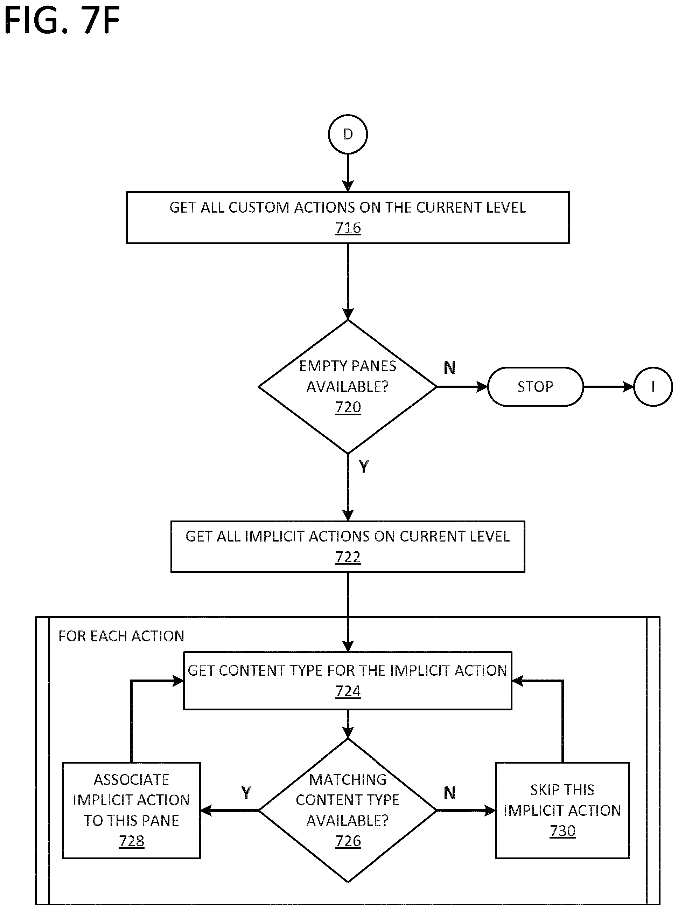

Referring to FIG. 7F, in which the auto-fill mode is "current," the algorithm performs steps 716 and 720-730 as described above with respect to the "up" mode.

As described herein, a ViewApp contains a navigation model that defines navigation of an HMI application. The navigation model defines navigation hierarchies, references to graphical components (e.g., visual content) within the hierarchy, and the actions (e.g., show visual content) to execute when a particular hierarchical item (e.g., navigation item) is selected by a user during design time and/or runtime. These behaviors are separated from the display of the navigation model, which allows the same navigation model to be displayed in multiple forms during runtime. When a user selects a navigation item (i.e., navigates) the computing device executing the processor-executable instructions automatically places associated graphical components (e.g., visual content) in appropriate locations (e.g., panes) on the screen based on the auto-fill algorithm. The autofill algorithm traverses the navigation model hierarchy to discover content with appropriate metadata (e.g., content type, etc.). Moreover, upon selection of a navigation item the computing device executing the processor-executable instructions sets context attributes that are utilized to update existing and newly added content.

In an exemplary embodiment, when a user selects a navigation item (e.g., asset) in the hierarchy of the navigation model the computing device executing the processor-executable instructions automatically places the content in each pane of a layout and updates the context so all of the panes in the layout display content representing data associated with the selected navigation item. For example, if a user selects a "Reactor West" navigation item the computing device executing the processor-executable instructions displays symbols and trends associated with "Reactor West" and an alarm display pane reacts to the context change and displays alarms from "Reactor West." In an embodiment in which the computing device includes multiple screens (e.g., multiple monitors) the computing device executing the processor-executable instructions automatically manages content placement across all screens.

In addition to the embodiment described above with respect to FIG. 2, embodiments of the present disclosure may comprise a special purpose computer including a variety of computer hardware, as described in greater detail below.

Embodiments within the scope of the present disclosure also include computer-readable media for carrying or having computer-executable instructions or data structures stored thereon. Such computer-readable media can be any available media that can be accessed by a special purpose computer. By way of example, and not limitation, computer-readable storage media include both volatile and nonvolatile, removable and non-removable media implemented in any method or technology for storage of information such as computer readable instructions, data structures, program modules or other data. Computer storage media are non-transitory and include, but are not limited to, random access memory (RAM), read only memory (ROM), electrically erasable programmable ROM (EEPROM), compact disk ROM (CD-ROM), digital versatile disks (DVD), or other optical disk storage, solid state drives (SSDs), magnetic cassettes, magnetic tape, magnetic disk storage, or other magnetic storage devices, or any other medium that can be used to carry or store desired program code means in the form of computer-executable instructions or data structures and that can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

The following discussion is intended to provide a brief, general description of a suitable computing environment in which aspects of the disclosure may be implemented. Although not required, aspects of the disclosure will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that aspects of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Aspects of the disclosure may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing aspects of the disclosure includes a special purpose computing device in the form of a conventional computer, including a processing unit, a system memory, and a system bus that couples various system components including the system memory to the processing unit. The system bus may be any of several types of bus structures including a memory bus or memory controller, a peripheral bus, and a local bus using any of a variety of bus architectures. The system memory includes nonvolatile and volatile memory types. A basic input/output system (BIOS), containing the basic routines that help transfer information between elements within the computer, such as during start-up, may be stored in ROM. Further, the computer may include any device (e.g., computer, laptop, tablet, PDA, cell phone, mobile phone, a smart television, and the like) that is capable of receiving or transmitting an IP address wirelessly to or from the internet.

The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The magnetic hard disk drive, magnetic disk drive, and optical disk drive are connected to the system bus by a hard disk drive interface, a magnetic disk drive-interface, and an optical drive interface, respectively. The drives and their associated computer-readable media provide nonvolatile storage of computer-executable instructions, data structures, program modules, and other data for the computer. Although the exemplary environment described herein employs a magnetic hard disk, a removable magnetic disk, and a removable optical disk, other types of computer readable media for storing data can be used, including magnetic cassettes, flash memory cards, digital video disks, Bernoulli cartridges, RAMs, ROMs, SSDs, and the like.

Communication media typically embody computer readable instructions, data structures, program modules or other data in a modulated data signal such as a carrier wave or other transport mechanism and includes any information delivery media.

One or more aspects of the disclosure may be embodied in computer-executable instructions (i.e., software), routines, or functions stored in system memory or nonvolatile memory as application programs, program modules, and/or program data. The software may alternatively be stored remotely, such as on a remote computer with remote application programs. Generally, program modules include routines, programs, objects, components, data structures, etc. that perform particular tasks or implement particular abstract data types when executed by a processor in a computer or other device. The computer executable instructions may be stored on one or more tangible, non-transitory computer readable media (e.g., hard disk, optical disk, removable storage media, solid state memory, RAM, etc.) and executed by one or more processors or other devices. As will be appreciated by one of skill in the art, the functionality of the program modules may be combined or distributed as desired in various embodiments. In addition, the functionality may be embodied in whole or in part in firmware or hardware equivalents such as integrated circuits, application specific integrated circuits, field programmable gate arrays (FPGA), and the like.

The computer may operate in a networked environment using logical connections to one or more remote computers. The remote computers may each be another personal computer, a tablet, a PDA, a server, a router, a network PC, a peer device, or other common network node, and typically include many or all of the elements described above relative to the computer. The logical connections include a local area network (LAN) and a wide area network (WAN) that are presented here by way of example and not limitation. Such networking environments are commonplace in office-wide or enterprisewide computer networks, intranets and the Internet.

When used in a LAN networking environment, the computer is connected to the local network through a network interface or adapter. When used in a WAN networking environment, the computer may include a modem, a wireless link, or other means for establishing communications over the wide area network, such as the Internet. The modem, which may be internal or external, is connected to the system bus via the serial port interface. In a networked environment, program modules depicted relative to the computer, or portions thereof, may be stored in the remote memory storage device. It will be appreciated that the network connections shown are exemplary and other means of establishing communications over wide area network may be used.

Preferably, computer-executable instructions are stored in a memory, such as the hard disk drive, and executed by the computer. Advantageously, the computer processor has the capability to perform all operations (e.g., execute computer-executable instructions) in real-time.

The order of execution or performance of the operations in embodiments illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of aspects of the disclosure.

Embodiments may be implemented with computer-executable instructions. The computer-executable instructions may be organized into one or more computer-executable components or modules. Aspects of the disclosure may be implemented with any number and organization of such components or modules. For example, aspects of the disclosure are not limited to the specific computer-executable instructions or the specific components or modules illustrated in the figures and described herein. Other embodiments may include different computer-executable instructions or components having more or less functionality than illustrated and described herein.

When introducing elements of aspects of the disclosure or the embodiments thereof, the articles "a", "an", "the" and "said" are intended to mean that there are one or more of the elements. The terms "comprising", "including", and "having" are intended to be inclusive and mean that there may be additional elements other than the listed elements.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

Accordingly the invention also relates to an automated configuration of graphical user interface screens of industrial software applications. An application executing on a computing device utilizes a navigation model representing hierarchies of navigation items to automate placement of graphical components in appropriate locations on the graphical user interface.

Traditionally Human Machine Interface (HMI) applications are complex to build and require a great deal of customization and scripting (code) to support navigation (within the HMI), layout of visual components, and management of multiple monitors. The technology disclosed herein significantly reduces the effort to build HMI applications by enabling features such as, but not limited to:
1. Automatic navigation (e.g., based on an asset hierarchy or other custom hierarchy).
2. Placement of visual elements within a pre-defined layout format based on the navigation model, meta data information defined on the visual elements, and/or the like.
3. Automatic management of screens.

The disclosed technology thereby creates a data-driven HMI application experience.

Other aspects of the disclosed technology include:
- Automatic User Interface (HMI application) Navigation based on defined hierarchies.
- Automatic Placement of content based on select navigation and defined rules and layout.
- User Navigation sets context which updates content based on user selection.
- Automatic screen management in a multi-screen or monitor configurations.

The disclosed technology enables a user to leverage an existing Asset model, an existing Visual Toolbox folder structure (GTB or Graphical Tool Box) or build a custom hierarchy of behaviors to use at runtime. These behaviors can enable the runtime user to perform a variety of actions to show content, browse information, and/or the like.

To provide natural and automated HMI configuration, a Navigation Model holds information about the Navigation Hierarchy. A Navigation Editor integrated with the ViewApp editor or Layout Editor allows the config time user to create a Navigation Model which drives the composition of the view. At runtime, navigation-aware controls visually represent the information present in the Navigation Model based on a content placement algorithm (e.g., autofill pane algorithm) to automatically compose the view.

In some embodiments, a ViewApp includes a Navigation Model that defines the navigation of the application. The Navigation Model defines the Navigation Hierarchies, references to visual content within the hierarchy and the actions (such as show visual content) to execute when the hierarchical item is selected. These behaviors are separated from the visual presentation of the Navigation Model data to the user. This enables the same Navigation Model to be visually expressed in multiple forms at runtime. Various aspects of the Navigation Model are described in detail in Appendix I.

When a user navigates (e.g., by selecting a navigation item), the disclosed technology automatically places the associated content in appropriate locations (e.g., panes) based on an algorithm which traverses the Navigation Model hierarchy to discover content with appropriate meta data (e.g., content type). Details of the algorithm can be found in Appendices I and II.

In some embodiments, on selection of a navigation item, the disclosed technology can also set context attributes that are utilized to update existing and newly added content. For example, when a user selects an asset in the hierarchy, the disclosed technology can automatically place the content in each pane of a layout and update the context so all of the content shows data associated with the selected item. If a user selects the asset "Reactor West," the disclosed technology can display symbols and trends associated with "Reactor West" and the alarm display can react to the context change and show alarms from "reactor west."

In some embodiments, in a multiple monitor (screen) configuration, the disclosed technology manages content placement across all screens automatically. Further details on this and other aspects are disclosed in Appendix I.

Various other aspects of the disclosed technology are described in detail in Appendix III and IV.

It should be noted that the disclosed technology and any one or more of the methodologies discussed herein, including Appendices I-IV may be implemented on a machine, in the example form of a computer system.

The computer system includes a processor, main memory, non-volatile memory, and an interface device. Various common components (e.g., cache memory) are omitted for illustrative simplicity. The computer system is intended to illustrate a hardware device on which any of the components described in this specification can be implemented. The computer system can be of any applicable known or convenient type. The components of the computer system can be coupled together via a bus or through some other known or convenient device.

The processor may be, for example, a conventional microprocessor such as an Intel Pentium microprocessor or Motorola power PC microprocessor. One of skill in the relevant art will recognize that the terms "machine-readable (storage) medium" or "computer-readable (storage) medium" include any type of device that is accessible by the processor.

The memory is coupled to the processor by, for example, a bus. The memory can include, by way of example but not limitation, random access memory (RAM), such as dynamic RAM (DRAM) and static RAM (SRAM). The memory can be local, remote, or distributed.

The bus also couples the processor to the non-volatile memory and drive unit. The non-volatile memory is often a magnetic floppy or hard disk, a magnetic-optical disk, an optical disk, a read-only memory (ROM), such as a CD-ROM, EPROM, or EEPROM, a magnetic or optical card, or another form of storage for large amounts of data. Some of this data is often written, by a direct memory access process, into memory during execution of software in the computer system. The non-volatile storage can be local, remote, or distributed. The non-volatile memory is optional because systems can be created with all applicable data available in memory. A typical computer system will usually include at least a processor, memory, and a device (e.g., a bus) coupling the memory to the processor.

Software is typically stored in the non-volatile memory and/or the drive unit. Indeed, for large programs, it may not even be possible to store the entire program in the memory. Nevertheless, it should be understood that for software to run, if necessary, it is moved to a computer readable location appropriate for processing, and for illustrative purposes, that location is referred to as the memory in this paper. Even when software is moved to the memory for execution, the processor will typically make use of hardware registers to store values associated with the software, and local cache. Ideally, this serves to speed up execution. As used herein, a software program is assumed to be stored at any known or convenient location (from non-volatile storage to hardware registers) when the software program is referred to as "implemented in a computer-readable medium." A processor is considered to be "configured to execute a program" when at least one value associated with the program is stored in a register readable by the processor.

The bus also couples the processor to the network interface device. The interface can include one or more of a modem or network interface. It will be appreciated that a modem or network interface can be considered to be part of the computer system. The interface can include an analog modem, isdn modem, cable modem, token ring interface, satellite transmission interface (e.g., "direct PC"), or other interfaces for coupling a computer system to other computer systems. The interface can include one or more input and/or output devices. The I/O devices can include, by way of example but not limitation, a keyboard, a mouse or other pointing device, disk drives, printers, a scanner, and other input and/or output devices, including a display device. The display device can include, by way of example but not limitation, a cathode ray tube (CRT), liquid crystal display (LCD), or some other applicable known or convenient display device. For simplicity, it is assumed that controllers of any devices may reside in the interface.

In operation, the computer system can be controlled by operating system software that includes a file management system, such as a disk operating system. One example of operating system software with associated file management system software is the family of operating systems known as Windows^{®} from Microsoft Corporation of Redmond, Washington, and their associated file management systems. Another example of operating system software with its associated file management system software is the Linux operating system and its associated file management system. The file management system is typically stored in the non-volatile memory and/or drive unit and causes the processor to execute the various acts required by the operating system to input and output data and to store data in the memory, including storing files on the non-volatile memory and/or drive unit.

Some portions of the detailed description may be presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device that manipulates and transforms data represented as physical (electronic) quantities within the computer system's registers and memories into other data similarly represented as physical quantities within the computer system memories or registers or other such information storage, transmission, or display devices.

The algorithms and displays presented herein are not inherently related to any particular computer or other apparatus. Various general purpose systems may be used with programs in accordance with the teachings herein, or it may prove convenient to construct more specialized apparatus to perform the methods of some embodiments. The required structure for a variety of these systems will appear from the description below. In addition, the techniques are not described with reference to any particular programming language, and various embodiments may thus be implemented using a variety of programming languages.

In alternative embodiments, the machine operates as a standalone device or may be connected (e.g., networked) to other machines. In a networked deployment, the machine may operate in the capacity of a server or a client machine in a client-server network environment, or as a peer machine in a peer-to-peer (or distributed) network environment.

The machine may be a server computer, a client computer, a personal computer (PC), a tablet PC, a laptop computer, a set-top box (STB), a personal digital assistant (PDA), a cellular telephone, an iPhone, a Blackberry, a processor, a telephone, a web appliance, a network router, switch or bridge, or any machine capable of executing a set of instructions (sequential or otherwise) that specify actions to be taken by that machine.

While the machine-readable medium or machine-readable storage medium is shown in an exemplary embodiment to be a single medium, the term "machine-readable medium" and "machine-readable storage medium" should be taken to include a single medium or multiple media (e.g., a centralized or distributed database, and/or associated caches and servers) that store the one or more sets of instructions. The term "machine-readable medium" and "machine-readable storage medium" shall also be taken to include any medium that is capable of storing, encoding or carrying a set of instructions for execution by the machine and that cause the machine to perform any one or more of the methodologies of the presently disclosed technique and innovation.

In general, the routines executed to implement the embodiments of the disclosure, may be implemented as part of an operating system or a specific application, component, program, object, module, or sequence of instructions referred to as "computer programs." The computer programs typically comprise one or more instructions set at various times in various memory and storage devices in a computer, and that, when read and executed by one or more processing units or processors in a computer, cause the computer to perform operations to execute elements involving the various aspects of the disclosure.

Moreover, while embodiments have been described in the context of fully functioning computers and computer systems, those skilled in the art will appreciate that the various embodiments are capable of being distributed as a program product in a variety of forms, and that the disclosure applies equally regardless of the particular type of machine or computer-readable media used to actually effect the distribution.

Further examples of machine-readable storage media, machine-readable media, or computer-readable (storage) media include but are not limited to recordable type media such as volatile and non-volatile memory devices, floppy and other removable disks, hard disk drives, optical disks (e.g., Compact Disk Read-Only Memory (CD ROMS), Digital Versatile Disks, (DVDs), etc.), among others, and transmission type media such as digital and analog communication links.

Unless the context clearly requires otherwise, throughout the description, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof, means any connection or coupling, either direct or indirect, between two or more elements; the coupling of connection between the elements can be physical, logical, or a combination thereof. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above detailed description of embodiments of the disclosure is not intended to be exhaustive or to limit the teachings to the precise form disclosed above. While specific embodiments of, and examples for, the disclosure are described above for illustrative purposes, various equivalent modifications are possible within the scope of the disclosure, as those skilled in the relevant art will recognize. For example, while processes or blocks are presented in a given order, alternative embodiments may perform routines having steps, or employ systems having blocks in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, or may be performed at different times. Further any specific numbers noted herein are only examples: alternative implementations may employ differing values or ranges.

The teachings of the disclosure provided herein can be applied to other systems, not necessarily the system described above. The elements and acts of the various embodiments described above can be combined to provide further embodiments.

Aspects of the disclosure can be modified, if necessary, to employ the systems, functions, and concepts of the various references described above to provide yet further embodiments of the disclosure.

These and other changes can be made to the disclosure in light of the above Detailed Description. While the above description describes certain embodiments of the disclosure, and describes the best mode contemplated, no matter how detailed the above appears in text, the teachings can be practiced in many ways. Details of the system may vary considerably in its implementation details, while still being encompassed by the subject matter disclosed herein. As noted above, particular terminology used when describing certain features or aspects of the disclosure should not be taken to imply that the terminology is being redefined herein to be restricted to any specific characteristics, features, or aspects of the disclosure with which that terminology is associated. In general, the terms used in the following claims should not be construed to limit the disclosure to the specific embodiments disclosed in the specification, unless the above Detailed Description section explicitly defines such terms. Accordingly, the actual scope of the disclosure encompasses not only the disclosed embodiments, but also all equivalent ways of practicing or implementing the disclosure under the claims.

### Appendix I : Navigation

### 1 Overview

Navigation in a Project enables a user to leverage the existing Asset model, existing Visual Toolbox folder structure (GTB) or build a custom hierarchy of behaviors to use at runtime. These behaviors allow the runtime user to perform a variety of actions to, for example, show content, browse information, etc.

One example use case in Navigation is when a runtime user wants to have a visible control, such as a tree control, showing the asset model. Selecting on an item in the tree would show the graphic or content associated to that tree item.

Some aspects of Navigation include:
1. A Navigation Model which holds information about the Navigation Hierarchy.
2. A Navigation Editor integrated with the ViewApp editor or Layout Editor which allows the config time user to create a Navigation Model which drives the composition of the view. Composition of the view can include both what and where content is to be shown.
3. The runtime behavior wherein Navigation aware controls visually represent the information present in the Navigation Model.

Navigation can be considered a user facing feature for building a ViewApp and editing a Layout. Navigation is also the glue which holds the design time experience together with primary application navigation and individual activities sharing hierarchy information across hierarchy aware controls. By creating the features for Navigation, the disclosed technology enables building of the design time experience along with giving the ViewApp builder the exact same behaviors to create compelling runtime applications.

### 2 Terminology

As used herein, a Navigation Model is a hierarchy built by a user either from scratch or using the Asset Model as input. This hierarchy can hold Navigation Items for use in runtime primary consumed by Hierarchy Controls. This model can also be fed from an I Browse source rather than a user build Model.

As used herein, a Navigation Item is an individual navigation item which contains properties for visual representation and actions to execute when selected by a user. A navigation item may or may not have a context to the asset model.

As used herein, a Hierarchy Aware Control is a control configured in design time and utilized in runtime which knows how to react to a hierarchy and displays the requested hierarchy information. Examples of a Hierarchy Control include a Tree control, Menu control, Tile List, Tab control, and/or the like.

As used herein, a Navigation Editor is an editor that allows a user to build a Navigation Model.

As used herein, Content Type is a defined value in a project which acts as a tag to define the nature and usage of a particular piece of visual content in the project, typically on an Asset.

### 3 Project Content Types

### 3.1 Content Types

A project can have various content types. Content types in the project tag Project content for specific purposes. Typical content types a user may create or the project may provide include types such as "Faceplate" or "Overview." The user can later control where these types of content are shown in runtime. In some embodiments, Navigation provides a set of well-known content types which the user may not be able to delete or modify from the project. The user can tag content on assets with these well-known content types so they are automatically utilized when the asset model is utilized in a Navigation Model.

In some embodiments, all content in the project support the ability to be tagged using multiple content types. For instance, a graphic can be tagged as "Overview" and also "Live Tile."

### 3.1.1 Navigation Live I con

The Live Icon includes controls utilizing icons in a 16x16 or 32x32 size form factor. The control using the Live Icon can decide its final size based on how the user configured the Hierarchy aware control. The Live Icon is a piece of content shown 'live' in runtime, such as a graphic.

### 3.1.2 Navigation Live Tile

The Live Tile is suitable for a larger form factor and can convey additional information compared to a Live Icon. The Live Tile may be square in size so it can accommodate a larger array of navigation controls. The control using the Live Tile can decide its final size based on how the user configured the Hierarchy aware control. The Live Tile is a piece of content shown 'live' in runtime, such as a graphic.

### 3.1.3 Navigation Live Context Menu

The Live Context Menu can convey a piece of content which is shown when a Navigation Aware control presents a context menu to a user. The context menu can either be a live graphic or another Navigation Model. If the content type is a Navigation Model, a traditional right click menu can be presented to the user using the Navigation Model. If the content type is a graphic, the live graphic can be shown in the UI experience of a context menu. The Live Context Menu is a piece of content shown 'live' in runtime, such as a graphic.

### 3.1.4 Live ToolTip

The Live ToolTip is suitable for conveying a piece of content which is shown when a Navigation Aware control presents a tooltip to the user. This content can be any size/shape and may be shown as a 'popup' type window for a brief period of time like a traditional application ToolTip. The user can elect to show a text string or a piece of content for the tooltip.

### 3.2 Usage of Content Types in Object Wizards

Object Wizards delivered with the project can create visual/associated content which is tagged against the well-known content types so the user has appropriate graphics to use for Navigation. This gives the user effortless assembly of a compelling runtime application.

### 4 Navigation Model

### 4.1 Introduction

A Navigation Model in a ViewApp or Layout defines the Navigation for that item. The user has a single Navigation Model in the ViewApp or Layout which can be customized to suit their needs. The Navigation Model can have multiple root nodes which serve as different configurations in a single Navigation Model.

The Navigation Model defines the Navigation Hierarchies, references to visual content utilized by Navigation Aware controls, and the actions to execute when selected. These behaviors are separated from the actual control which will present the Navigation Model data to the user. This allows the same Navigation Model to be visually expressed in multiple ways in runtime. The power of this multiple expression behavior becomes more apparent when multiple Hierarchy aware controls are used together to represent a single Navigation Model to the user.

### 4.2 Properties of a Navigation Model

The Navigation Model is a hierarchy of Navigation Items. Each Navigation Item holds a configuration which allows the Navigation Item to express itself visually in several ways, ranging from simple text to complex visual content representations. The Navigation item also holds properties to toggle visibility, checked state, and others. The last major part of a Navigation item is its ability to hold one or more actions to execute when selected by a user.

### 4.3 Lifetime of a Navigation Model in the Project

In some embodiments, a Navigation Model is not an individual item in the project. It is part of the following objects in the project:
1. Layout - One NavigationModel Serialized with Layout
2. ViewApp - One NavigationModel Serialized with ViewApp

In some embodiments, a control placed in a pane can ask if it's 'one and only one' NavigationModel where it should bind to. A single NavigationModel can have multiple root nodes in the model, so the user could pick one in some cases. In other cases, the Navigation aware control can auto-bind to the first entry in the NavigationModel. The user could change it to a different root node if they wanted via a drop-list type experience, for example.

### 4.4 Import/ Export Considerations

As the Navigation Model is serialized with the Layout or ViewApp data, it travels with the import/export of the Layout or ViewApp object directly.

### 4.5 Behavior in Runtime

In runtime all the published Navigation Models from various Layouts and the single ViewApp can reside with the published application.

Navigation Aware controls request specific Navigation Items based on URI strings which are indexes into particular Navigation Model hierarchies. The runtime module executes requests from the Navigation Aware controls to return results based on the request.

In some embodiments, Navigation Aware controls may not be aware of which specific Navigation Models they are using, but rely on the URI string which identifies the link into a particular navigation model's hierarchy. In runtime a Navigation Model URI string may be injected into the "NavigationModel" property of the control and the control reacts accordingly based on the control's configuration. Examples of URI usage are further discussed in the Runtime Behaviors section.

### 5 Navigation Item

### 5.1 Introduction

An individual navigation item in a Navigation Model includes the necessary information to show a visual representation of an item in various forms, and one or more actions which should be executed when the user has triggered the Navigation item. In some embodiments, a Navigation item can be thought of as "all inclusive" or at least the ability to be all inclusive regardless of which type Hierarchy aware control is being used to represent the Navigation Item. In some embodiments, a Navigation item does not need to support all visual representations possible.

Navigation Items can be organized by the user in a single flat list or a hierarchy. There is no difference between a Navigation Item which is a leaf node vs. a Navigation item which includes child Navigation items. This implies that Navigation Items which comprises other Navigation items can also trigger actions when clicked and are not simply 'containers' for Navigation items.

There are three special types of Navigation items:
1. Navigation Items which have a context to the asset model.
   a. If the Navigation Item has a context to the asset model, the user can override default values taken from the asset model to tailor them for usage in the Navigation Model. For instance, instead of seeing "WSTINTANK_004" the user might override this name with "West InTake Tank 4".
2. Navigation Items which have a context into the Visual Toolbox (GTB).
3. Navigation Items which are query related and evaluated in runtime.
   a. Example: A Content MRU Query which returns the last number of items viewed by the user.
   b. Example: A query to return all specific content types for assets in alarm.

### 5.2 Common Navigation Item Behaviors/ Properties

### 5.2.1 Behavior

### 5.2.1.1 Auto-Fill Panes Mode

Each Navigation item can control whether available panes on the currently displayed layouts should be auto-filled or not. Auto-Filling has three options to control how content is automatically injected into panes without the user having to individually configure the view.

Prior to any auto-fill mode being executed, all screens are considered empty without a layout assigned.

### 5.2.1.1.1 Manual Mode

In this mode, no content is automatically shown unless specific commands have been created to show content. This means the user would have to pick all layouts for all screens, and manually assign the content to specific panes. Any commands in parent Navigation nodes or child Navigation nodes are not considered to be used to fill in screens or panes.

In some embodiments, the system can be mostly "Auto-Magical" meaning the user can include an asset hierarchy and very little or no customization is necessary to get a basic functioning ViewApp, or Fully Manual. A more advanced user might decide to build their own navigation hierarchy and control every detail of what is displayed where using explicit commands without using auto-filling. The user can mix and match these two modes where they choose.

### 5.2.1.1.2 Fill from Current Mode

In this mode, the user would still need to assign Layouts to screens, but any content on the node would automatically be filled into the available panes using the best available Pane algorithm.

Situations where content is *residing* on a Navigation Item are when the user included a hierarchy from their asset model or included a hierarchy from the Visual Standards (i.e., Graphic Tool Box or GTB).

### 5.2.1.1.3 Fill from Current and Look Up

In this mode, the auto-fill algorithm looks for Layouts or ShowScreen content commands that initially fill the screens prior to determining which content should be shown in particular panes. The current Navigation Item is inspected for any commands which place Layouts or Contents full screen. For any screens which are still empty, the auto-fill algorithm looks up to the parent for additional ShowLayout or ShowScreen commands to apply to the empty screens.

Once the contents have been established on Screens, any content residing on the current Navigation Item is shown to the screen using the best available Pane algorithm for each individual piece of content. For any Panes which are still empty, the auto-fill pane algorithm looks up to the parent for additional commands/content which apply to the empty panes. This process continues until all Panes are filled or the root of the Navigation hierarchy is reached. If the auto-fill pane algorithm intends to replace a Pane's content with exactly the same content it already has, that command is skipped so the existing content is not disturbed. It's possible some panes may not be filled and they should be made empty.

### 5.2.1.1.4 Fill from Current and Look Up then Down

In some embodiments, this mode can be the default mode. This mode is identical to the "Fill from Current and Look Up" with one addition. If the auto-fill pane algorithm has reached the root of the Navigation Hierarchy and there are still empty screens/panes, the first child of the current Navigation item is inspected to see if it has content which applies to the available screens/panes. This process continues down the tree using the first child at each level until a leaf node is hit, then the auto-fill algorithm stops.

In some embodiments, this algorithm addresses the Portfolio request for swiping inside L1, L2, and L3 displays. Wherein if a swipe from L1.1 to L1.2 is made, the L2 and L3 displays are updated automatically as a new parent (L1.2) is now visible.

In some embodiments, another mode - Fill from Current and Look Down may be supported. In this mode, the current Navigation Item is inspected for any commands which place Layouts or Contents full screen. For any screens which are still empty, the auto-fill algorithm looks down to the child level hierarchies for additional ShowLayout or ShowScreen commands to apply to the empty screens.

By way of example, a consider a vanilla configuration in the ViewApp.

ViewApp1 (Root) has Layout1 (startup)

Site (contains overview graphic)

Plant (contains faceplate)

When the ViewApp is run, Autofill for the ViewApp1 (root item) will run and would result into showing Layout1. Autofill can then walk up/down the hierarchy and show the contents on to the Layout1. In this case overview graphic and plant may be shown onto Layout1.

### 5.2.2 User Experience

### 5.2.2.1 Inherited Auto-Fill Options

In some embodiments, initially included root of the navigation hierarchy may be defaulted to "Look up then Down" mode. Any children created or attached under that node would defer to the parent navigation item where it was last set by the user. In other words, unless the user manually changes the auto-fill mode on a navigation item, a parent controls the actual value of the children. The user can modify a child navigation auto-fill mode and it then applies to itself and all the children of that node where the value wasn't explicitly set. The user would see an "Inherited < mode name>" for the value of the auto-fill mode where it's not specifically set at that level in the navigation.

### 5.2.2.2 Nested Layout Support

When content is filled into a pane, one of those types of content could be another Layout with or without predefined content. This situation is called a nested layout. The Panes in a nested layout should not be considered for auto-fill behavior as in this situation the layout is a "black box" and presumably has its own functionality.

### 5.2.2.3 Auto-Filling a pane which allows multiple content

A Pane which allows multiple pieces of content can be auto-filled in two ways based on the type of the action:
▪ Explicit Actions: These actions place a content on a specific screen with a specific Pane. For a Pane which allows multiple pieces of content, there can be multiple explicit actions in a single Navigation Item to populate that Pane.
▪ Implicit Actions: These actions look for an available Pane based on the content's supported Pane types. A Pane which supports multiple contents can be the destination of multiple implicit action calls while executing the auto-fill algorithm. For instance, if a Pane was configured to host multiple contents and tagged to host overview type pieces of content, and there was a hierarchy of L1, L2, and L3 navigation nodes with each node having an overview type content, then the overview pane would show 3 pieces of content.

As a single pane could be filled with content from different levels in the Navigation Hierarchy, a few rules may apply to the presentation:
▪ The Left to Right order of the contents may be from the highest node in the navigation hierarchy to the lowest.
▪ After the Navigation has populated all the screens and panes, the item shown to the user (i.e., an initial tab selected in the multi content pane) may be the first content which is specific to the selected Navigation Item.
   ∘ For instance, using the same example above with L1, L2, and L3 each having an overview display. If the user selected on L2 the Pane tab header and selected item would look: [ L1 **L2** L3]

### 5.2.2.4 Auto-Filling a pane which has pre-defined content

A Layout may have predefined content when utilized in the ViewApp Editor. This is achieved by the user editing the layout and placing content into a Pane. When a layout with predefined content is utilized in the ViewApp editor on a screen, that content is not replaced by the auto-fill algorithm. The user can create an explicit action to replace the content if they wish.

### 5.2.2.5 Closing Layouts on screens which are no longer valid

Once the auto-fill algorithm has determined which Layouts belong on which screens, it's possible there is no layout scheduled to be shown on a particular screen. The auto-fill algorithm can determine if there are any ShowScreen commands which are attempting to show a piece of content at full screen. If there is no Layout to be shown on a screen, and no full-screen content to be shown, any window on the empty screen may be closed.

### 5.2.2.6 Flicker Reduction

Reducing flicker in the design time and runtime experience ensures the user sees a smooth user experience when transitioning from one visual state to another (i.e., moving from one Navigationltem to another). This means the minimal amount of content is changed, and existing content is re-used when possible.

### 5.2.2.6.1 Re-use of existing Layout on a screen

If the auto-fill algorithm has determined that the same Layout will be shown on the same screen, the Layout should not be throw away and re-created. If a different layout will be shown on a screen, then the layout can be disposed.

### 5.2.2.6.2Re-use of existing GRM content

If a GRM graphic is to be shown in a Pane and that Pane already contains the same graphic, the graphic should be re-used. With L1, L2, and L3 type displays, they are often the identical graphic from a template and graphic re-use will allow the navigation transition to happen quickly without disposing and creating identical graphics.

### 5.2.2.6.3Re-use of ACF/ Control content

Control content should be reused and overrides to control properties re-injected whenever necessary based on whatever new control value overrides are stored with the ShowContent action.

### 5.2.3 Visual Representation

All Navigation Items have a well-defined list of visual representations. Some of these visual representations identically match the content types in the Project so if a Navigation Item has a context to an item in the asset model, the content on the asset can be matched for use in the visual representation of the Navigation item in runtime. These content types can include, by way of example: Live Icon, Live Tile, Live Context Menu, and Live Tooltip described above.

### 5.2.3.1 Textual Representation / Friendly Name

The textual representation of an item can be a string the user may see in runtime. This field can be a static string or an expression. Allowing an expression allows the user to format runtime data into the string to represent at least some of the KPI data as necessary.

For Navigation Items which have a context into the asset model, the textual representation by default is the name of the asset. The user can choose to override the name of the asset with a static string or expression.

### 5.2.3.2 Secondary Text

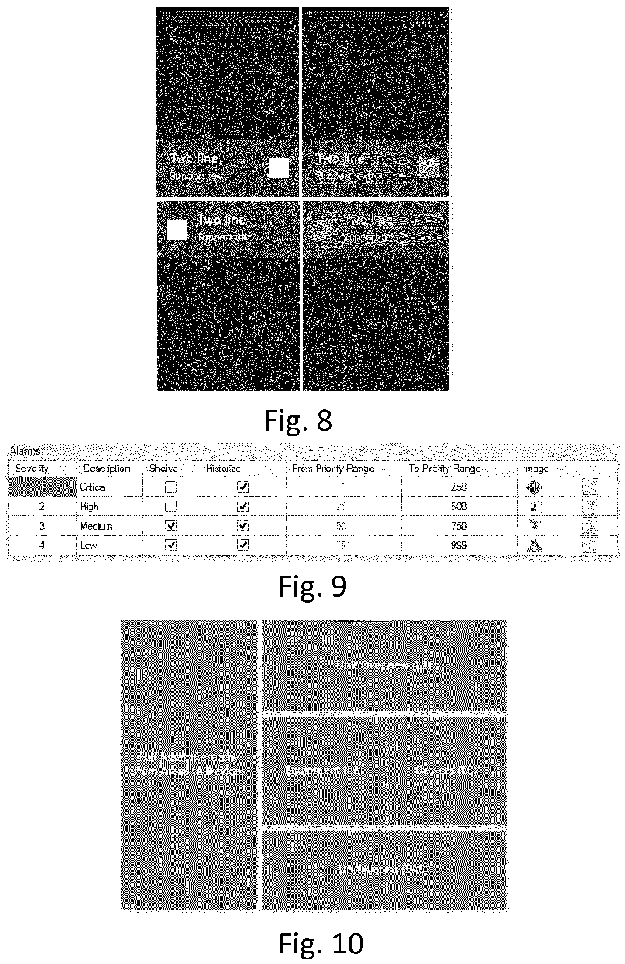

The secondary text is an additional line item which may or may not be supported by particular navigation controls. This field can be a static string or an expression. Allowing an expression allows the user to format runtime data into the string to represent at least some of the KPI data as necessary. An example of how the Grid navigation control might use the secondary text is shown in Fig. 8 (noted as "Support text" in example).

In this example the Grid navigation control might also utilize the static or dynamic icon for the white square, and the grid tile representation for the bulk of the space.

### 5.2.3.3 Progress Percent

In some embodiments, the user can configure a constant, reference, or expression which is meant to be used as a progress indicator in a navigation aware control. The value should fall between 0-100. If the user elects to show a progress indicator in the control, the current progress will be rendered as one of the indicators on the item.

### 5.2.3.4 tatic I con

The user can configure a static icon for the navigation item. The user will have the ability to pick from a well-known/predefined list of icons for the representation. The user cannot import their own icons. The icons can be delivered via a vector scalable technology and not bitmaps in some embodiments. This allows resolution independent renderings of the icons as opposed to fixed size icons like 16x16 or 32x32. Hierarchy aware controls which utilize the icons can decide which size they will support.

### 5.2.3.5 Live I con

The Live Icon is a piece of content in the system which represents the icon in tree and list type navigation controls. It is meant to be a small piece of content, most likely a graphic which shows live runtime values. The typical size of a live icon might be 16x16 or 32x32, although ultimately the Hierarchy Control consuming the life icon determines the size based on other visual factors. The user can configure the Live Icon value to a piece of content in the Project.

### 5.2.3.6 Alarm I con

The Alarm Icon is one of four icons configured at the Project level. These icons correspond to the four alarm severities. A Navigationltem which does not have context to the asset hierarchy does not inherently know how to retrieve alarm priorities, but does support propagation of child alarm severities upward to its parent.

To describe how this might be used, imagine a user builds a Navigation Model and separately includes Line1, Line2, and Line3 from the asset model into a Navigationltem parent named "Production Lines". "Production Lines" itself does not exist in the asset model, it is just the container holding asset model references to the three Lines. If an alarm is triggered in one of the three lines that alarm should propagate into the "Production Lines" Navigationltem so it shows in whatever control is presenting the "Production Lines" Navigationltem.

For reference the project level configuration in the Flagship IDE may look like Fig. 9.

### 5.2.3.7 Live Tile

The Live Tile is a larger visual representation of the same item which might include additional visual aspects of the navigation item, or addition KPI values based on user need. It is typically a piece of content, most likely a graphic which shows live runtime values. The user can configure the Live Tile value to a piece of content in the project.

### 5.2.3.8 Live Context Menu

A Live Context Menu is meant to show context information when the user activates a context (such as right click) on a navigation item on a hierarchy aware control. The Context Menu is either a piece of content in the project or another Navigation Model with the project content type set to "Live Context Menu". If the item to be shown is live content, the content is displayed with live data. If the item is another Navigation Model, a traditional right click menu is shown using the Navigation Model as the source.

### 5.2.3.9 Live Tooltip

A Live Tooltip can show hover information when the user hovers over a navigation item on a hierarchy aware control. The tooltip is a piece of content like the live icon and live tile, most likely a graphic which shows live runtime values. The user can configure the Live Tile value to one of the following:
- Text String - In this mode the user can configure a static string, a reference, or an expression which is shown using a standard tooltip representation in runtime.
- Content - In this mode the user can configure a piece of content to show as the tooltip.

### 5.2.4 Visibility

The visibility of a navigation item can be controlled based on runtime conditions as described below. If a Navigation Item's visibility is false, this value affects all the children of the navigation item. As this change affects a potential tree of items in the Navigation Model, all navigation controls which are showing pieces of the navigation model can be notified of the update.

### 5.2.4.1 Based on Boolean Expression

A constant, reference or expression can be configured to control the visibility of a navigation item. This expression is evaluated in runtime to determine whether the navigation item is visible. If the expression evaluates to FALSE the Navigation Item is not shown. If the expression evaluates to TRUE then the visibility options for security is taken into account. The field is optional.

### 5.2.4.2 Based on Security

Controlling visibility based on role is a single open with multiple choices: Note, the Boolean visible security state is combined with the expression state above to determine the final visible state.
1. None - Security is not taken into account to determine visibility.
2. Visible if logged out - The visibility is still true if the user has logged out of the View Application.
3. Visible if logged in - If any runtime user is logged in, the visibility is true
4. Visible based on Role - If the user selects this option, they can pick from the global list of project roles to control which role type can see the option.

### 5.2.5 Checked

The checked state of a navigation item is a Boolean on/off value which is represented to the user based on the Hierarchy aware control being used. A common usage for a checked state is a traditional application menu wherein a particular menu item has a 'check' mark next to the name of the menu item.

### 5.2.5.1 Based on Boolean Expression

A constant, reference or expression can be configured to control the checked state of a navigation item. This expression is evaluated in runtime to determine whether the navigation item is checked. If the expression evaluates to FALSE the Navigation Item is not checked. If the expression evaluates to TRUE then the checked state is shown. The field is optional.

### 5.2.6 Shortcut Key

A particular navigation item can be triggered via a shortcut key. When items are displayed by a Hierarchy Aware control and those items support a variety of shortcut keys, the shortcut keys are registered with the application and processed accordingly based on user interaction.

This shortcut key combination may be displayed by Hierarchy Aware controls like the "Menu" control in a traditional < Command Name> < Shortcut Key> fashion.

### 5.3 Behaviors Specific to a Navigation Item with an Asset Model context

If a Navigationltem has been added based on the asset model, it has some additional properties to control how the asset model is expressed.

### 5.3.1 Visual Representation

### 5.3.1.1 Textual Representation / Friendly Name

While the Friendly Name is a common property in a Navigation Item, when it's modified it creates an override from the original name from the asset model. This override is stored in the Navigation Item.

Note: If the Project supports friendly names on Project items, the project wide friendly name would be the default used for this setting.

### 5.3.1.2 Static I con

The Navigation Item does not try to map the static icon based on the configuration of the asset. The user can create an override on the Navigation Item for the static icon.

### 5.3.1.3 Live Icon

The Navigation Item looks for a content type of "Live Icon" on the asset to map the content automatically. The user can override the content used for the Live Icon by mapping a different piece of content into this value. This creates an override which is stored in the Navigation Item.

### 5.3.1.4 Alarm Icon

If the Navigation item has a context to the asset model, it subscribes to the propagated alarm status of the asset and use the Alarm Icon configuration from the Project to show the configured representation of the propagated alarms. If the Navigationltem's parent does 'not' have a context into the asset model, it propagates the current alarm status to the parent of the Navigationltem so it can be shown properly in the visual representation.

### 5.3.1.5 Live Tile

The Navigation Item looks for a content type of "Live Tile" on the asset to map the content automatically. The user can override the content used for the Live Tile by mapping a different piece of content into this value. This creates an override which is stored in the Navigation Item.

### 5.3.1.6 Live Context Menu

The Navigation Item looks for a content type of "Live Context Menu" on the asset to map the content automatically. The user can override the content used for the Live Context Menu by mapping a different piece of content into this value. This creates an override which is stored in the Navigation Item.

### 5.3.1.7 Tooltip

The Navigation Item looks for a content type of "Tooltip" on the asset to map the content automatically. The user can override the content used for the Tooltip by mapping a different piece of content into this value. This creates an override which is stored in the Navigation Item.

### 5.3.2 Number of Levels

The user can elect to only show a particular depth of the hierarchy under any Navigation Item which has a context to the asset model. If a value is not set, it defaults to the parent setting and does not restrict any levels as the parent is controlling the depth. If the value is set, it controls the hierarchy depth of its children.

The default when an item is added is "All Levels" so there are no initial restrictions and the entire subtree is included.

### 5.3.3 Order

The user can re-order sibling items under a parent. This re-ordering is considered an 'override' which is held in the parent node. Once the user re-orders a single child, the parent can ignore the order returned from the asset model going forward.

### 5.3.4 Hidden

The user can choose to hide a particular Navigation Item so it's not visible in runtime. The node should still be shown in the configuration editor with a visible indicator that it's no longer visible. This hidden override is stored in the Navigation Item which is hidden, and affects all the children of the Navigation Item.

### 5.3.5 Show this node

The user can elect to *not* see a particular node that has child nodes, which rolls up the child nodes into the parent node at runtime. This helps the user create a flat navigation hierarchy which doesn't contain a root node. The design time UI might not show this rollup happening but the preview would show the runtime result.

### 5.4 Navigation Item Commands

When a Navigation Item is activated in runtime, one or more actions can be executed to provide behavior to the Navigation Item. Multiple of these can be configured for each Navigation Item and may be executed in order, one at a time, when activated in runtime.

If a single action experiences an error, that action should be ignored and execution of the remaining actions should continue.

### 5.4.1 Show

The Show action shows a particular piece of content. This command can have a number of options to control where the content is placed.

### 5.4.1.1 Show Options

The Show API describes available properties which may be configured.

### 5.4.2 ShowScreenProfile

This type of action would kick off the start of a ViewApp and setup the screen profile for future commands to utilize. As the NavigationModel supports multiple root nodes, different root nodes may utilize different screen profiles to compose the final visible runtime application.

In some embodiments, the ViewApp can support multiple screen profiles. When the ViewApp is executed, it may auto-discover or be hardcoded to start using a specific screen profile.

For example, ViewApp [1..1] NavigationModel, wherein that NavigationModel is a specific set of actions to populate a specific screen profile, the ViewApp would only support one screen profile.

By way of another example, ViewApp [1..n] NavigationModels, wherein each NavigationModel would populate different screen profiles.

### 5.4.3 ShowLayout (or ShowScreen?)

Showing a Layout would typically need to happen into a screen in the screen profile. Navigationltems at any level in the NavigationModel can modify the layout on any screen and inject new content.

A ShowLayout command specifies the name of a screen only. If the user has built a ViewApp and decides to substitute the screen profile for a different screen profile, the ShowLayout command can bind to another screen of the same name in the new screen profile.

### 5.4.4 ShowScreen

The ShowScreen command shows a particular piece of content as full screen rather than looking for the best location in a Pane. By doing so, the user is not forced to create an empty Layout just to show a particular piece of content at full screen. For example, the ViewApp editor may have an empty screen (or layout defined as <None>) and drag a piece of content directly to that empty screen. This implicitly creates an empty layout behind the scenes and shows the content full screen. The user would see a "Show <content> on <screen name> command in the UI. As opposed to a "Show <content> in < Pane> " type of command.

A ShowScreen command specifies the name of a screen only. If the user has built a ViewApp and decides to substitute the screen profile for a different screen profile, the ShowScreen command can bind to another screen of the same name in the new screen profile.

### 5.4.4.1 ShowScreen Options

The ShowScreen API describes the available properties which may need to be configured.

### 5.4.5 ShowContent

Showing a piece of content utilizes the SDK API's to show a particular piece of content either in a specific pane or allowing the layout algorithm to pick the proper pane based on content type.

A ShowContent action can come in two forms:
- Explicit - The ShowContent command specifies a screen name and a pane name to determine where a piece of content will be shown. The explicit command may not use the name of the Screen Profile or the name of the Layout. If either the Screen Profile or Layout changes, the ShowContent action attempts to re-bind to the name of the screen and/or the name of the pane in a layout.
   ∘ Note, if the auto-fill mode is set to "Look Up then Down" that an explicit command may be encountered in a first child navigation item and the required Pane is not present. In this situation the Explicit command may be ignored.
- Implicit - The ShowContent command specifies the content type and the layout algorithm determines where it should present itself.

In some embodiments, the ShowContent command carries the overrides on the content which will be shown. These overrides can come in the following forms:

### 5.4.5.1 Overrides for Graphics

If the content being shown is a graphic, the command can hold custom property overrides which are injected into the graphic prior to being shown/rendered. These overrides would have been configured in design time.

### 5.4.5.2 Overrides for Controls/ Apps

If the content is being shown in a WPF control or ACF App, the properties of the control can be overridden with values which are injected into the control during initialization. These overrides can include valid references which establish a data connection to the property of the control/application. These valid references include ViewApp attributes.

### 5.4.5.3 Overrides for Layouts

If a Layout is being shown in another layout, the layout properties can be modified based on availability. These overrides may modify individual Pane's properties to control swiping behavior, pan and zoom, and other aspects.

### 5.4.6 Behaviors Specific to a Navigation Item with an Asset Model context

In some embodiments, Navigationltems which have a context into the asset model do not support configuration of specific commands by the user. The commands are auto-populated and may not be modified. To determine the auto-populated commands, the asset is inspected and all content on the asset will be added as individual commands to be shown at runtime in the appropriate pane based on content type.

In some embodiments, the exception to this rule is any content on the asset which is marked with Navigation specific content types which are not meant to be shown in a pane (Live_Icon, Live_Tile, Live_Tooltip).

### 5.4.7 Behaviors Specific to a Navigation Item with an Visual Toolbox (GTB) context

In some embodiments, Navigationltems which have a context into the Visual Toolbox do not support configuration of specific commands by the user. The commands are auto-populated (e.g., at config time) and cannot be modified. To determine the auto-populated commands, the Visual Toolbox folder is inspected and all content in the folder will be added as individual commands to be shown at runtime in the appropriate pane based on content type.

In some embodiments, the exception to this rule is any content in the folder which is marked with Navigation specific content types which are not meant to be shown in a pane (Live_Icon, Live_Tile, Live_Tooltip).

### 5.5 Properties which support Localization

If static strings are configured for certain properties, they participate in the item being localizable from the Project Standpoint. These properties are the following:

### 5.5.1 Name / Friendly Name

If the user configures a static string, this should be used for localization during import/export of localized text.

### 5.5.2 Secondary Text

If the user configures a static string for the secondary text, this should be used for localization during import/export of localized text.

### 6 Query Navigation Item

A Query Navigation Item performs some type of search and returns the results as a set of navigation items which can be consumed by a Hierarchy aware control. Once the user creates this specific type of Navigation Item, they can pick from the following options:

### 6.1 Most Recently Viewed

This query returns the content items which were most recently opened by the user. In some implementations, the query is sorted most recent to least recent.

### 6.1.1 Number of Items

The number of items to return can be specified as part of the query. The default is 10.

### 6.2 Most Recently Navigated

This query returns the Navigation Items which were recently activated by the user regardless of which specific Navigation Model was used. This list is populated when the user selects on a Navigation Aware control and triggers a particular action. If the user selected this same navigation item from the Query, the same action would be executed in response.

### 6.2.1 Number of Items

The number of items to return can be specified as part of the query. The default is 10.

### 6.3 Favorites

This query returns the Navigation Items which are marked as favorites.

### 6.3.1 Number of Items

The number of items to return can be specified as part of the query. The default is 10.

### 6.4 Content Query

The Content Query allows the user to configure a search which is executed against the asset model with the results returned as a flat list presented as Navigation Items. The available options for the query are the following:

### 6.4.1 Query Properties

### 6.4.1.1 Content Type

The user can specify one or more project content types which should be searched for. This field can be left blank.

### 6.4.1.2 Wild Card

The user can specify a matching wild card for the asset type in the galaxy. If this is specified along with the content type they are both used to determine a matching asset.

### 6.4.2 Result Properties

### 6.4.2.1 Friendly Name

The Friendly Name will automatically be used for the object if available in the Project.

### 6.4.2.2 Live I con

The user can specify the content type which should be used for the Live Icon. The default is the "Live Icon" content type in the Project, but the user can override the value.

### 6.4.2.3 Live Tile

The user can specify the content type which should be used for the Live Tile. The default is "Live Tile" content type in the Project, but the user can override the value.

### 6.4.2.4 Show Action

The user can specify the content type which should be used for the "Show" command. The first matching content type on the asset will be used as the execute command.

### 6.5 Language Queries

A Language query works against the supported languages of the running application. The results returned from the query are an individual item for each supported language. The command to execute is custom tailored to set the appropriate ViewApp Attribute to modify the language in runtime.

### 6.6 Project Queries

Project queries work against the information in the project rather than runtime data. This allows navigation constructs to be utilized in design time interfaces.

### 6.6.1 Query Properties

### 6.6.1.1 Source

The source is one of the following values:
1. Asset Standards - Performs the query against the asset standards (templates)
2. Visual Standards - Performs the query against visual standards (graphic tool box)
3. Assets - Performs the query against the asset model (equipment model)

### 6.6.1.2 Type

The information to return from the source can be one of the following
1. Checked out by me
2. Checked out by others
3. Recent
4. In Warning
5. In Error
6. In Alarm
   a. This option may be available if "Assets" is selected as the source.

### 6.7 Status/ Info Queries

Using scripting or API calls, controls can create navigation items which are status messages in nature. These status messages can be updated dynamically and will render into the control showing the current status. The Status/Info query retrieves the list of items and presents them as configured in the navigation aware control.

This query is often paired with the Status/Info Navigation Aware control to let the user see current background operations, information, or other important status information which is relevant.

### 7 Navigation Model Editor

### 7.1 Introduction

The Navigation Model Editor is an editor for creating and modifying a Navigation Model. This editor works in conjunction with the Layout Editor and ViewApp Editor to present a WYSIWYG experience to build the visual representation of what the user sees at each level in the Navigation Model.

### 7.2 Launching

The user may enter into the Navigation Model editor from different workflow paths.

### 7.2.1 Editing a Layout

When any layout is edited, a single NavigationModel is part of the Layout. A default Navigation Model is created automatically with a single root node with a name that matches the Layout name. The user can add additional navigation items and use all the features of the Navigation Editor.

### 7.2.2 Editing a ViewApp

When any ViewApp is edited, a single NavigationModel is part of the ViewApp. A default Navigation Model is created automatically with a single root node which is pointing to the root of the asset model. The user can add additional navigation items and use all the features of the Navigation Editor.

### 7.3 Behaviors

In some embodiments, the Navigation Editor integrated with the Layout editor and ViewApp editor can allow the user to perform the behaviors such as, but not limited to:

### 7.3.1 Adding a new Navigation Item

The user can add a new Navigation Item to build up a hierarchy of items. A new Navigation Item can be dragged-dropped from the toolbox and will be given a default name.

### 7.3.2 Removing a Navigation Item

The user can remove a navigation item from the hierarchy. All children will be removed if the parent is removed. The user may be shown a confirmation on the delete.

### 7.3.3 Behaviors specific to Navigation Items added from the Asset Model or Visual Toolbox

If a Navigation Item has a context to the asset model, the Navigation Item has special behaviors/commands compared to a navigation item without context to the asset model.

### 7.3.3.1 Adding a new Navigation Item with a context to the asset model

The user can add a new navigation item with a context to the asset model. When they add this the root of the asset model is automatically selected. The user can modify the asset model context afterward.

### 7.3.3.2 Hiding a Navigation Item

If a Navigation Item has a context to the Asset model, a child Navigation item can be 'hidden' so it's no longer seen in runtime. The Navigation Editor will still show this node in the tree, but rendered as semi-transparent to let the user see it's been hidden. A command can be used to restore the hidden item back to visible.

### 7.3.3.3 Rearranging a Navigation Item in relation to its siblings

Under any Navigation Item with context into any part of the asset hierarchy, the user can re-arrange the order of the navigation items at the sibling level. This change is specific to the Navigation Model and not saved back to the Asset Model.

### 7.3.3.4 Configuring the Navigation Item

The user can configure values of the Navigation Item as specified in the "Navigation Item" section of this document.

### 7.4 Preview

As the user is building the Navigation Model, they can preview how it might look in a variety of controls without leaving the Navigation Model Editor. After switching to Preview mode, the user can pick a Navigation Aware control to serve in the preview mode. If the user has edited the Navigation Model from a Navigation Aware control, that control is used as the default.

### 7.4.1 Behaviors

As the user selects Navigation Items during preview, an 'info' window shows the actions which would have been executed as part of the behavior.

### 8 Refreshing Navigation Items with Asset Model or Visual Toolbox Context

### 8.1 Introduction

When a Navigation Model contains Navigation Items which have a context to the asset model or Visual Toolbox, the content can change behind the scenes. This can cause the NavigationModel to become out of sync and require a 'refresh'.

### 8.2 When to Refresh

In some embodiments, the Navigationltems in the Navigation model may need to perform an analysis to detect changes:

### 8.2.1 Opening a Navigation Model / Browsing the Navigation Model

When the user edits a Navigation Model, the Model can perform the override analysis with the asset model on nodes as they are made visible to the user. It may not be necessary to evaluate an entire asset tree when the Navigation Editor first loads, instead deferring this to an 'as needed/lazy' bases as the user expands nodes which have context into the asset model.

### 8.2.2 On a Deploy/ Publish Operation

When the user deploys or publishes an application which is utilizing Navigation Models, the override analysis may be performed entirely against the asset model to ensure the published navigation hierarchy is correct.

### 8.3 Asset/ Toolbox Model Differences

In some embodiments, when performing an override analysis, the following situations are taken into account.

### 8.3.1 Asset/ Toolbox model has a new item not present in the NavigationModel

If the NavigationModel does not have an asset, it should add the asset into the Navigation Model.

### 8.3.2 NavigationModel has an item not present in the Asset/ Toolbox Model.

If the NavigationModel has an item (by ID) which is no longer present in the Asset/Toolbox Model, the NavigationModel Item should try and re-connect to an existing item of the same name, if one exists. If one does not exist, the NavigationModel should remove the Navigationltem

### 8.3.3 NavigationModel has an item match by ID but with a different name.

If the user has overridden the name of the asset/Toolbox item, no change is necessary. If the user has not overridden the name, the new name should be used for the asset.

### 9 Layout and ViewApp Behaviors using a NavigationModel

The NavigationModel is the view composition engine which drives the final presentation of the Layout or ViewApp to the screen. To fully compose a view (Layout or ViewApp), actions from multiple levels of the Navigation Model are combined together to fill as many panes as possible based on the currently selected Navigation Item. This implies that what the user sees at any particular moment is a combination of content which is shown by the currently selected Navigationltem, and other content shown by the parent nodes of the currently selected navigation item.

### 9.1 How a Layout is composed based on a NavigationModel

In some embodiments, when a Navigationltem triggers opening one or more pieces of content to pane(s), the following happens:
1. All screens across the screen profile are considered empty.
2. Based on the auto-fill setting, the Layouts are determined across the available screens.
3. All panes across all now determined layouts are assumed to be empty while the composition engine determines what should be visible in each pane.
4. The content is shown in the appropriate pane(s) given the pane type or a direct reference to the pane. Layout which have pre-existing content would not be considered for a pane type match. A direct reference action would however replace a Pane with pre-existing content.
5. The other panes which did not have content opened to them are enumerated to retrieve their individual types.
6. For each pane type, the current level in the hierarchy is queried to see if any content of that type exists at the navigation level. For NavigationItems, this request makes the most sense when the Navigationltem has a context into the AssetHierarchy, as an object in the asset hierarchy may have several different types of content on it (eg: overview, faceplate, etc.)
7. If any matching content types are found at that level of Navigation, they are shown in the panes from step 2.
8. For unmatched content types, the parent of the current Navigationltem is retrieved and the search starts again at step 3 attempting to satisfy all the pane's content types.
9. The search ends when either all content was found for the panes from step 2, or the root of the of the hierarchy is reached.

If there are multiple panes with the same content type, the Pane may be chosen based on the alphabetical order of the Pane name.

### 9.1.1.1 Example

Consider a customer has configured a runtime screen with the setup of Fig. 10.

The Left navigation pane holds a tree control with the entire asset model of L1, L2, and L3 displays. L1 Displays are primary graphic overviews, L2 Displays are groups of equipment graphics, and L3 Displays are faceplates for a specific device.

Given the user is clicking on items in the left navigation tree control, the following happens:
- If the user clicks on a Navigationltem which opens an L1 Display then:
   ∘ The L1 Display is opened in the L1 Pane.
   ∘ The system looks for L2, L3, and EAC content on the L1 Navigation Item. For this example let's say none are found. End.
- If the user clicks on a Navigationltem which opens an L2 Display then:
   ∘ The L2 Display is opened in the L2 Pane.
   ∘ The system looks for L1, L3, and EAC content on the L2 Navigation item. For this example let's say none are found.
   ∘ The system goes up a level from the L2 Navigationltem to the L1 Navigation Item.
   ∘ The system looks for L1, L3, and EAC content on the L1 Navigation Item. System finds an L1 Display.
   ∘ The system shows the L1 display in the L1 Pane. End.
- If the user clicks on a Navigationltem which opens an L3 Display then:
   ∘ The L3 Display is opened in the L3 Pane.
   ∘ The system looks for L1, L2, and EAC content on the L3 Navigation item. For this example let's say none are found.
   ∘ The system goes up a level from the L3 Navigationltem to the L2 Navigation Item.
   ∘ The system looks for L1, L2, and EAC content on the L2 Navigation item. System finds an L2 Display.
   ∘ The system shows the L2 display in the L2 Pane.
   ∘ The system goes up a level from the L2 Navigationltem to the L1 Navigation Item.
   ∘ The system looks for L1 and EAC content on the L1 Navigation Item. System finds an L1 Display.
   ∘ The system shows the L1 display in the L1 Pane. End.

### 9.2 How a ViewApp is composed based on a Navigation Model

The ViewApp follows the same pattern as the Layout described above, but is at an abstraction level higher than the Layout. At the layout level, the only visible places to place content are in panes. At the ViewApp level, the initial places to put content are based on the Screen Profile supported by the ViewApp. The ViewApp first specifies what Layouts belong on which screen profiles. Commands executed after that would populate the panes in each of the layouts.

### 10 Navigation Hierarchy Aware Controls

### 10.1 Auto Configuration of Hierarchy Aware Controls

When a Hierarchy aware control is setup in config time, it makes a best effort to configure itself for usage in runtime. To do this, a Hierarchy aware control auto-configures itself to point to the root of the NavigationModel for where the control is being used (Layout or ViewApp).

### 10.2 Advanced Configuration of Hierarchy Aware Controls

Users can configure more advanced scenarios by linking one or more hierarchy aware controls together, or have different hierarchy aware controls point to different root nodes in the Navigation Model. In one example scenario, a HierarchyAware control can listen to the "SelectedNav" of another control and show the child navigation items. An IDE which has a primary navigation on the left side only shows 1 level of navigation. The second level of Navigation is a horizontal tab header. The tab header would point to the "SelectedNav" of the primary control so it reacts to showing the 2^{nd} level nav under the primary nav.

In some embodiments, when linking hierarchy aware controls together, the controls are daisy-chained against an existing hierarchy aware control already in a pane of one of the layouts across the current screens. The user can configure the "NavigationSource" property to a node in the current Navigation Model (as usual) or the user can select an existing NavigationControl.

### 10.3 Preparing the Visual State of Items

Many of the Hierarchy Aware controls display content in the form of a graphic, a Layout, a user control, and/or the like. Depending on the complexity of the content and the load on the system, each item to be rendered may not be presented to the user immediately. Some type of progress may be shown on each individual item as it prepares to render (e.g., via a small spinner that shows each item as its loading).

### 10.4 List Control

Lists are best suited to presenting a homogeneous data type or sets of data types, such as images and text, optimized for reading comprehension with the goal of differentiating between like data types or qualities within a single data type.

Note: The individual content presentation for the List Control may be identical to the "Tree List" control and the "Breadcrumb" control.

### 10.4.1 Supported Navigation Types

The List control uses the following visual representations of a Navigation Item:
- Friendly Name - Shown as the primary text in the list item.
- Secondary Text - Shown as the secondary text in the list item.
- Percent Indicator - If user configures to show, shows in the list control.
- Alarm Indicator - If user configures to show, shows in the list control.
- Static Icon - If user configures to show, shows in the list control.
- Live Icon - If user configures to show, shows in the list control.
- Live Tile - If user configures to show, shows in the list control.
- Live Context Menu - If user configures to show, shows on context menu activate.
- Live Tooltip - If user has enabled tooltips, shows on hover of list item.

### 10.4.2 Configuration Properties

The control supports the following properties for presentation:

### 10.4.2.1 Layout

▪ Vertical List [DEFAULT] - One column of items are shown with the control scrolling vertically.
▪ Horizontal List - One row of items are shown with the control scrolling horizontally.

### 10.4.2.2 Allow Browsing

As the list only shows one level of items, enabling "allow browsing" drills down into child navigation items when a navigation item is double clicked.

### 10.4.2.3 Scrolling

The control might require scrolling based on the item count. The user has the follow options:
- No Scrolling
   ∘ No scroll bars are shown and scrolling is not allowed.
- Allow Scrolling with Scroll Bars
   ∘ Scroll bars are shown and control scrolling.
- Allow Scrolling without Scroll bars
   ∘ Scroll bars are not shown but scrolling is allowed via touch and drag, mouse click and drag, or the scroll wheel.

### 10.4.2.4 Background Color

Maps automatically to the project style for the color.

### 10.4.2.5 Primary Text Color

Maps automatically to the project style for the color.

### 10.4.2.6 Primary Text Size/ Font/ etc.

Maps automatically to the project style for the color.

### 10.4.2.7 Secondary Text Color

Maps automatically to the project style for the color.

### 10.4.2.8 Secondary Text Size/ Font/ etc.

Maps automatically to the project style for the color.

### 10.4.2.9 Pressed Color

### 10.4.2.10 Disabled Color

### 10.4.2.11 Highlighted Color

### 10.4.2.12 Checked Color

### 10.4.2.13 Selection Bar Color

### 10.4.2.14 Use Live Context Menus

If true, utilizes the Live Context Menus configured in the Navigationltem. Default is TRUE

### 10.4.2.15 Use Live Tooltips

If true, utilizes the Live Tooltips configured in the Navigationltem.

### 10.4.2.16 List Item Content

Controls how the primary content in this item is displayed:

### 10.4.2.16.1 Live Tile Only

The List Item uses the Live Tile only to render the list item.

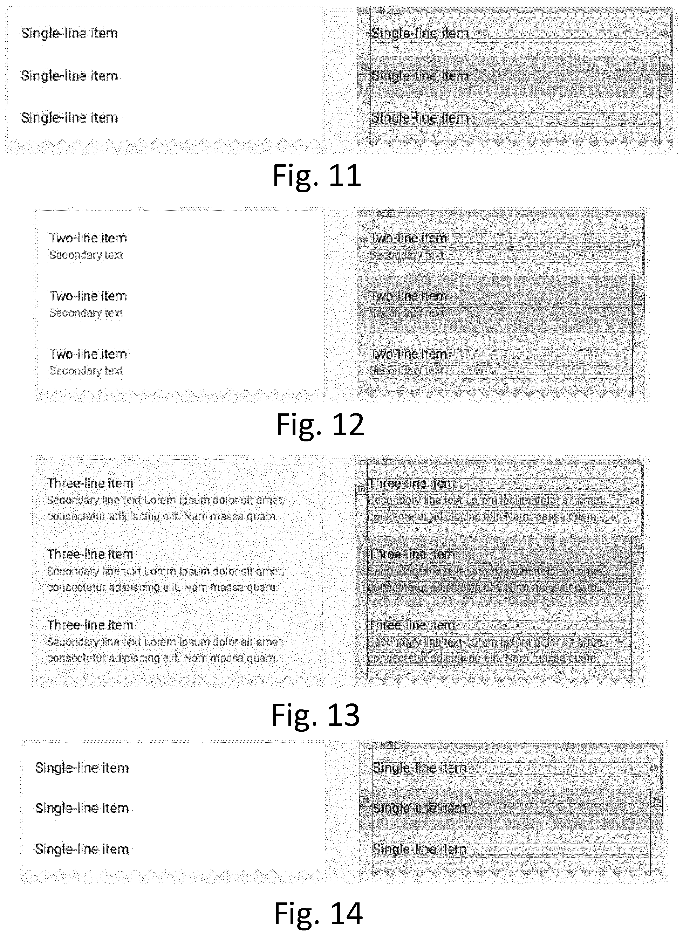

### 10.4.2.16.2 Item with One Text Line [DEFAULT] (Fig. 11)

### 10.4.2.16.3 Item with two text lines (Fig. 12)

The primary text uses the Friendly Name and the secondary text uses the Secondary Text value.

### 10.4.2.16.4 Item with three text lines (Fig. 13)

The primary text uses the Friendly Name and the secondary text uses the Secondary Text value.

### 10.4.2.17 List Item Left Visual

If the user has selected an 'item' representation for the list item (as opposed to Live Tile only), the left visual is the space to the left of the text, as shown below with the grey rectangle. The following options are available:

### 10.4.2.17.1 None (Fig. 14)

Do not show any left visual.

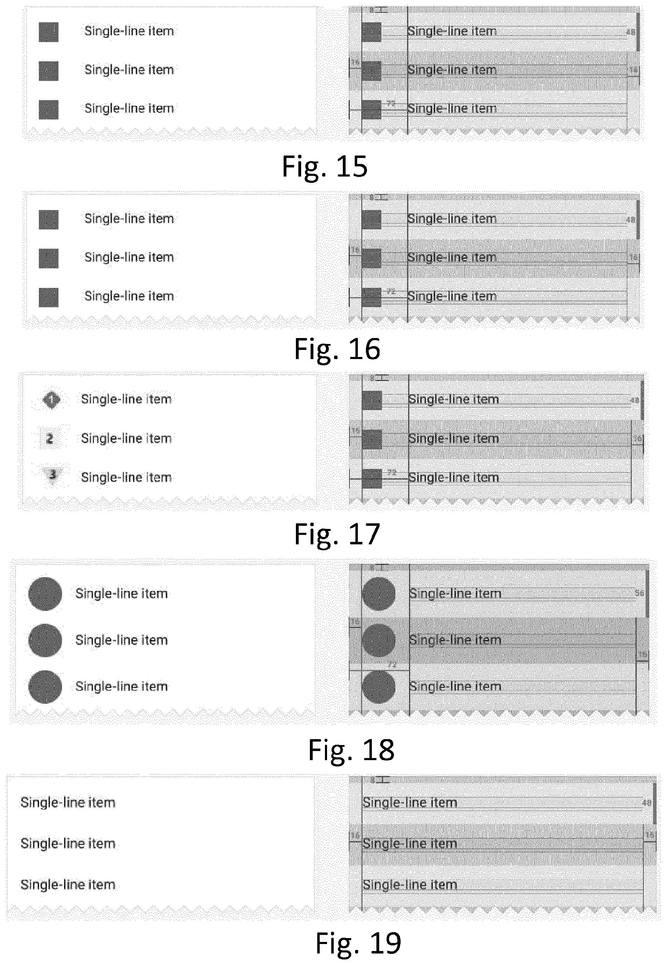

### 10.4.2.17.2 Static I con (Fig. 15)

### 10.4.2.17.3 Live Icon (Fig. 16)

### 10.4.2.17.4 Alarm Icon (Fig. 17)

### 10.4.2.17.5 Live Tile (Fig. 18)

Note: The Live Tile is drawn with a circle only to represent its potential larger size.

### 10.4.2.18 List Item Right Visual

If the user has selected an "item" representation for the list item, a right visual can be added to a list item with the following options.

### 10.4.2.18.1 None (Fig. 19)

Do not show any right visual.

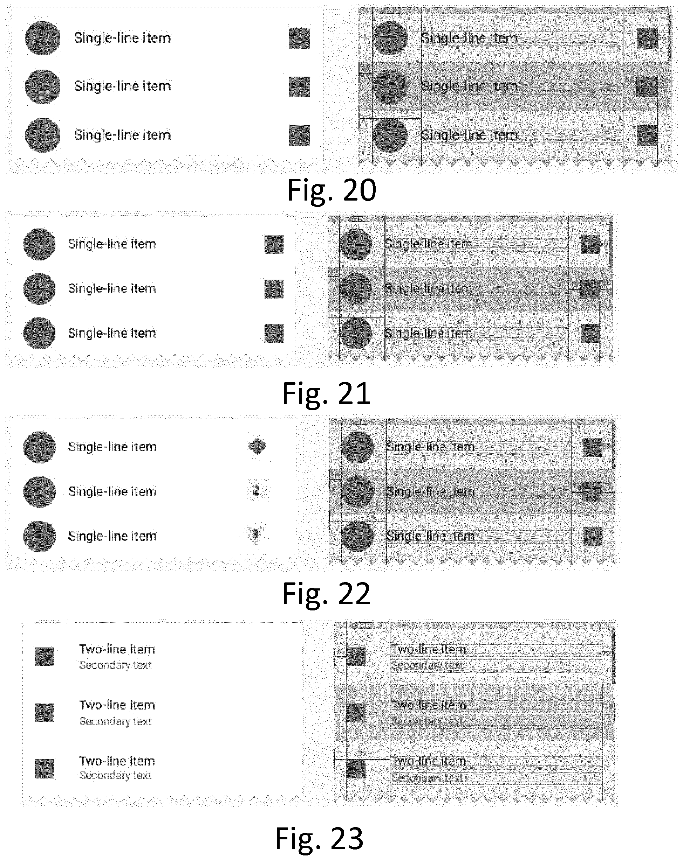

### 10.4.2.18.2 Static Icon (Fig. 20)

Use the static icon for the right visual.

### 10.4.2.18.3 Live Icon (Fig. 21)

Use the live icon for the right visual.

### 10.4.2.18.4 Alarm Icon (Fig. 22)

Use the alarm icon for the right visual.

### 10.4.2.19 Additional Examples for Reference:

### 10.4.2.19.1 Two line list with Static/ Live Icon (Fig. 23)

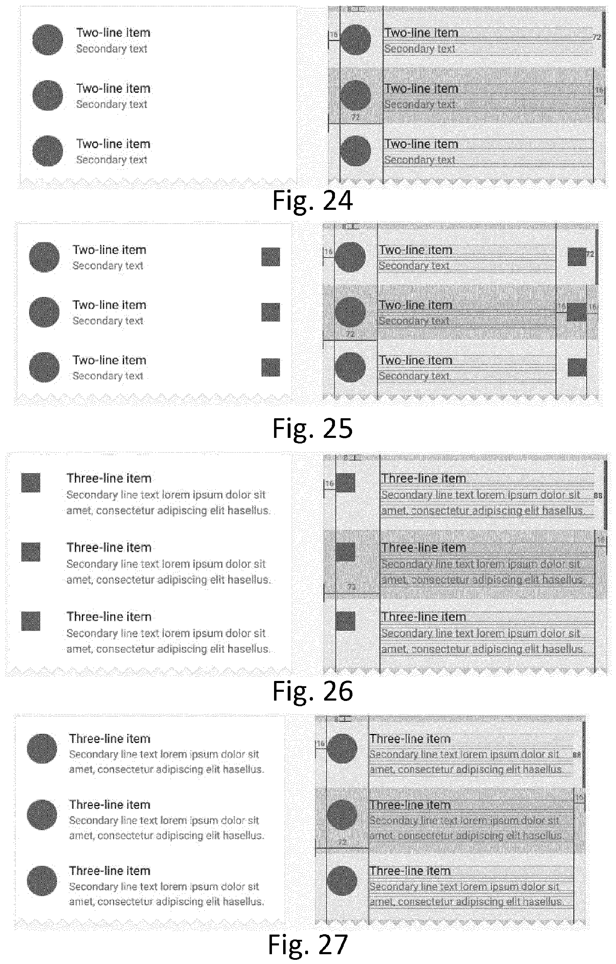

### 10.4.2.19.2 Two line list with Live Tile (Fig. 24)

### 10.4.2.19.3 Live Tile with text and static icon (Fig. 25)

### 10.4.2.19.4 Three Line list with Static/ Live Icon (Fig. 26)

### 10.4.2.19.5 Three line list with Live Icon (Fig. 27)

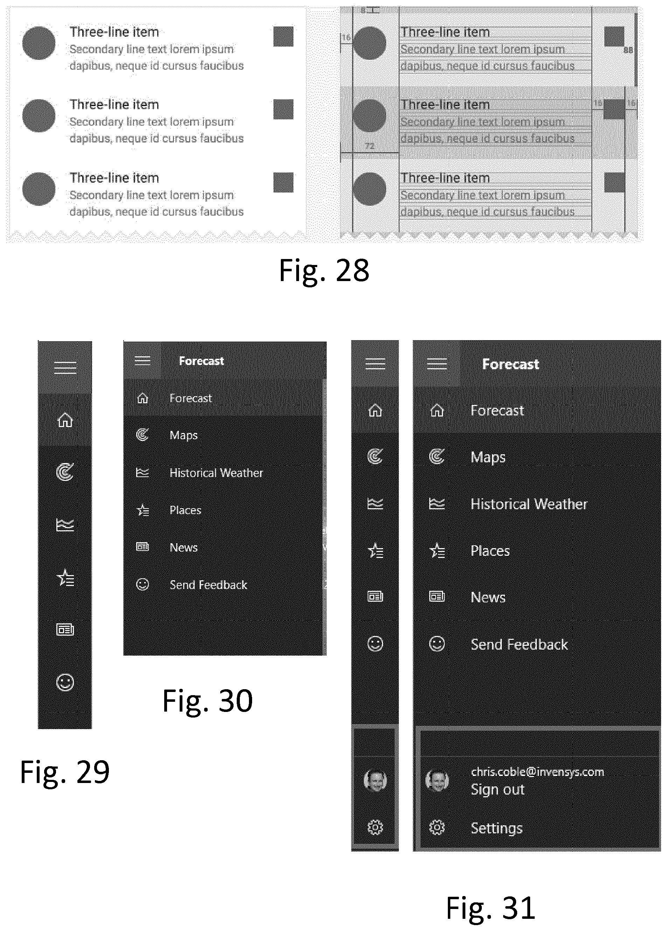

### 10.4.2.19.6 Three line list with Live Icon and Static Icon (Fig. 28)

### 10.4.3 Runtime Behavior

In some embodiments, the list control can only show one level of a Navigation Model at a time. If the NavigationModel property is changed in runtime, the control can query the children of the Navigationltem and refresh the display.

### 10.4.3.1 Checked

The list would represent the "Checked" state by drawing a boundary around the item with a check mark in the upper right hand corner.

### 10.4.3.2 Virtualization

Since the list will most likely be showing live graphics, the only ones shown should be user visible. As the user scrolls, new content would be made live.

### 10.5 Tree Control

The Tree List Control is a combination of a standard tree control using the "List Control" item representation from the previous section above.

### 10.5.1 Supported Navigation Types

The Visual Tree View control uses the following visual representations of a Navigation Item:
- Friendly Name - Shown as the primary text in the list item.
- Secondary Text - Shown as the secondary text in the list item.
- Percent Indicator - If user configures to show, shows in the list control.
- Alarm Indicator - If user configures to show, shows in the list control.
- Static Icon - If user configures to show, shows in the list control.
- Live Icon - If user configures to show, shows in the list control.
- Live Tile - If user configures to show, shows in the list control.
- Live Context Menu - If user configures to show, shows on context menu activate.
- Live Tooltip - If user has enabled tooltips, shows on hover of list item.

### 10.5.2 Supported Properties and Configuration

### 10.5.3 Configuration Properties

This control would have the same item content configuration as the "List Control" above, along with the additional properties:

### 10.5.3.1 Number of Levels

The Tree control can elect to only show a certain number of levels from the Navigation Model. By default this is set to "All" but can be configured to a number to restrict showing the entire subtree of Navigation Items.

### 10.5.3.2 Background Color

### 10.5.3.3 Text Color

### 10.5.3.4 Text Size/ Font/ etc.

### 10.5.3.5 Use Live Context Menus

If true, utilizes the Live Context Menus configured in the Navigation Item. Default is TRUE

### 10.5.3.6 Use Live Tooltips

If true, utilizes the Live Tooltips configured in the Navigation Item. Default is TRUE.

### 10.5.4 Runtime Behavior

The tree control has two distinct parts with respect to runtime behavior which are:
1. The Expander icon - Usually part of the tree control. This expands and contracts the children under a particular node. Clicking on this does not activate the navigation action for the Navigation item.
2. The content portion of the tree item - Clicking on this activates the actions for the Navigation item, along with publishing any required properties.
   a. Note: Hovering over this item would show the tooltip.
   b. Note: Right clicking on this item would show the context menu.

### 10.6 Navigation Drawer Control

The Navigation drawer control is similar to the list control with some additional behaviors. The control sits vertically and can show one level of navigation with a hamburger button on top. The hamburger button controls the expanded/contracted state of the control.

Note: This specification is taken from the Windows 10 Universal App usage of the control.

### 10.6.1 Supported Navigation Types

The Visual Tree View control uses the following visual representations of a Navigation Item:
- Friendly Name - Shown as the primary text in the list item.
- Secondary Text - Shown as the secondary text in the list item.
- Percent Indicator - If user configures to show, shows in the list control.
- Alarm Indicator - If user configures to show, shows in the list control.
- Static Icon - If user configures to show, shows in the list control.
- Live Icon - If user configures to show, shows in the list control.
- Live Tile - If user configures to show, shows in the list control.
- Live Context Menu - If user configures to show, shows on context menu activate.
- Live Tooltip - If user has enabled tooltips, shows on hover of list item.

### 10.6.2 Supported Properties and Configuration

This control would have the same item content configuration as the "List Control" above for an individual item. Specifically the "Left Visual" property choice would be shown always in the control.

The font size would determine the overall height of each individual item shown in the list, with the understanding that the control is touch friendly and leaves ample space between individual items as shown in the examples below.

### 10.6.2.1 Foreground Color

The static icon and text color.

### 10.6.2.2 Background Color

The control's background color.

### 10.6.2.3 Hamburger Background Color

This controls the background color for the hamburger button.

### 10.6.2.4 Selected Item Background Color

This controls the background color for the selected item.

### 10.6.2.5 ShowTooltips

If TRUE, the control uses the Live Tooltips from the Navigation Item.

### 10.6.2.6 ShowContextMenus

If TRUE, the control uses the Live Context Menus from the Navigation Item.

### 10.6.2.7 SecondaryNavigationModel

This property allows a secondary navigation model to be utilized with the same control, but aligned to the bottom of the control. More information is captured in the "Runtime Behavior" section below.

### 10.6.3 Runtime Behavior

The control has two primary states, expanded and contracted. In the contracted state, only the "Left Visual" is shown to the user with a highlight behind to represent the selected item. In the expanded state, the full item content is shown in a slide out panel.

### 10.6.3.1 Contracted State

An example of the Hamburger button on top with the contracted state is shown in Fig. 29.

### 10.6.3.2 Expanded State:

The expanded state is shown in Fig. 30 when the user presses the Hamburger button, the control is 'slid' open visually to show the remainder of the items. When the control slides open, it appears over top of the existing content to the right of the control.

### 10.6.3.3 Displaying the Secondary Navigation

If a secondary Navigation Model is specified in the control, the items are shown bottom justified in the control in the manner as shown in Fig. 31.

Note: There is a 1px separator line placed above the first item in the secondary Navigation Model.

### 10.7 Grid List Control

Grid lists are an alternative to standard list views. Grid lists are distinct from grids used for layouts and other visual presentations.

A grid list is best suited to presenting homogenous data, typically images, and is optimized for visual comprehension and differentiating between similar data types.

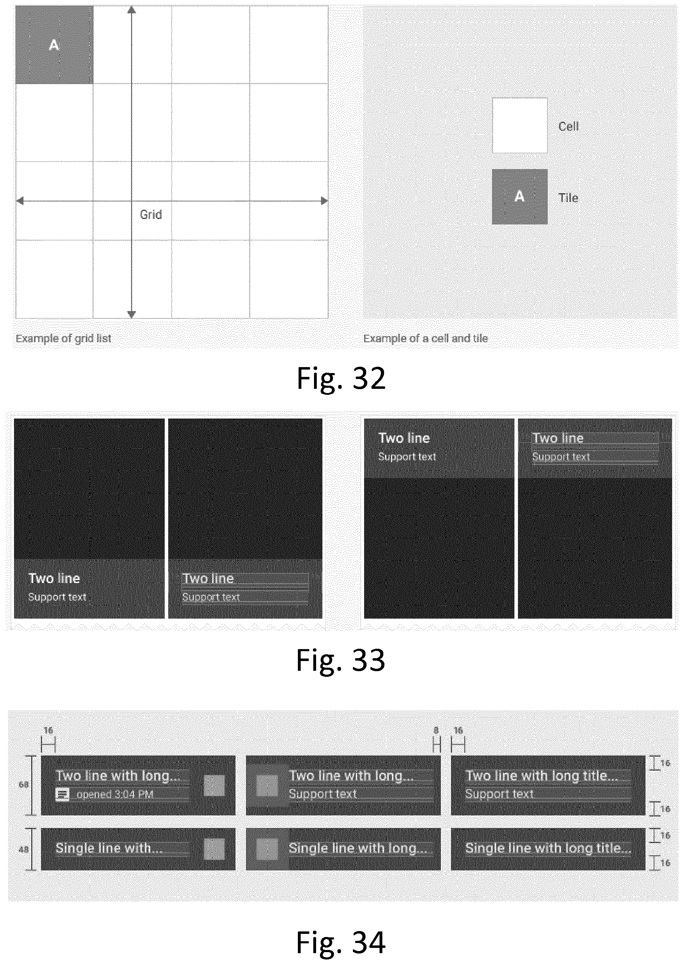

A grid list consists of a repeated pattern of cells arrayed vertically and horizontally within the grid list as shown in Fig. 32.

Tiles hold content and can span one or more cells vertically or horizontally, but not usually at the same time in the same list.

### 10.7.1 Dimensions and Resizing

Resizing a grid list causes the tiles to re-sort as horizontal space becomes available. Full-bleed grid list tiles resize to fit the screen width.

A grid list does not transform into a list when horizontal space contracts. Grid lists and lists are separate structures for emphasizing different data types. Grid lists prioritize images over text and lists prioritize text over images.

To maintain a consistent rhythm throughout the grid list, truncate text content that is too long for the tile's width. Alternatively, increase the grid size so that the tiles can accommodate the longer titles.

### 10.7.2 Grid list header/ footers

While the Live Tile content of the Navigation Item is always shown in the primary tile space, the user can elect to show headers and footers. An example of headers and footers are shown in Fig. 33:

### 10.7.2.1 Text truncation in header/ footers

Grid tiles should always stay the same size, so longer text strings can wrap. An example of this is shown in Fig. 34:

### 10.7.3 Supported Navigation Types

The Grid control uses the following visual representations of a Navigation Item:
- Friendly Name
- Support Text
- Percent Indicator
- Static Icon
- Live Icon
- Live Tile
- Live Tooltip
- Alarm Indicator

### 10.7.4 Configuration Properties

The control supports the following properties for presentation:

### 10.7.4.1 Layout

▪ Vertical List [Default] - The control is filled with tiled representations with the control scrolling horizontally.
▪ Horizontal List - The control is filled with tiled representations with the control scrolling vertically.

### 10.7.4.2 Grid Height

The user can configure the height of each tile. The default is 240px.

### 10.7.4.3 Grid Width

The user can configure the width of each tile. The default is 120px.

### 10.7.4.4 Scrolling

The control might require scrolling based on the item count. The user has the follow options:
- No Scrolling
   ∘ No scroll bars are shown and scrolling is not allowed.
- Allow Scrolling with Scroll Bars
   ∘ Scroll bars are shown and control scrolling.
- Allow Scrolling without Scroll bars
   ∘ Scroll bars are not shown but scrolling is allowed via touch and drag, mouse click and drag, or the scroll wheel.

### 10.7.4.5 Background Color

Maps automatically to the project style for the color.

### 10.7.4.6 Grid Item Background Color

Maps automatically to the project style for the color.

### 10.7.4.7 Header/ Footer Color

Maps automatically to the project style for the color.

### 10.7.4.8 Primary Text Color

Maps automatically to the project style for the color.

### 10.7.4.9 Primary Text Size/ Font/ etc.

Maps automatically to the project style for the color.

### 10.7.4.10 Secondary Text Color

Maps automatically to the project style for the color.

### 10.7.4.11 Secondary Text Size/ Font/ etc.

Maps automatically to the project style for the color.

### 10.7.4.12 ShowTooltips

If TRUE, the control uses the Live Tooltips from the Navigation Item.

### 10.7.4.13 Show ContextMenus

If TRUE, the control uses the Live Context Menus from the Navigation Item.

### 10.7.4.14 Primary Content

The primary content of a tile is the primary visual indicator for the tile and can be one of the following options:
▪ Static Icon
▪ Live Icon
▪ Live Tile [DEFAULT]
▪ Percent Indicator
▪ Alarm Indicator

### 10.7.4.15 Header/ Footer

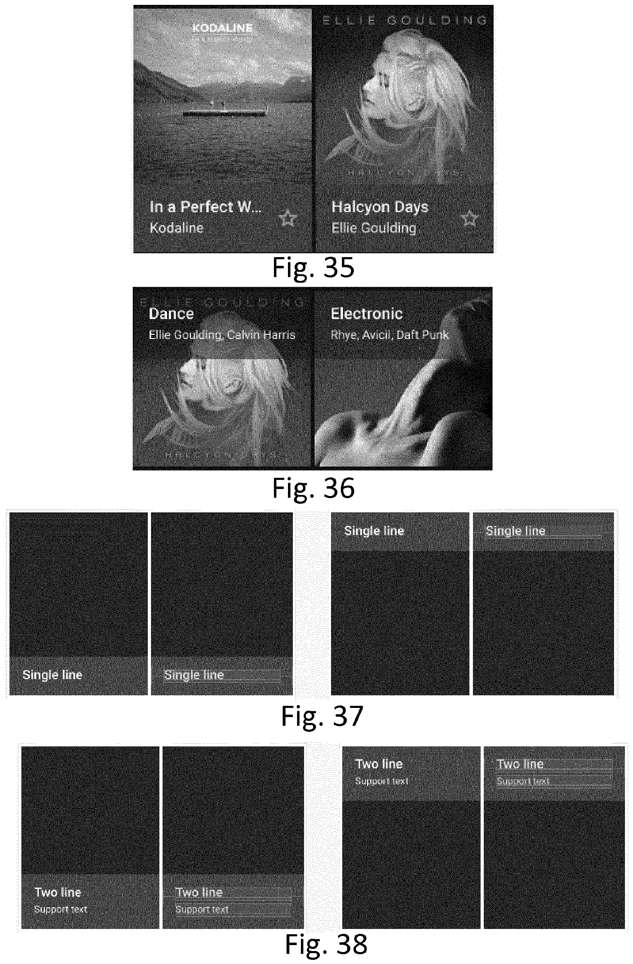

Controls whether a header or footer is shown with the grid item. The options are:
▪ None - No header or footer is applied to the grid item. Note, without a header or footer display other ability are not available such as text, icons, etc.
▪ Header - A header is drawn above the primary tile content without obstructing the primary content as shown in Fig. 35. ∘
▪ Header on Tile Content - A header is drawn on top of the primary tile content with a semitransparent background as shown in Fig. 36. ∘
▪ Footer - a Footer is drawn above the primary tile content without obstructing the primary content.
▪ Footer on Tile Content - A footer is drawn on top of the primary tile content with a semitransparent background.

### 10.7.4.16 Grid Item Text

Controls how many lines of text are shown in a single item. The primary text uses the Friendly Name and the secondary text uses the Support Text value. Note, a header or footer may be visible for this option to be meaningful. The available properties are:

### 10.7.4.16.1 One Line (Fig. 37)

### 10.7.4.16.2 Two Lines (Fig. 38)

### 10.7.4.17 Left Visual

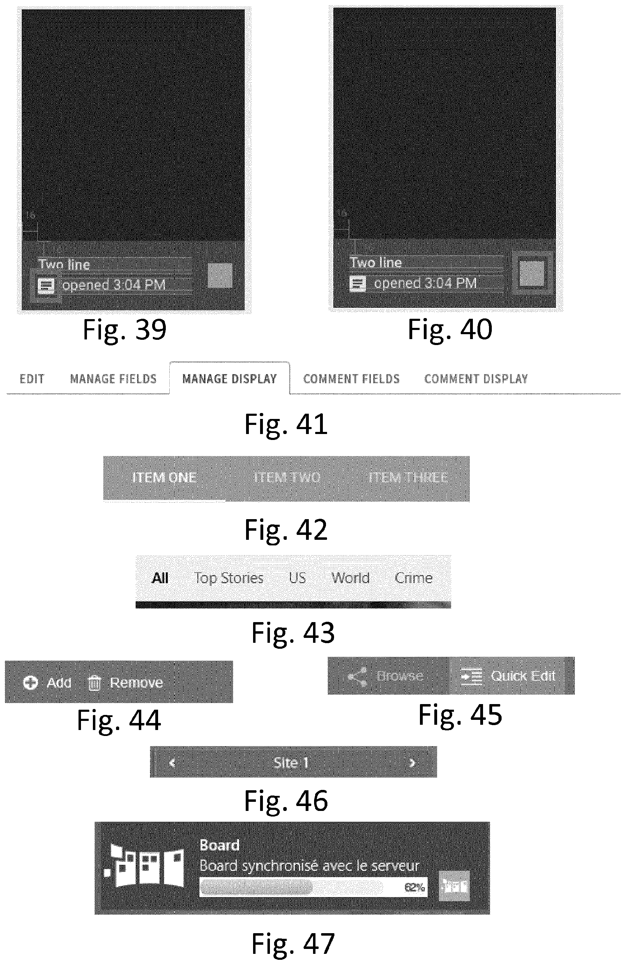

The user can elect to show a visual indicator which is rendered in the header or footer to the left of the secondary text left aligned with the primary text. The following options are available for the Left Visual:
▪ None [DEFAULT]
▪ Static Icon
▪ Live Icon
▪ Percent Indicator
▪ Alarm Indicator
   ∘ Example in marked box as shown in Fig. 39.

### 10.7.4.18 Right Visual

The user can elect to show a visual indicator which is rendered in the header or footer to the right of the primary and secondary text. The following options are available for the Right Visual:
▪ None [Default]
▪ Static Icon
▪ Live Icon
▪ Percent Indicator
▪ Alarm Indicator
   ∘ Example in marked box as shown in Fig. 40.

### 10.7.5 Runtime Behavior

The list control can only show one level of a Navigation Model at a time. If the NavigationModel property is changed in runtime, the control queries the children of the Navigationltem and refreshes the display.

### 10.7.5.1 Virtualization

Since the list will most likely be showing live graphics, the only ones shown should be user visible. As the user scrolls, new content would be made live.

### 10.8 Tab Header Control

The Tab Header control is a control which resembles a tab control with the content of each tab can be represented identically to an item in the "List Control". The internal implementation of this control does not have to utilize an actual tab control.

### 10.8.1 Supported Navigation Types

The Tab Control uses the following visual representations of a Navigation Item:
- Friendly Name - Shown as the primary text in the tab item.
- Secondary Text - If user configures to show, shows in the tab control under the primary text in a smaller font.
- Static Icon - If user configures to show, shows in the tab control.
- Live Icon - If user configures to show, shows in the list control.
- Live Context Menu - If user configures to show, shows on context menu activate.
- Live Tooltip - If user has enabled tooltips, shows on hover of tab item.

### 10.8.2 Configuration Properties

The control supports the following properties for presentation:

### 10.8.2.1 TabStyle

Allows the user to pick from the available tab styles:

### 10.8.2.1.1 Simple (Fig. 41)

### 10.8.2.1.2 Underline (Fig. 42)

Underline shows an underline at the bottom of the visual navigation item

### 10.8.2.1.3 Bold (Fig. 43)

Bold shows the primary text label in bold text

### 10.8.2.2 Background Color

Maps automatically to the project style for the color.

### 10.8.2.3 Selected Tab Color

Maps automatically to the project style for the color.

### 10.8.2.4 Primary Text Color

Maps automatically to the project style for the color.

### 10.8.2.5 Primary Text Size/ Font/ etc.

Maps automatically to the project style for the color.

### 10.8.2.6 Secondary Text Color

Maps automatically to the project style for the color.

### 10.8.2.7 Secondary Text Size/ Font/ etc.

Maps automatically to the project style for the color.

### 10.8.2.8 ShowTooltips

If TRUE, the control uses the Live Tooltips from the Navigation Item.

### 10.8.2.9 Show ContextMenus

If TRUE, the control uses the Live Context Menus from the Navigation Item.

### 10.8.2.10 Left Visual

The user can elect to show a visual indicator which is rendered in the header or footer to the left of the secondary text left aligned with the primary text. The following options are available for the Left Visual:
▪ None [DEFAULT]
▪ Static Icon
▪ Live Icon
▪ Percent Indicator
▪ Alarm Indicator

### 10.8.2.11 Right Visual

The user can elect to show a visual indicator which is rendered in the header or footer to the right of the primary and secondary text. The following options are available for the Right Visual:
▪ None [Default]
▪ Static Icon
▪ Live Icon
▪ Percent Indicator
▪ Alarm Indicator

### 10.8.3 Runtime Behavior

### 10.9 Tool Strip Control

The tool strip is a vertical or horizontal control which behaves like a 1 level tool strip. The tool strip can be configured to only show 1 level or allow a popout for additional levels. This control is identical in behavior to our "Common Command Bar" in the configuration environment of the next gen IDE.

A typical horizontal tool strip with icon on left and text on right as shown in Fig. 44.

A tool strip showing an item "checked" or pressed in as shown in Fig. 45.

### 10.9.1 Supported Navigation Types

The Toolstrip control uses the following visual representations of a Navigation Item:
- Friendly Name - Shown as the primary text in the list item.
- Static Icon - If user configures to show, shows in the list control.
- Live Icon - If user configures to show, shows in the list control.
- Live Tooltip - If user has enabled tooltips, shows on hover of list item.
- Percent Indicator - If user configures to show, shows in list control.
- Alarm State - Shows the Quality and Status indicator as the icon.

### 10.9.2 Configuration Properties

The control supports the following properties for presentation:

### 10.9.2.1 Background Color

Maps automatically to the project style for the color.

### 10.9.2.2 Header/ Footer Color

Maps automatically to the project style for the color.

### 10.9.2.3 Primary Text Color

Maps automatically to the project style for the color.

### 10.9.2.4 Primary Text Size/ Font/ etc.

Maps automatically to the project style for the color.

### 10.9.2.5 Pressed Color

### 10.9.2.6 Disabled Color

### 10.9.2.7 Highlighted Color

### 10.9.2.8 Checked Color

### 10.9.2.9 Layout

Configuration for Vertical or Horizontal.

### 10.9.2.10 Levels

Can be configured to show one or two levels.

### 10.9.2.11 ShopTooltips (default = TRUE)

Can be configured to show the tooltip when hovering over the tool button.

### 10.9.2.12 Show ContextMenus(default = FALSE)

Can be configured to show the context menu when triggered.

### 10.9.2.13 Left Visual

The user can elect to show a visual indicator which is rendered in the header or footer to the left of the secondary text left aligned with the primary text. The following options are available for the Left Visual:
▪ None
▪ Static Icon [DEFAULT]
▪ Live Icon
▪ Percent Indicator
▪ Alarm Indicator

### 10.9.2.14 Right Visual

The user can elect to show a visual indicator which is rendered in the header or footer to the right of the primary and secondary text. The following options are available for the Right Visual:
▪ None [Default]
▪ Static Icon
▪ Live Icon
▪ Percent Indicator
▪ Alarm Indicator

### 10.9.3 Runtime Support

If the user presses the tool button, the action is triggered.

If the toolstrip is configured to show 2 levels, a chevron is shown to expand the tool to see the child buttons.

If the Navigation Item is in a 'checked' state, the tool button is shown pressed in.

### 10.10 Menu Control

The menu control behaves like a traditional drop down menu control, but each individual menu item can render itself like a List Control item, and have the same configuration properties for each item.

### 10.10.1 Supported Navigation Types

The List control uses the same visual representations as the List Control for each item. Additionally the Menu control will show the "Shortcut Key" representation in the menu item.

### 10.10.2 Configuration Properties

The control supports the following properties for presentation:

### 10.10.2.1 Number of Levels

The Tree control can elect to only show a certain number of levels from the Navigation Model. By default this is set to "All" but can be configured to a number to restrict showing the entire subtree of Navigation Items.

### 10.10.2.2 Primary Text Color

Maps automatically to the project style for the color.

### 10.10.2.3 Primary Text Size/ Font/ etc.

Maps automatically to the project style for the color.

### 10.10.2.4 Secondary Text Color

Maps automatically to the project style for the color.

### 10.10.2.5 Secondary Text Size/ Font/ etc.

Maps automatically to the project style for the color.

### 10.10.2.6 Show Tooltips (default = FALSE)

If TRUE, the control uses the Live Tooltips from the Navigation Item.

### 10.10.2.7 Show ContextMenus(default = FALSE)

If TRUE, the control uses the Live Context Menus from the Navigation Item.

### 10.10.2.8 Submenu Arrow Color

Controls the color of the arrow shown to expand out a submenu.

### 10.10.3 Runtime Behavior

### 10.10.3.1 Showing checked state

Menu control shows the 'checked' state of the menu item as a check mark right aligned in the menu item.

### 10.10.3.2 Virtualization

Any Live Icons utilized in the menu control should be loaded on demand based on virtualization in the menu control.

### 10.11 Breadcrumb Control

The breadcrumb control is a basic breadcrumb control which shows the items using the same content presentation as the "List Control". The user can use all the behaviors of the breadcrumb control, such as dropping down a pick list and clicking on specific items. All content representations in all the scenarios match the ability of the content presented in the "List Control".

### 10.11.1 Supported Content Types

Same as the List Control.

### 10.11.2 Configuration Properties

The control supports the following properties for presentation:

### 10.11.2.1 Background Color

Maps automatically to the project style for the color.

### 10.11.2.2 Primary Text Color

Maps automatically to the project style for the color.

### 10.11.2.3 Primary Text Size/ Font/ etc.

Maps automatically to the project style for the color.

### 10.11.2.4 Secondary Text Color

Maps automatically to the project style for the color.

### 10.11.2.5 Secondary Text Size/ Font/ etc.

Maps automatically to the project style for the color.

### 10.11.2.6 Show FullHierarchy

If TRUE, shows the current hierarchy and all nodes. If FALSE, only shows the last item in the hierarchy.

### 10.11.2.7 ShowTooltips

If TRUE, the control uses the Live Tooltips from the Navigation Item.

### 10.11.2.8 Show ContextMenus

If TRUE, the control uses the Live Context Menus from the Navigation Item.

### 10.11.2.9 All the configuration options for the individual list items should be represented here

### 10.11.3 Runtime Behavior

When the breadcrumb control responds to a change in the NavigationModel property, it sets itself to that property rather than trying to read the children. It then publishes that same NavigationModel location out of its properties.

### 10.12 Toggle Control

The Toggle control is a control that allows the user to move across siblings in a single portion of the Navigation Model.

A basic example of this control is shown in Fig. 46.

### 10.12.1 Supported Navigation Types

The Toggle control uses the following visual representations of a Navigation Item:
- Friendly Name - Shown as the primary text in the list item.
- Secondary Text - Shown as the secondary text in the list item.
- Percent Indicator
- Static Icon - If user configures to show, shows in the list control.
- Live Icon - If user configures to show, shows in the list control.
- Live Tile - If user configures to show, shows in the list control.
- Live Context Menu - If user configures to show, shows on context menu activate.
- Live Tooltip - If user has enabled tooltips, shows on hover of list item.

### 10.12.2 Configuration Properties

### 10.12.2.1 Arrow Representation

The Arrows can be shown horizontally or vertically. The default is horizontal.

### 10.12.2.2 Arrow Color

The user can specify the color of the arrows.

### 10.12.2.3 Item Representation

The properties for configuration should match how to show a single Navigation Item.

### 10.13 Notification/ Status Control

This control is meant to show the current list of background tasks and/or notifications from the system. The item formatting matches the individual list items The most basic example of this control is the following:

### 10.13.1 Supported Navigation Types

The Notification control uses the following visual representations of a Navigation Item:
- Friendly Name - Shown as the primary text in the list item.
- Secondary Text - Shown as the secondary text in the list item.
- Percent Indicator
- Static Icon - If user configures to show, shows in the list control.
- Live Icon - If user configures to show, shows in the list control.
- Live Tile - If user configures to show, shows in the list control.
- Live Context Menu - If user configures to show, shows on context menu activate.
- Live Tooltip - If user has enabled tooltips, shows on hover of list item.

### 10.13.2 Configuration Properties

### 10.13.2.1 Item Representation

The properties for configuration should match the List control.

The control can show multiple notifications at the same time, stacking either vertically or horizontally depending on the pane size being wider or taller. Multiple notifications should only be shown if there are multiple background operations in progress. Typically only one notification would be shown at a time.

The intent of the notifications are not to stay on the screen indefinitely, but if there is an operation in progress which is feeding percent complete, the notification should stay visible. Once the operation completes the notification should stay visible until another notification is shown or the user clicks the 'x' button to close it.

### 10.13.2.1.1 Examples:

A single notification is the equivalent of showing a single list item. A simple example is the following:
Example of static icon on left, friendly text on top, secondary text below, and static or live icon on right. Also, if progress notifications are being provided from the Navigation Item, a Navigation Bar is automatically shown in the notification area as shown in Fig. 47.

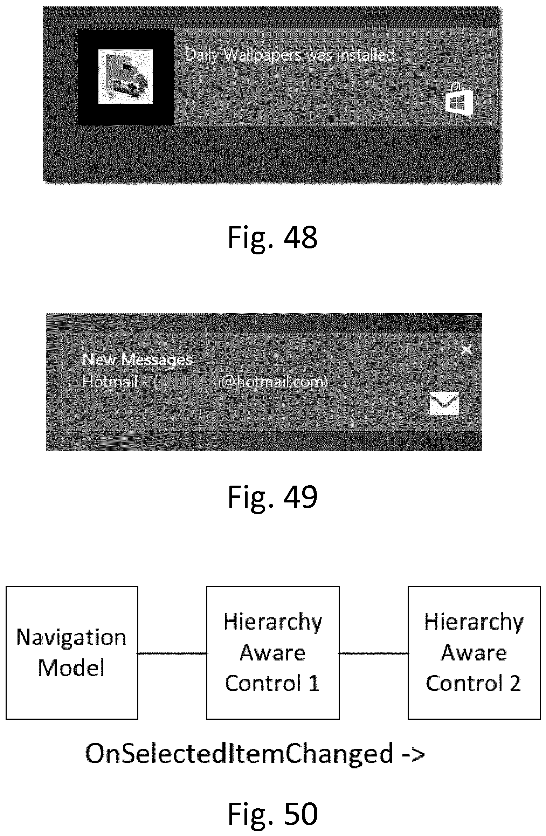

Example of live icon on left with title and static icon on right (Fig. 48).

Example of no left visual, friendly text on top, secondary text below, and static icon on right (Fig. 49).

If the control is oriented horizontally, a drop triangle allows the user to show the list of all the notifications which happened previously. The user could then minimize the control back to its default state.

### 11 Runtime Behavior of Hierarchy Aware Controls

### 11.1 Introduction

At a high level, a Hierarchy control reads or is injected with the Navigation Model it should display, and shows some particular portion of the Navigation Model based on its configuration. A particular Hierarchy Control knows how many levels of the hierarchy it can or should display based on its configuration. For instance, a tree control has the ability to display multiple levels but a grid control might only ever be able to show a single level. For controls which can display multiple levels, a property can control how many levels it shows from the navigation model.

In addition to this behavior, in some embodiments, each Hierarchy Control also acts in a pub/sub model with other tightly coupled Hierarchy aware controls to allow multiple controls to visualize a single Navigation Model.

In some embodiments, only one item in the runtime Navigation Model for the ViewApp can be active at a time. The way in which that single action item is selected can happen via various methodologies.

### 11.2 Ways in which the active Navigation Item may change at runtime

A particular Navigation Item can be triggered in multiple ways, as described in this section:

### 11.2.1 Mouse

When the user clicks on a Navigation Item, its commands are executed and it shows as selected.

The Navigation Item shows hover behavior when the mouse cursor is over the com mand.

The Navigation Item shows the tooltip content when hovered over the item for a certain period of time.

### 11.2.2 Touch

When the user touches a Navigation Item, its commands are executed and it shows as selected.

### 11.2.3 Keyboard

The user can use up/down/left/right arrows to change the selected navigation item. Its commands are executed and it shows as selected.

The user can trigger the keyboard command for a Navigation Item which selects the Navigation Item and its commands are executed.

### 11.2.4 Natural Navigation

If a Pane has Natural Navigation enabled the user can swipe left or right to move to the previous sibling or next sibling navigation item respectively.

When a particular Pane has been populated with a piece of content, the Pane knows what Navigation Item caused that content to end up in the Pane. As an example, to process an L-> R swipe the Pane can ask questions of the Navigation Model such as:
1. What is the previous sibling NavigationItem?
   a. The L-> R swipe will execute the NavigationItem in the same manner as someone clicking on a Navigation Aware control to trigger the same item.
2. What is the content which will end up in this Pane to process the visual slide?
   a. To know which visual content to slide in, the pane will need to forward request that content based on the behaviors of the previous sibling Navigationltem. This question is essentially asking the previous sibling Navigationltem, "What do you expect is in this pane when you are triggered?" The result of that question is what should be 'slid in' visually.

Panes in a Layout may be filled in using the autofill/auto-populate algorithm. This means in a single Layout the content visible in the Panes may have come from different Navigationltems. Using Natural Navigation in any pane will use the specific Navigationltem for the swiping behavior which placed that original content in the pane.

### 11.2.5 SDK API Extensions to support Navigation

In some embodiments, Navigation aware controls use the SDK internally to set the active navigation item, and to read navigation siblings.

In addition to those behaviors, the following SDK behaviors may be supported:

### 11.2.5.1 SetNavigationByName

The *SetNavigation( Name)* allows the caller to pass in the name of a Navigation Item. The Navigation hierarchy will be searched for the Navigationltem name and be executed when found. As the Navigation Hierarchy could include the Navigationltem name in multiple top level root nodes in the Navigation Model, a priority search should be performed in the following order:
1. Search for the Navigationltem name starting at the currently selected Navigation Item and look in all children. If not found:
2. Search for the Navigationltem name starting at the NavigationModel root node of the currently selected Navigation Item and look in all children. If not found:
3. Search from other Root nodes in the NavigationModel for the Navigationltem name.

### 11.2.5.2 SetNavigationByPath

The *SetNavigation( URI* ) allows the caller to pass in a fully qualified Navigation Path. Assuming the path is valid, the Navigationltem should be immediately executed.

### 11.2.5.3 SetNavigationByAsset

The *SetNavigationByAsset( <Asset Name> )* allows the caller to pass in an asset name. The Navigation hierarchy will be searched for the asset name and be executed when found. As the Navigation Hierarchy could include the asset in multiple top level root nodes in the Navigation Model, a priority search should be performed in the following order:
4. Search for the asset starting at the currently selected Navigation Item and look in all children. If not found:
5. Search for the asset starting at the NavigationModel root node of the currently selected Navigation Item and look in all children. If not found:
6. Search from other Root nodes in the NavigationModel for the asset.

### 11.2.5.4 SetNavigationByArea

The *SetNavigationByArea( <Area Name> )* allows the caller to pass in an area name. The Navigation hierarchy will be searched for the area name and be executed when found. As the Navigation Hierarchy could include the area in multiple top level root nodes in the Navigation Model, a priority search should be performed in the following order:
1. Search for the area starting at the currently selected Navigation Item and look in all children. If not found:
2. Search for the area starting at the NavigationModel root node of the currently selected Navigation Item and look in all children. If not found:
3. Search from other Root nodes in the NavigationModel for the area.

### 11.2.6 Graphic Animation Support of Navigation

A new animation in the GraphicEditor will allow the user to configure an animation which matches the behavior of the following SDK calls:
- SetNavigationByName
- SetNavigationByAsset
- SetNavigationByArea

### 11.3 Properties which Publish Values

If the user performs an action which changes the currently selected item, the Navigation Service publishes values out to the well-known set of properties described in this section.

### 11.3.1 Selected Navigation - URI String Property

Publishes the full path of the selected navigation item triggered by the user.

### 11.3.2 SelectedNavigationParent - URI String Property

Publishes the parent URI of the selected item.

### 11.3.3 SelectedNavigationFirstChild - URI String Property

Publishes the full path of the selected navigation item's first child, if one is present.

### 11.3.4 SelectedNavigationContext - URI String Property

If a context NavigationModel is associated with the selected item, this property is published with the URI for that context.

### 11.3.5 SelectedAsset - String Property (not a URI)

If a Navigationltem has a context to the asset model, that asset should be published through this property to be used by other controls.

### 11.3.6 SelectedArea - String Property (not a URI)

If a Navigationltem has a context to the asset model, the area that asset is located in can be resolved and published though this property to be used by other controls.

### 11.4 Linking Hierarchy Controls for Advanced Behavior

The user can link two or more Hierarchy Controls together to achieve advanced behaviors in runtime. This allows multiple navigation controls to visually express a single Navigation Model in multiple ways. In design time the user would point the "NavigationModel" of one Hierarchy aware control to point to an existing Hierarchy aware control.

An example of how the user would wire together multiple navigation aware controls is shown in Fig. 50.

When the currently selected Navigation item changes in some way, the Navigation Model service is notified. The Navigation Model service then looks at all subscribers to the service. The selection change is sent to the first subscriber of the Navigation Model, which in this case is "HierarchyAwareControl1". This first control is linked directly against a node in the NavigationModel, and performs the following logic:
1. Decide if it's holding the selected item itself, and if so, visually select it.
2. If it's not holding the selected item itself, determine if it's holding a parent of the selected item, and if so, visually select it.
3. If both of the above are false, maintain the existing selection and do nothing, and do not forward the OnSelectedltemChanged to any subscribing controls.
4. If #1 or #2 happened and there are any subscribers to the control, publish the following to the next subscribed control(s).
   a. The new selected node at the current level. If # 1 was true, the current selection was changed, and the downstream control needs to refresh to reflect this new value.
   b. After refreshing the downstream control by reading the children and populating the view, go to step 1 and restart the logic.

### 12 Use of Navigation in ArchestrA Graphics

### 12.1 Hierarchy aware controls on the drawing canvas

The user has the ability to drop the navigation aware controls onto the drawing canvas and configure them in a similar fashion to configuring them in a pane. They should have identical behaviors with regard to rendering and runtime usage between a Pane and graphic canvas.

The user can utilize custom properties on the graphic for communication across multiple hierarchy aware controls, just like they would do with ViewApp Attributes when utilized in a Pane.

### 12.2 Context Menu Animation

A context menu animation will exist allowing the user to configure a Navigation Model to be shown using the visual representation of the "Menu Control" as described above.

### Appendix II : AutoFill Mode

### 13 Overview

This disclosure describes technology that provides AutoFillMode support on a navigation item. AutoFillMode is an algorithm that determines how different panes will be filled when Actions on the selected navigation item are executed. In some embodiments, the auto fill mode algorithm can consider factors such as:
- Content Type of contents and available panes.
- Already existing contents on a layout
- Clearing of the contents after the algorithm is done

The AutoFillMode can provide support for autofill of panes through navigation. The algorithm can work on both design time and runtime.

### Example Features

| | **Advantages** | **Approaches** |
|---|---|---|
| Performance | Faster application response | • Reducing number of iterations in the algorithm. |
| | | • Parallel Processing implementation. |
| | | • An action requires to show a content that is already existing on the pane will be skipped. |
| | Reduced CPU usage during call-up | |
| | Reduced CPU usage during steady-state | • At runtime, all the pane information and action information is cached |
| Memory | Optimized memory footprint | • Teardown and dispose of the objects are taken care so the memory is not sustained after algorithm is completed. |
| Robustness | No data loss or corruption | • |
| | Data integrity | • |
| | No intermittent issues | • Locks and concurrent dictionaries are used appropriately when reading and writing shared data to ensure there are no race conditions |
| | No thread deadlocks | • Access to shared data is minimized and locks are taken at appropriate granularity to avoid deadlocks |
| | No crash | • At runtime, any possible errors while loading the Navigations such as null exceptions, will be handled. |
| Maintainability | Simplified Design and implementation | • Optimal design |
| | | • The design is selected based on the SDK guidelines patterns |
| | Single responsibility classes and methods | • The logic for Autofill can all be maintained in one class. |
| | Components are de-coupled to promote reusability | • Navigation Actions are separated out in a different assembly in order to avoid dependency of ACF on Navigations |
| | User interface components are decoupled from the logic and logic components are not dependent on user interface assemblies and UI framework | • All the logic dealing with UI components are separately maintained from the model com ponents. |
| | | • All the UI logic are developed using a WPF MVVM pattern |
| Scalability | Processing high volume of data, large number of files, large data files | • The Navigation data can be published as a binary file. |
| | | • TPL will be used as necessary |
| | Performance does not degrade when scaling the application | • Task Parallelism used when publishing and loading the Navigations to ensure the operation is scalable. |
| | Utilize multiple cores | • Same as above |
| | Utilize hardware accelerations as applicable | • As the technology used for implementation is WPF which uses DirectX for rendering. |

### Example Features

1. The autofill algorithm, after it has run, determines what pane and which content to show. ShowContent API runs the BestMatchingPane algorithm under the ood and considers only one layout and does not look across all the visible layout. So, the autofill algorithm can avoid the BestMatchingPane algorithm by passing the strictly required parameters to ShowContent API.
2. Support of Navigation is provided in the Layout.
3. Nested layouts are considered as ShowContentAction to show the Layout in a pane.
4. Lock Panes support may be provided by ACF on Panes.
5. Navigation aware controls may be treated as any other content on a navigation item. It will be up to the user to configure the appropriate unique Content Type for the navigation aware controls so AutoFillPanes algorithm does replace it with other matching contents during the run.

### 14 Auto Fill Algorithm in Detail

### Overview

### AutoFillMode on Navigation Item:

NavigationItem class in the SDK layer can be updated to persist the AutoFillMode of a navigation item. This mode will be configured by the user in the View App editor. The AutoFillMode enum can be exposed in Navigation SDK component:
- None (Default Value of AutoFillMode enum)
- Fill From Current
- Fill From Current Then Go Up
- Fill From Current Then Go Up and Down

### AutoFill Panes Support:

A class AutoFillPanes is included in the navigation internal component. This class is responsible for running the auto fill panes algorithm for a selected navigation item based on its AutoFill Mode.

### [Deterministic Approach] : Get Pane. Find Matching Pane and Show Content:

When a navigation item is selected, an API "FillPanes()" on AutoFillPanes class will be invoked by the Navigation Item to determine what all content can be shown on the panes of a visible layouts. This will start autofill pane algorithm to run for the current selected item. This algorithm will run through the actions, list of pane determining based on various criteria such as content type matching, default content of layout, overrides of the content on layout, and/or the like at the view app level for a navigation item.

If a content is already shown on a pane, the same content will not be re-shown instead, AutoFill algorithm will skip it and execute the next action on an item.

In some embodiments, an example precedence considered to show content for a selected item can be as follows:
1. Show content actions corresponding to the content configured in the ViewAppEditor [i.e., view app content overrides] (dragged and dropped onto panes for a selected Navigation item).
2. Show content actions corresponding to the default content of a selected NavigationItem.
3. Show content actions corresponding to Layout default contents.

### AutoFillPanes Rules:

In some embodiments, various rules can be applied during the autofill. Some example rules include:
- Override an existing content of a pane:
   ∘ During autofill the show content actions can override the layout's default content.
- Clear content after the AutoFill run is completed.
   ∘ After the autofill is completed, if some panes remain unconsumed they will be cleared only if they do not have a content coming from the Layout itself (Layout's default content).
   ∘ If a content is configured onto a pane in the ViewAppEditor it may be overridden during autofill or cleared.

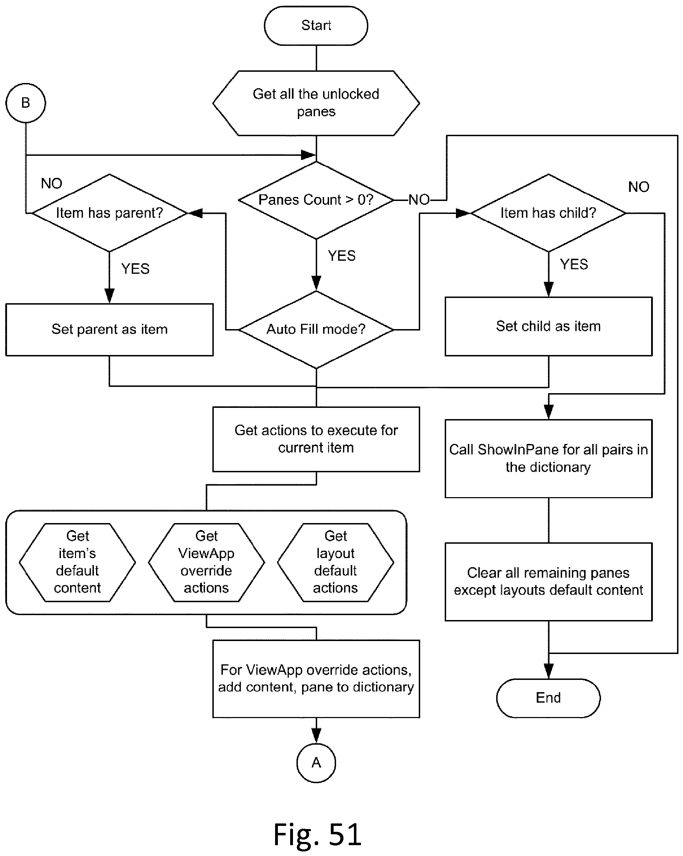

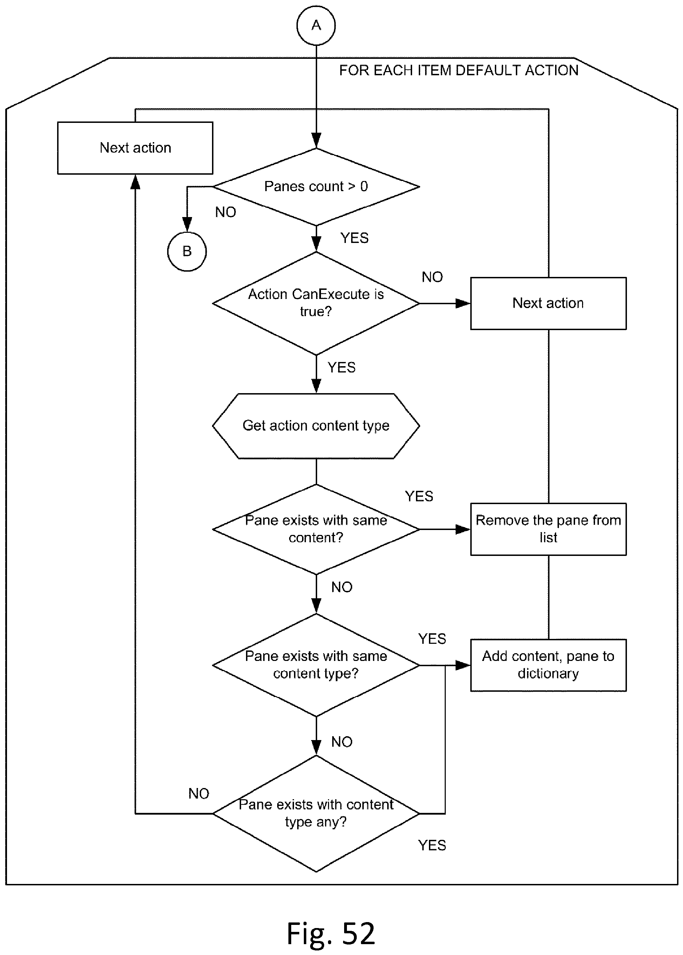

The flowchart of Fig. 51 and Fig. 52 explains the algorithm in detail.

While running the autofill for the current selected item, if there are still pane available to show the content, the algorithm recursively iterates through the current item's parent. The item's parent which is a Navigationitem is passed onto AutoFill method and is treated as current item in that scope.

Some of the advantages of the algorithm include:
∘ Deterministic approach - the algorithm does not rely on the Best Matching pane algorithm
∘ More control in skipping the showing of the same content that are already shown on pane
∘ Support of showing the content on multiple layouts

### Other Embodiments

### Use Best Matching Pane in AutoFill:

This approach involves the relying on Best Matching Pane inside of the AutoFillPanes algorithm. This approach supports showing of content only in Primary screen.

### APPENDIX III: NAVIGATION EXTENSION

### 1 Overview

This disclosure describes technology relating to navigation model extension which is exposed by SDK and the internal implementations of the same. This disclosure also describes the Asset hierarchy which is another extension exposed by SDK.

Some of the functionalities include:
- Improvements during publish supporting faster loading/management of multiple navigation models that can be consumed by the hierarchy aware controls.
- Navigation Load performance improvements
- Navigation in Live mode
- SDL Considerations
- Localization support

### 1.1.1 Example Feature: [Navigation] User can configure Navigation to an Asset Hierarchy

### 1.1.2 Example Associated Features

| **Description** |
|---|
| [Navigation] User can configure Navigation to an Asset Hierarchy |
| [Navigation] Configure navigation control for an application |
| [Navigation] Configure Navigation Model Asset hierarchy and Use in Runtime Tree navigation control |

### 1.2 Advantages

Some of the advantages of the disclosed technology are described in this section.

| | **Advantages** | **Example Approach** | |
|---|---|---|---|
| Performance | Faster application response | | |
| | Reduced CPU usage during call-up | | |
| | Reduced CPU usage during steady-state | • At runtime, the Navigations that are requested the Nav aware controls will be loaded and cached inside the Navigation Service extension so there is no frequent processing involved. | |
| Memory | Optimized memory footprint | • Class member fields have only absolute minimum required member fields. | |
| | | • Teardown and dispose of the objects and events will be taken care so the memory is not sustained after closing the application. | |
| Robustness | No data loss or corruption | • Any Navigation source is deleted which is still consumed in a Navigation control, a notification message will be shown to user. | |
| | Data integrity | • In the Config environment, the Navigation data may be stored in a binary form as blob in the VEDef attribute of the NavigationModel object and the IBrowse contract can be used to retrieve this information. As the data is stored in binary form only the NavigationModel and Navigation classes can understand the format to serialize and serialize the Navigation data, allowing one central location to maintain the consistency and accuracy. | |
| | | • At runtime, the Navigations data can be stored in binary format (e.g., in .aaNav file), so the navigation data is not tampered with. | |
| | No intermittent issues | • Locks and concurrent dictionaries are used appropriately when reading and writing shared data to ensure there are no race conditions | |
| | No thread deadlocks | • Access to shared data is minimized and locks are taken at appropriate granularity to avoid deadlocks | |
| | No crash | • At runtime, any possible errors while loading the Navigations such as .aaNav file not found, can be handled. | |
| | | • Exception handling is in place to address any possible exceptions occurring during configuration and runtime environment. | |
| Maintainability | Simple design and implementation | • Optimal design | |
| | | • Selected based on, for e.g., the SDK guidelines patterns | |
| | Single responsibility classes and methods | • The logic for configuring, publishing, loading, consuming the navigation model can be maintained separately. | |
| | Components are de-coupled to promote reusability | | • The logic for subscribing for data changes, compilation of References is already encapsulated into the runtime Data support components which can be consumed for Navigation item and navigation model expression binding as well. |
| | | | • The Configuration, publish and Runtime capabilities are de-coupled and encapsulated into different components like Navigation Editor, Navigation Publisher and Navigation Service, AsetHierarchy Service. The concrete implementation may be separated out from the SDK contracts. |
| | | | • A separate component can be created for the localizable strings. This may be commonly used in Navigations and any other components that may require localization support. |
| | User interface components are decoupled from the logic and logic components are not dependent on user interface assemblies and UI framework | • All the logic dealing with UI components may be separately maintained from the model components. | |
| | | • All the UI logic may be developed using a WPF MVVM pattern for example | |
| Scalability | Allows processing of high volume of data, large number of files, large data files | • The Navigation data may be published as a binary file. | |
| | | • TPL may be used as necessary | |
| | Performance does not degrade when scaling the application | • Task Parallelism used when publishing and loading the Navigations to ensure the operation is scalable. | |
| | Utilize multiple cores | • Same as above. | |
| | Utilize hardware accelerations as applicable | • Technology that can be used for implementation is WPF which uses DirectX for rendering. | |

### 1.3 Example features

1. The Navigation Item properties like Text, Secondary Text etc., may be Localizable.
2. Supports Expression binding to the Navigation Items.
3. APIs exposed in ACF SDK for accessing the Navigations capabilities are simple and easy to use for the content developers.
4. The Navigation Items and commands associated to them are extensible.
5. The Nav aware control are designed and developed on top of SDK.
6. The Navigation and Asset Hierarchy Extensions are targeted to be used in both Design time and runtime environments.
7. The Navigation Context sharing is possible.

### 2 Embodiments in Detail

### 2.1 Overview

### 2.1.1 Example Embodiments

### Navigation in SDK:

- The technology includes an SDK component for the Navigation Mode.
- The technology includes a separate SDK component for the Asset Hierarchy Extension.
- The SDK component defines the classes for the navigation item and navigation model. These classes may be exposed as abstract class thus providing extensibility to have different types of the Navigation Items and model created in future.
- These abstract classes may expose all the necessary properties which may be then overridden in the extension component to provide the complex implementation. If the implementation is simple and is not likely to change in the future then such implementation may be provided in the abstract classes.
- The NavModel represents one Navigation Model in the system. It comprises of collection of Navigation Items. It may support version information providing flexibility to manage the different versions of the Navigation model. On a high level, it can provide the following:
   ∘ Name of the Navigation Model
   ∘ Version
   ∘ Collection of Navigation Items
- The Navltem represents one navigation item within a system. This class would be extensible to support any kind of Navigation item.

On a high level it can comprise of the following
∘ Full path /URI of the navigation Item. This would be the full path of an asset if the navigation item has a context into an asset hierarchy.
∘ List of commands
∘ List of child navigation items
∘ If the NavItem has a context into Asset Hierarchy, it will get the Hierarchy by interacting with the Asset Hierarchy SDK class to retrieve the hierarchy items. The hierarchy items would then by converted to the Navltem and sent back to the requesting Hierarchy aware control.

### • User facing SDK class:

∘ There would be static public class "NavigationExtension" exposed in the SDK Navigation component under the namespace ArchestrA.Visualization.Navigation.
∘ This will be the main top level class which will be used by the Hierarchy aware controls. Under the hood, the concrete implementation APIs would be called by means of ACF Core SDK APIs like App.GetService(). The reference to the concrete implementation class of navigation extension will be retrieved by making a call to App.GetService() and passing the type of the navigation internal component.
∘ The NavigationExtension entry class would return a pointer to the NavigationModel class, using which user can fetch and operation on the given navigation model.

### Navigation in Concrete Implementation component:

- In the concrete implementation component of the Navigation extension, there would be concrete classes implementing the abstract base classes from SDK component.
- The concrete implementation classes for the abstract classes are following.
   ∘ NavigationModels - the main ACF instantiated service class, responsible for maintaining a list of already loaded navigation models.
   ∘ NavigationModelInternal - A class to represent the Navigation Model
   ∘ NavigationItemInternal - A concrete class for the SDK Navigation item class
   ∘ AssetNavigationItemInternal - A concrete class for the AssetNavigationltem class
   ∘ ChildAssetNavigationItemInternal - A concrete class for the ChildAssetNavigationitem for which has a context into an asset model
- The Navigation Service class which serves as the Navigation extension would hold a reference to of the type *INavModelProvider.* Based on the runtime or design time environment there would be one type implementing this interface.

### ∘ Runtime Environment:

▪ In the runtime environment, the information about the requested NavModel will be provided by the class NavigationFileProvider which implements *INavModelProvider.*
▪ This NavigationFileProvider looks for the .aaNav file with the given navigation Model name and load the .aaNav file content as Blob and de-serialize the NavigationModel and return to the Caller.

### ∘ Design time Environment:

▪ In configuration mode, a component *ArchestrA.Visualization.NavConfiguration* will provide the blob from the Galaxy (retrieved via IConfig) by means of *INavModelProvider.*

### • Expression Configuration on a Navigation Item:

∘ The runtime data components will be used to provide the support for the expression binding to a navigation item.
∘ Expressions will be compiled and stored in a tabular format inside the Navigation Model blob.
∘ These expressions and reference tables will be published inside a .aaNav file
∘ During the runtime load, the expressions, references, connection string will loaded into memory and references will be subscribed for the data changes.
∘ The loading of the expression related tables will be done in parallel to improve the load time performance.
∘ GRM and Display Binding can be referred for more details into this expressions configuration.

### Consuming Navigation SDK in Hierarchy Aware controls:

- Hierarchy aware controls like NavigationTree control will consume the SDK (via NuGet) and call into the APIs to load the Navigation model that it is pointing to.
- The Navigation tree control will access the static class "NavigationExtension" from SDK which is present in the namespace ArchestrA.Visualization.Navigation.
- Following is a typical example of the flow of call inside a Navigation tree.

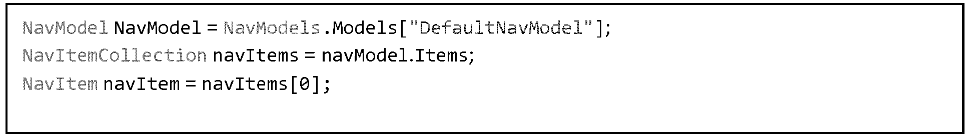

### Asset Hierarchy in SDK core extension contracts:

- Asset hierarchy is an extension contract exposed by SDK.
- The data classes representing a hierarchy item will be exposed under SDK component.
- There would be a public static class "HierarchyExtension" serving as a user facing class from the SDK.
- The Navltem class inside SDK would be referring to the Hierarchy Item. This would be needed to get the hierarchy of a Navltem which is having a context into the Asset hierarchy.

### Asset Hierarchy in Concrete Implementation component:

- At any point of time, the hierarchy can be retrieved from two kinds of providers-
   ∘ From the Galaxy via IBrowse -There would be a component to retrieve the hierarchy from the galaxy. This will be achieved by an internal component called ProjectHierarchyManager.
   ∘ From the published hierarchy file -There would be a separate component to retrieve the hierarchy from the published xml file. This component will be called PublishedHierarchyManagerThere would be a class " which will serve as the implementation class of the Asset hierarchy extension.
- The Hierarchy Internal class would maintain a reference of type IHierarchyProvider. With the help of this reference the hierarchy will be retrieved for the respective provider.

### Navigation Editor:

For the configuration of Navigation Model, Navigation Editor Component can be created which will provide all configuration capabilities for the Navigation Items and actions

On a high level, here are the example operations that may be provided by the Editor.
- Showing of the Navigation Model as virtual root. This enables performing of various operations like adding/Removing a navigation item to the model, persisting the changes.
- Same runtime navigation tree can be used in editor. This navigation editor tree may be inherited from the runtime navigation tree control and all the common capabilities of Navigation tree may be re-used and overridden as appropriate in design time.
- The configuration to the navigation model may be persisted in _VEDef attribute of the navigation model object instance.

### Publishing of Navigation Models:

- A separate navigation publisher component can be created whose responsibility is to publish all the instances of Navigation Model object present in the Galaxy.
- The Navigation Model can be published in formats such as:
   ∘ Binary Format - The binary file extension would be .aaNav file
   ∘ Xml Format -The navigation model will be published as xml. This would be helpful for the programmatic access.
- The navigation model files may be published under the Services folder of a view application. All the navigation models corresponding to one Galaxy/Project may be located under a folder having the name of the galaxy.
- During the publish operation of Navigation Models, if the system runs into any errors while retrieving the details of a particular navigation model then the erratic navigation model may be skipped and an error may be logged to notify the user. In such case, publish can continue with other navigation models.
- If system fails to retrieve the list of the Navigation models then the total publish operation will be failed.

Some of the advantages of the disclosed technology include:
- Ease of use for the third party SDK developer
- Leverage ACF Core capabilities

### Navigation in Runtime:

The navigation tree can request the configured navigation model to load by interacting with the Navigation SDK component.

When the navigation tree is loaded a first navigation item can be selected by default and all its associated actions will be executed in a synchronous order.

Also, the contextual properties related to navigation can be set by the Navigation tree control.

### 2.1.2 Alternative Embodiments

Reflection based retrieval for the Core extension implementation.
- In the User facing SDK class, under the hood use the reflection to create/retrieve the instance of the concrete implementation class of the core extension.
- No exposing of any interfaces from SDK to be implemented by the concrete extension class. However, it may not be possible to do type checking during the compile time and there may be reduced maintainability of the code

### 2.2 Subsystem Integration

The SDK core extension contracts and the concrete implementation components may be residing inside the CoreServices subsystem.

### APPENDIX IV: NAVIGATION INTEGRATION WITH LAYOUT EDITOR

### 1 Overview

The disclosure describes technology for integrating a Navigation Model into the Layout editor both in Design time and runtime environments ("disclosed technology").

In some embodiments, the disclosed technology can be driven by a feature wherein user utilizes built-in Navigation Apps to use in runtime applications. Various aspects relating to Navigation are described in detail in Appendix I.

### 1.1 Advantages of the disclosed technology

| | **Example Advantages** | **Example Approaches** | |
|---|---|---|---|
| Performance | Faster application response | • MEF component can be loaded based on the need. | |
| | | • Parallel processing performed wherever applicable. | |
| | Reduced CPU usage during call-up | • | |
| | Reduced CPU usage during steady-state | At runtime, the Navigations that are requested by the Layouts can be loaded and cached inside the Navigation Model internal component so there is no frequent processing involved. | |
| Memory | Optimized memory footprint | • Class member fields may have only absolute minimum required member fields. | |
| | | • Teardown and dispose of the objects and events can be taken care so the memory is not sustained after closing the application. | |
| Robustness | No data loss or corruption | • The link between the contents and Navigation Action can be stored as VERL so that user can informed about the references of the content in layout he tries to Delete the content from the system | |
| | Data integrity | | • At runtime, the Navigations data will be stored in a suitable format (e.g., binary format, in .aaNav file), so the navigation data is not tampered with. |
| | No intermittent issues | • Locks and concurrent dictionaries are used appropriately when reading and writing shared data to ensure there are no race conditions | |
| | No thread deadlocks | • Access to shared data is minimized and locks are taken at appropriate granularity to avoid deadlocks | |
| | No crash | • At runtime, any possible errors while loading the Navigations such as .aaNav file not found, may be handled. | |
| | | • Exception handling may be in place to address any possible exceptions occurring during configuration and runtime environment. | |
| Maintainability | Simple Design and implementation | • Optimal design, e.g., selected based on the SDK guidelines patterns | |
| | Single responsibility classes and methods | • The logic for configuring, discovering the Navigations, publishing, loading, may be maintained separately into the different components. | |
| | Components are de-coupled to promote reusability | • Navigation Actions are separated out in a different assembly in order to avoid dependency of ACF on Navigations | |
| | User interface components are decoupled from the logic and logic components are not dependent on user interface assemblies and UI framework | • All the logic dealing with UI components may be separately maintained from the model components. | |
| | | • All the UI logic may be developed using a WPF MVVM pattern | |
| Scalability | Enables processing of high volume of data, large number of files, large data files | • The Navigation data may be published as a binary file. | |
| | | • TPL may be used as necessary | |
| | Performance does not degrade when scaling the application | • Task Parallelism may be used when publishing and loading the Navigations to ensure the operation is scalable. | |
| | Utilize multiple cores | • Same as above. | |
| | Utilize hardware accelerations as applicable | • As the technology used for implementation is WPF, WPF uses DirectX for rendering. | |

### 1.2 Example Features

The disclosed technology can include the following features.
8. Utilize Navigation via SDK in the Layout editor.
9. Utilize Navigation Action to derive the showing of content on a Layout
10. Store content overrides in Navigation action
11. Provide the Extensibility on using Navigation Actions in Layout editor

In some embodiments, SDK Feature can provide a full support on loading the SDK assemblies and its dependent assemblies based on MEF. Common Editor Framework may be used to Load and Save the Layouts in the system.

### 2 Embodiments of the disclosed technology

### 2.1 Overview

In some embodiments, when the Layout (e.g., an instance of $screen object) is created in the system, by default a NavigationModel comprising a single NavigationItem can be created. This Navigation Item can be a container for storing the actions corresponding to each of the contents associated to the Panes on the Layout. At runtime, when the Layout is shown, the contents can be shown on the Layout by means of Navigation actions.

### Navigation in Layout Editor:

A new component called "Layout container" can be created which will host the Navigation model inside it. This component is responsible for the saving and Loading of the Layout and its underlying Navigation model.

The following describes how a Navigation Model can be utilized in Layout in some embodiments.

### Configuration:

### • Editing:

∘ "Layout Container" component is used to interface with the Navigation Model and Layout Model in the Layout editor.
∘ When a Layout is created, a Navigation Model with one NavigationItem (RootNavigationItem) is created by the system.
∘ In the Layout editor, when user drags and drops a content onto a Pane
   ▪ A ShowContentAction is created to show the dropped content on the pane.
   ▪ The ShowContentAction stores the information of
      - The Pane
      - The Layout
      - The content that is to be shown on the Pane.
∘ When a Pane is deleted its corresponding Action is also deleted from the underlying Navigation Model.
∘ If an existing content of the Pane is being replaced by another one, the Navigation Model is updated appropriately to update the action with the new content information in the Navigation Action.

### • Saving:

∘ The Layout information can be serialized into Blob.
∘ The Navigation Model can be serialized into Blob.
∘ A VERL is saved for the content that are saved into Navigation Action.
∘ A class is created for managing the VERL for the content. This class is responsible for saving, loading and syncing up with the VERL list in Project.
∘ The combined blob of the Layout and Navigation Model may be saved into _VisualElementDefinition attribute of the Layout object (currently an instance of $Screen object)
∘ The VERL attribute of the Layout object may be set.
∘ The _Thumbnail attribute of the Layout object may also be set.
∘ All the Save operations may happen via an Editor common framework to set the attributes.

### • Loading in Design Time:

∘ The blob from _VEDef attribute is loaded for the Layout instance.
∘ This blob is de-serialized into the Layout and Navigation Model by calling into the Layout Model and Navigation Model Deserialization respectively.
∘ The _Thumbnail attribute is also fetched and de-serialized to be shown in the UI.

### Publish:

∘ Layout (as xml files) and Navigation Model (as .aaNav files) may be published separately.
∘ During the publishing of Layouts (instances of $Screen object) the Navigation Model information is extracted out and this Navigation Blob is passed on to the Navigation publisher component, which is responsible for publishing the Navigation into .aaNav file. The name of the Navigation model file can be same as that of the Layout name. As the objects are unique by name in the system, there will not be any conflicts about the name of Navigation model file.
∘ The existing publish operation is not impacted negatively with this change. Instead of browsing of Navigation Model objects from project (as it is supported today in Modern IDE), the Navigation Blob may be retrieved from Screen object's VEDef blob.
∘ The existing Navigation Publisher component can be updated minimally to output the Navigation Model at the location of the Layout xml files in the published view app.
∘ The Layout can be published in the Layout folder of the View Application
∘ The Navigation Model of the Layout can be published in the location Layout folder as <Layout Name>.aaNav
∘ The Navigation Model of a ViewApp can be placed in another Application level configuration settings folder.

### Runtime Environment:

In runtime environment, in some embodiments, when the Application is started, the Startup Layouts is loaded and shown on the configured screens.

The Navigation Integration with the ViewApp and overrides at the ViewApp level can be designed in the view App.

The Layout container which serves as the Navigation Model host component for the Layouts, loads the Navigation Model for the Layout that is to be shown on screen. From the Navigation Model's root Navigation Item (which was created by the system during the content configuration onto Layout), all the ShowContent Actions may be executed in order and the Content can be shown on the Layout by using the ACF ShowContent Service APIs.

In some embodiments, the following steps may be taken.
- ACF core residing in Client's subsystem refers to the Layout Container component that is residing in "SDK" subsystem.
- Application is launched
- ACF core App class loads the startup Layouts by loading the layout xml files
- To Show the default content on those layouts, Navigation model for those layout needs to be loaded.
- ACF App class interacts with the Layout Container component to Load the Navigation Model for a given startup layout.
- Layout container exposes APIs to Load & Execute Actions of the Root Item of Layout's Navigation Model.
   ∘ Layout Container Loads the Navigation Model by interacting with the Navigation SDK.
   ∘ After the NavigationModel is loaded, all the actions of the Root Item are executed by calling into Navigation SDK APIs as exposed by the Navigation Item.

### Components Interaction & Organization:

An example technique implemented on the Navigation side in-order to integrate it with the Layout Editor will now be described.

### Integration of Navigation SDK with SDK Subsystem:

The Navigation SDK components may reside in the Core Services subsystem. In order to utilize the SDK (based on MEF) this Navigation SDK component can be moved to the SDK subsystem and SDK MEF will be integrated into Navigation.

The internal concrete components of the Navigation can continue to reside in Core-Services because of the internal dependencies like dependencies on ACF core implementation.

### Separation of Navigation Actions from the Navigation Internal component:

Navigation Actions concrete implementation can be separated out from the Navigation Internal component to avoid any direct dependencies on Navigation Model of the ACF core.

This Navigation Action internal assembly may be residing in "Client" subsystem as it has complete dependencies on ACF core for showing the Content/Layout.

### Plugging Navigation into Layout editor:

A MEF based helper component helps discover & instantiate the Navigation Model/Navigation Item/Navigation Action. This can be a simple and re-usable component using MEF2 around the Navigation. This component can expose the Factory like classes/APIs which can be called into by the Layout Container component. The pluggable actions design involves usage of the factory classes using MEF2.

This is a simple re-usable component which can be referred to by the Layout Container component. As the Layout Container is residing in SDK subsystem, this component can also reside in the "SDK" subsystem.

### Layout Container:

A new component can host the NavigationModel and Layout Model. This component acts as interfacing component for interacting with Layout Model and Navigation Model inside the Layout editor.

This component can reside in the "SDK" subsystem.

## Claims

1. Automated graphical user interface configuration system comprising:
at least one configuration processor; and
one or more processor-executable instructions stored on at least one computer- readable storage medium of the automated graphical user interface configuration system, said processor-executable instructions including instructions that, when executed by the at least one configuration processor:
display a navigation model (300), the navigation model (300) comprising a hierarchy of navigation items (302),
wherein navigation items (302) include an auto-fill behavior;
receive a selection of one of the navigation items (302) via an input device;
traverse, in response to said receiving, the navigation model (300) to locate one or more other navigation items (302) thereof having metadata associated with the selected navigation item (302);
generate, in response to said locating, a graphical user interface screen having a plurality of panes (602-610); and
automatically populate, in response to said generating, at least one of the panes (602-610) with visual content representing the selected navigation item (302) and at least one of the remaining panes (602-610) of the plurality with visual content representing each of the one or more located navigation items (302); and
execute auto-filling, which includes one or more options to control how content is automatically injected into panes (602-610) without the user having to individually configure a view,
wherein before auto-filling is executed, appropriate layouts must be applied to available screens, wherein the layouts are determined by looking at the selected navigation item (302) to determine if there are any specific layouts that should be applied to the screens,
wherein if any screens are still empty without layouts, a parent navigation item (302) is queried to continue to search for layouts appropriate for screens,
wherein this continues until a root node of the hierarchy of the navigation model (300) is reached, or all screens have layouts.

2. Automated graphical user interface configuration system according to claim 1, wherein when executing auto-filling, the auto-filling looks for layouts that initially fill the screens prior to determining which content should be displayed in particular panes (602-610).

3. Automated graphical user interface configuration system according to claim 2, wherein the selected navigation item (302) is inspected for any commands that place layouts or contents in a full screen, and if any screens are still empty, the auto-filling looks up to the parent navigation item (302) for additional commands, relating to layout or screen, to apply to the empty screens,
and for any panes that are still empty, the auto-filling looks up to the parent navigation item (302) for additional commands or content to apply to the empty panes,
which continues until all panes are filled or the root of the navigation model (300) is reached.

4. Automated graphical user interface configuration system according to claim 3, wherein when the auto-filling has reached the root of the navigation model (300) and there are still empty screens or panes, a first child of the selected navigation item (302) is inspected to see if it has content that applies to the available screens or panes.

5. Automated graphical user interface configuration system according to any of the preceding claims, further comprising processor-executable instructions stored on the at least one computer-readable storage medium that, when executed by the at least one configuration processor, update, in response to said receiving, one or more context attributes of the selected navigation item to update the visual content representing the selected navigation item (302), and/or
further comprising processor-executable instructions stored on the at least one computer- readable storage medium that, when executed by the at least one configuration processor, manage the automatic population of the panes (602-610) with visual content across a plurality of display devices.

6. Automated graphical user interface configuration system according to any of the preceding claims, wherein the navigation items (302) each represent a device of an process control system.

7. Automated graphical user interface configuration system according to any of the preceding claims, wherein the navigation items (302) are arranged hierarchically within the navigation model (300).

8. Automated graphical user interface configuration system according to claim 7, wherein the navigation model (300) defines the hierarchy of navigation items (302), the visual content representing each navigation item (302), and actions to execute when each navigation item (302) is selected.

9. Automated graphical user interface configuration system according to any of the preceding claims, wherein the navigation model (300) defines navigation through a plurality of generated graphical user interface screens.

10. Computer-implemented method comprising:
displaying, by an application executing on a computing device, a navigation model (300), wherein the navigation model (300) includes a hierarchy of navigation items (302),
wherein navigation items (302) include an auto-fill behavior;
receiving, by the application, a selection of one of the navigation items (302) from an input device;
traversing, by the application in response to said receiving, the navigation model (300) to locate one or more other navigation items (302) of the navigation model (300) having metadata associated with the selected navigation item (300);
generating, by the application in response to locating the one or more other navigation items (302), a graphical user interface screen having a plurality of panes (602610); and
populating, by the application, at least one of the panes (602-610) with visual content representing the selected navigation item (300) and at least one of the remaining panes (602-610) of the plurality with visual content representing each of the one or more located navigation items (302), wherein the application performs said populating automatically in response to said generating; and
executing auto-filling, which includes one or more options to control how content is automatically injected into panes (602-610) without the user having to individually configure a view,
wherein before auto-filling is executed, appropriate layouts must be applied to available screens, wherein the layouts are determined by looking at the selected navigation item (302) to determine if there are any specific layouts that should be applied to the screens,
wherein if any screens are still empty without layouts, a parent navigation item (302) is queried to continue to search for layouts appropriate for screens,
wherein this continues until a root node of the hierarchy of the navigation model (300) is reached, or all screens have layouts.

11. Computer readable storage device having processor readable instructions stored thereon including instructions that, when executed by a processor, implement a method of automatically configuring a graphical user interface, comprising:
displaying a navigation model (300), wherein the navigation model (300) comprises a plurality of navigation items (302) arranged hierarchically,
wherein navigation items (302) include an auto-fill behavior;
receiving a selection of one of the navigation items (302) from an input device;
traversing the navigation model (300) to locate one or more other navigation items (302) of the navigation model (300) having metadata associated with the selected navigation item (302);
generating a graphical user interface screen having a plurality of panes (602-610); and
populating at least one of the panes with visual content representing the selected navigation item (302) and at least one of the remaining panes of the plurality with visual content representing each of the one or more located navigation items (302), wherein the application performs said populating automatically in response to said generating; and
executing auto-filling, which includes one or more options to control how content is automatically injected into panes (602-610) without the user having to individually configure a view,
wherein before auto-filling is executed, appropriate layouts must be applied to available screens, wherein the layouts are determined by looking at the selected navigation item (302) to determine if there are any specific layouts that should be applied to the screens,
wherein if any screens are still empty without layouts, a parent navigation item (302) is queried to continue to search for layouts appropriate for screens,
wherein this continues until a root node of the hierarchy of the navigation model (300) is reached, or all screens have layouts.

## Patentansprüche

1. Automatisiertes System zur Konfiguration einer grafischen Benutzeroberfläche, umfassend:
mindestens einen Konfigurationsprozessor; und
eine oder mehrere prozessorausführbare Anweisungen, die auf mindestens einem computerlesbaren Speichermedium des automatisierten grafischen Benutzerschnittstellen-Konfigurationssystems gespeichert sind, wobei die prozessorausführbaren Anweisungen enthalten, die, wenn sie von dem mindestens einen Konfigurationsprozessor ausgeführt werden:
ein Navigationsmodell (300) anzeigen, wobei das Navigationsmodell (300) eine Hierarchie von Navigationselementen (302) umfasst,
wobei die Navigationselemente (302) ein automatisches Ausfüllverhalten aufweisen;
eine Auswahl eines der Navigationselemente (302) über ein Eingabegerät empfangen;
in Reaktion auf den Empfang das Navigationsmodell (300) durchlaufen, um ein oder mehrere andere Navigationselemente (302) darin zu lokalisieren, die Metadaten aufweisen, die mit dem ausgewählten Navigationselement (302) verbunden sind;
in Reaktion auf die Lokalisierung einen grafischen Benutzerschnittstellenbildschirm mit einer Vielzahl von Bereichen (602-610) erzeugen; und
in Reaktion auf das Erzeugen mindestens einen der Bereiche (602-610) mit visuellem Inhalt,
der das ausgewählte Navigationselement (302) repräsentiert, automatisch auffüllt und
mindestens einen der verbleibenden Bereiche (602-610) der Vielzahl mit visuellem Inhalt auffüllt, der jedes der einen oder mehreren lokalisierten Navigationselemente (302) repräsentiert; und
automatisches Bestücken ausführt, das eine oder mehrere Optionen enthält, um zu steuern,
wie der Inhalt automatisch in die Bereiche (602-610) eingefügt wird, ohne dass der Benutzer eine Ansicht individuell konfigurieren muss,
wobei bevor das automatische Ausfüllen ausgeführt wird, geeignete Layouts auf verfügbare Bildschirme angewendet werden müssen, wobei die Layouts bestimmt werden, indem das ausgewählte Navigationselement (302) betrachtet wird, um zu bestimmen, ob es irgendwelche spezifischen Layouts gibt, die auf die Bildschirme angewendet werden sollten, wobei, wenn irgendwelche Bildschirme noch ohne Layouts sind, ein übergeordnetes Navigationselement (302) abgefragt wird, um mit der Suche nach für Bildschirme geeigneten Layouts fortzufahren,
wobei dies fortgesetzt wird, bis ein Wurzelknoten der Hierarchie des Navigationsmodells (300) erreicht ist oder alle Bildschirme Layouts haben.

2. Automatisiertes System zur Konfiguration einer grafischen Benutzeroberfläche nach Anspruch 1, wobei beim Ausführen des automatischen Ausfüllens das automatische Ausfüllen nach Layouts sucht, die initial die Bildschirme ausfüllen, bevor bestimmt wird, welcher Inhalt in bestimmten Bereichen (602-610) angezeigt werden soll.

3. Automatisiertes System zur Konfiguration einer grafischen Benutzeroberfläche nach Anspruch 2, wobei das ausgewählte Navigationselement (302) auf alle Befehle untersucht wird, die Layouts oder Inhalte in einem Vollbild platzieren, und wenn irgendwelche Bildschirme noch leer sind, das automatische Ausfüllen bis zum übergeordneten Navigationselement (302) nach zusätzlichen Befehlen sucht, die sich auf das Layout oder den Bildschirm beziehen, um sie auf die leeren Bildschirme anzuwenden,
und für alle noch leeren Bereiche die automatische Ausfüllung bis zum übergeordneten Navigationselement (302) nach zusätzlichen Befehlen oder Inhalten sucht, die auf die leeren Bereiche anzuwenden sind,
welches so lange fortgesetzt wird, bis alle Bereiche gefüllt sind oder die Wurzel des Navigationsmodells (300) erreicht ist.

4. Automatisiertes System zur Konfiguration einer grafischen Benutzeroberfläche nach Anspruch 3, wobei, wenn das automatische Ausfüllen die Wurzel des Navigationsmodells (300) erreicht hat und immer noch leere Bildschirme oder Bereiche vorhanden sind, ein erstes untergeordnetes Element des ausgewählten Navigationselements (302) daraufhin untersucht wird, ob es Inhalte hat, die auf die verfügbaren Bildschirme oder Bereiche anwendbar sind.

5. Automatisiertes System zur Konfiguration einer grafischen Benutzeroberfläche nach einem der vorhergehenden Ansprüche, ferner umfassend prozessorausführbare Anweisungen, die auf dem mindestens einen computerlesbaren Speichermedium gespeichert sind und die, wenn sie von dem mindestens einen Konfigurationsprozessor ausgeführt werden, in Reaktion auf den Empfang ein oder mehrere Kontextattribute des ausgewählten Navigationselements aktualisieren, um den visuellen Inhalt zu aktualisieren, der das ausgewählte Navigationselement (302) repräsentiert, und/oder ferner umfassend prozessorausführbare Anweisungen, die auf dem mindestens einen computerlesbaren Speichermedium gespeichert sind und die, wenn sie von dem mindestens einen Konfigurationsprozessor ausgeführt werden, das automatische Bestücken der Bereiche (602-610) mit visuellem Inhalt über eine Vielzahl von Anzeigevorrichtungen verwalten.

6. Automatisiertes System zur Konfiguration einer grafischen Benutzeroberfläche nach einem der vorhergehenden Ansprüche, wobei die Navigationselemente (302) jeweils ein Gerät eines Prozesssteuerungssystems repräsentieren.

7. Automatisiertes System zur Konfiguration einer grafischen Benutzeroberfläche nach einem der vorhergehenden Ansprüche, wobei die Navigationselemente (302) hierarchisch innerhalb des Navigationsmodells (300) angeordnet sind.

8. Automatisiertes System zur Konfiguration einer grafischen Benutzeroberfläche nach Anspruch 7, wobei das Navigationsmodell (300) die Hierarchie der Navigationselemente (302), den visuellen Inhalt, der jedes Navigationselement (302) repräsentiert, und die Aktionen, die auszuführen sind, wenn das jeweilige Navigationselement (302) ausgewählt wird, definiert.

9. Automatisiertes System zur Konfiguration einer graphischen Benutzeroberfläche nach einem der vorhergehenden Ansprüche, wobei das Navigationsmodell (300) die Navigation durch eine Vielzahl von erzeugten graphischen Benutzeroberflächenbildschirmen definiert.

10. Computer-implementiertes Verfahren, umfassend:
Anzeigen eines Navigationsmodells (300) durch eine auf einem Computergerät ausgeführte Anwendung, wobei das Navigationsmodell (300) eine Hierarchie von Navigationselementen (302) enthält,
wobei die Navigationselemente (302) ein automatisches Ausfüllverhalten aufweisen;
Empfangen einer Auswahl eines der Navigationselemente (302) von einer Eingabevorrichtung durch die Anwendung;
Durchlaufen des Navigationsmodells (300) durch die Anwendung in Reaktion auf den Empfang, um ein oder mehrere andere Navigationselemente (302) des Navigationsmodells (300) zu lokalisieren, die Metadaten aufweisen, die mit dem ausgewählten Navigationselement (300) verbunden sind;
Erzeugen, durch die Anwendung in Reaktion auf das Lokalisieren des einen oder der mehreren anderen Navigationselemente (302), eines graphischen Benutzerschnittstellenbildschirms mit einer Vielzahl von Bereichen (602-610); und
Bestücken, durch die Anwendung, mindestens eines der Bereiche (602-610) mit visuellem Inhalt, der das ausgewählte Navigationselement (300) repräsentiert, und mindestens eines der verbleibenden Bereiche (602-610) der Vielzahl mit visuellem Inhalt, der jedes des einen oder der mehreren lokalisierten Navigationselemente (302) repräsentiert, wobei die Anwendung das Bestücken automatisch in Reaktion auf das Erzeugen durchführt; und
Ausführen des automatischen Ausfüllens, das eine oder mehrere Optionen enthält, um zu steuern, wie der Inhalt automatisch in die Bereiche (602-610) eingefügt wird, ohne dass der Benutzer eine Ansicht individuell konfigurieren muss,
wobei vor der Ausführung des automatischen Ausfüllens geeignete Layouts auf verfügbare Bildschirme angewendet werden müssen, wobei die Layouts bestimmt werden, indem das ausgewählte Navigationselement (302) betrachtet wird, um zu bestimmen, ob es irgendwelche spezifischen Layouts gibt, die auf die Bildschirme angewendet werden sollten, wobei, wenn irgendwelche Bildschirme immer noch ohne Layouts sind, ein übergeordnetes Navigationselement (302) abgefragt wird, um die Suche nach für Bildschirme geeigneten Layouts fortzusetzen,
wobei dies fortgesetzt wird, bis ein Wurzelknoten der Hierarchie des Navigationsmodells (300) erreicht ist oder alle Bildschirme Layouts haben.

11. Computerlesbare Speichervorrichtung mit darauf gespeicherten prozessorlesbaren Befehlen, die Befehle enthalten, die, wenn sie von einem Prozessor ausgeführt werden, ein Verfahren zum automatischen Konfigurieren einer grafischen Benutzerschnittstelle implementieren, umfassend:
Anzeigen eines Navigationsmodells (300), wobei das Navigationsmodell (300) eine Vielzahl von Navigationselementen (302) umfasst, die hierarchisch angeordnet sind,
wobei die Navigationselemente (302) ein automatisches Ausfüllverhalten aufweisen;
Empfangen einer Auswahl eines der Navigationselemente (302) von einer Eingabevorrichtung;
Durchlaufen des Navigationsmodells (300), um ein oder mehrere andere Navigationselemente (302) des Navigationsmodells (300) mit Metadaten zu lokalisieren, die mit dem ausgewählten Navigationselement (302) verbunden sind;
Erzeugen eines graphischen Benutzerschnittstellenbildschirms mit einer Vielzahl von Bereichen (602-610); und
Bestücken mindestens eines der Bereiche mit visuellem Inhalt, der das ausgewählte Navigationselement (302) repräsentiert, und mindestens eines der verbleibenden Bereiche der Vielzahl mit visuellem Inhalt, der jedes der ein oder mehreren lokalisierten Navigationselemente (302) repräsentiert, wobei die Anwendung das Bestückens automatisch als Reaktion auf das Erzeugen durchführt; und
Ausführen des automatischen Ausfüllens, das eine oder mehrere Optionen enthält, um zu steuern, wie der Inhalt automatisch in die Bereiche (602-610) eingefügt wird, ohne dass der Benutzer eine Ansicht individuell konfigurieren muss,
wobei vor der Ausführung des automatischen Ausfüllens geeignete Layouts auf verfügbare Bildschirme angewendet werden müssen, wobei die Layouts bestimmt werden, indem das ausgewählte Navigationselement (302) betrachtet wird, um zu bestimmen, ob es irgendwelche spezifischen Layouts gibt, die auf die Bildschirme angewendet werden sollten, wobei, wenn irgendwelche Bildschirme immer noch ohne Layouts sind, ein übergeordnetes Navigationselement (302) abgefragt wird, um die Suche nach für Bildschirme geeigneten Layouts fortzusetzen,
wobei dies fortgesetzt wird, bis ein Wurzelknoten der Hierarchie des Navigationsmodells (300) erreicht ist oder alle Bildschirme Layouts haben.

## Revendications

1. Système de configuration d'interface utilisateur graphique automatisée, comprenant :
au moins un processeur de configuration ; et
une ou plusieurs instructions exécutables par processeur stockées sur au moins un support de stockage lisible par ordinateur du système de configuration d'interface utilisateur graphique automatisée, lesdites instructions exécutables par processeur comportant des instructions pour, lorsqu'elles sont exécutées par l'au moins un processeur de configuration :
afficher un modèle de navigation (300), le modèle de navigation (300) comprenant une hiérarchie d'éléments de navigation (302),
les éléments de navigation (302) comportant un comportement de remplissage automatique ;
recevoir une sélection d'un des éléments de navigation (302) via un dispositif d'entrée ;
parcourir, en réponse à ladite réception, le modèle de navigation (300) pour en localiser un ou plusieurs autres éléments de navigation (302) comportant des métadonnées associées à l'élément de navigation (302) sélectionné ;
générer, en réponse à ladite localisation, un écran d'interface utilisateur graphique comportant une pluralité de carreaux (602-610) ; et
peupler automatiquement, en réponse à ladite génération, au moins un des carreaux (602-610) par un contenu visuel représentant l'élément de navigation (302) sélectionné et au moins un des carreaux (602-610) restants de la pluralité par un contenu visuel représentant chacun des un ou plusieurs éléments de navigation (302) localisés ; et
exécuter un remplissage automatique, qui comporte une ou plusieurs options pour commander la façon dont un contenu est automatiquement injecté dans des carreaux (602-610) sans nécessiter une configuration individuelle d'une vue par l'utilisateur,
avant l'exécution du remplissage automatique, des agencements adaptés devant être appliqués à des écrans disponibles, les agencements étant déterminés compte tenu de l'élément de navigation (302) sélectionné afin de déterminer s'il existe des agencements particuliers à appliquer aux écrans,
s'il subsiste des écrans vides sans agencements, un élément de navigation (302) parent étant interrogé afin de poursuivre la recherche d'agencements adaptés à des écrans,
ce processus se poursuivant jusqu'à atteindre un nœud racine de la hiérarchie du modèle de navigation (300), ou jusqu'à ce que tous les écrans comportent des agencements.

2. Système de configuration d'interface utilisateur graphique automatisée selon la revendication 1, dans lequel, lors de l'exécution du remplissage automatique, le remplissage automatique recherche des agencements qui remplissent initialement les écrans avant de déterminer quel contenu afficher dans des carreaux (602-610) particuliers.

3. Système de configuration d'interface utilisateur graphique automatisée selon la revendication 2, dans lequel l'élément de navigation (302) sélectionné est inspecté pour y déceler d'éventuelles commandes qui placent des agencements ou contenus dans un plein écran et, s'il subsiste des écrans vides, le remplissage automatique remonte jusqu'à l'élément de navigation (302) parent pour identifier des commandes supplémentaires, relatives à un agencement ou écran, à appliquer aux écrans vides,
et, s'il subsiste des carreaux vides, le remplissage automatique remonte jusqu'à l'élément de navigation (302) parent pour identifier des commandes ou un contenu supplémentaires à appliquer aux carreaux vides,
ce processus se poursuivant jusqu'à remplir tous les carreaux ou atteindre la racine du modèle de navigation (300).

4. Système de configuration d'interface utilisateur graphique automatisée selon la revendication 3, dans lequel, lorsque le remplissage automatique a atteint la racine du modèle de navigation (300) et qu'il subsiste des écrans ou carreaux vides, un premier enfant de l'élément de navigation (302) sélectionné est inspecté pour déterminer s'il comporte un contenu qui s'applique aux écrans ou carreaux disponibles.

5. Système de configuration d'interface utilisateur graphique automatisée selon l'une quelconque des revendications précédentes, comprenant en outre des instructions exécutables par processeur stockées sur l'au moins un support de stockage lisible par ordinateur pour, lorsqu'elles sont exécutées par l'au moins un processeur de configuration, mettre à jour, en réponse à ladite réception, un ou plusieurs attributs de contexte de l'élément de navigation sélectionné afin de mettre à jour le contenu visuel représentant l'élément de navigation (302) sélectionné, et/ou
comprenant en outre des instructions exécutables par processeur stockées sur l'au moins un support de stockage lisible par ordinateur pour, lorsqu'elles sont exécutées par l'au moins un processeur de configuration, gérer le peuplement automatique des carreaux (602-610) par un contenu visuel sur une pluralité de dispositifs d'affichage.

6. Système de configuration d'interface utilisateur graphique automatisée selon l'une quelconque des revendications précédentes, dans lequel les éléments de navigation (302) représentent chacun un dispositif d'un système de commande de processus.

7. Système de configuration d'interface utilisateur graphique automatisée selon l'une quelconque des revendications précédentes, dans lequel les éléments de navigation (302) sont disposés hiérarchiquement au sein du modèle de navigation (300).

8. Système de configuration d'interface utilisateur graphique automatisée selon la revendication 7, dans lequel le modèle de navigation (300) définit la hiérarchie d'éléments de navigation (302), le contenu visuel représentant chaque élément de navigation (302), et des actions à exécuter lorsque chaque élément de navigation (302) est sélectionné.

9. Système de configuration d'interface utilisateur graphique automatisée selon l'une quelconque des revendications précédentes, dans lequel le modèle de navigation (300) définit une navigation au travers d'une pluralité d'écrans d'interface utilisateur graphique générés.

10. Procédé mis en œuvre par ordinateur, comprenant :
l'affichage, par une application s'exécutant sur un dispositif informatique, d'un modèle de navigation (300), le modèle de navigation (300) comportant une hiérarchie d'éléments de navigation (302),
les éléments de navigation (302) comportant un comportement de remplissage automatique ;
la réception, par l'application, d'une sélection d'un des éléments de navigation (302) depuis un dispositif d'entrée ;
le parcours, par l'application en réponse à ladite réception, du modèle de navigation (300) pour localiser un ou plusieurs autres éléments de navigation (302) du modèle de navigation (300) comportant des métadonnées associées à l'élément de navigation (300) sélectionné ;
la génération, par l'application en réponse à la localisation des un ou plusieurs autres éléments de navigation (302), d'un écran d'interface utilisateur graphique comportant une pluralité de carreaux (602-610) ; et
le peuplement, par l'application, d'au moins un des carreaux (602-610) par un contenu visuel représentant l'élément de navigation (300) sélectionné et d'au moins un des carreaux (602-610) restants de la pluralité par un contenu visuel représentant chacun des un ou plusieurs éléments de navigation (302) localisés, l'application réalisant ledit peuplement automatiquement en réponse à ladite génération ; et
l'exécution d'un remplissage automatique, qui comporte une ou plusieurs options pour commander la façon dont un contenu est automatiquement injecté dans des carreaux (602-610) sans nécessiter une configuration individuelle d'une vue par l'utilisateur,
avant l'exécution du remplissage automatique, des agencements adaptés devant être appliqués à des écrans disponibles, les agencements étant déterminés compte tenu de l'élément de navigation (302) sélectionné afin de déterminer s'il existe des agencements particuliers à appliquer aux écrans,
s'il subsiste des écrans vides sans agencements, un élément de navigation (302) parent étant interrogé afin de poursuivre la recherche d'agencements adaptés à des écrans,
ce processus se poursuivant jusqu'à atteindre un nœud racine de la hiérarchie du modèle de navigation (300), ou jusqu'à ce que tous les écrans comportent des agencements.

11. Dispositif de stockage lisible par ordinateur sur lequel sont stockées des instructions lisibles par processeur comportant des instructions pour, lorsqu'elles sont exécutées par un processeur, mettre en œuvre un procédé de configuration automatique d'une interface utilisateur graphique, comprenant :
l'affichage d'un modèle de navigation (300), le modèle de navigation (300) comportant une pluralité d'éléments de navigation (302) agencés hiérarchiquement,
les éléments de navigation (302) comportant un comportement de remplissage automatique ;
la réception d'une sélection d'un des éléments de navigation (302) depuis un dispositif d'entrée ;
le parcours du modèle de navigation (300) pour localiser un ou plusieurs autres éléments de navigation (302) du modèle de navigation (300) comportant des métadonnées associées à l'élément de navigation (302) sélectionné ;
la génération d'un écran d'interface utilisateur graphique comportant une pluralité de carreaux (602-610) ; et
le peuplement d'au moins un des carreaux par un contenu visuel représentant l'élément de navigation (302) sélectionné et d'au moins un des carreaux restants de la pluralité par un contenu visuel représentant chacun des un ou plusieurs éléments de navigation (302) localisés, l'application réalisant ledit peuplement automatiquement en réponse à ladite génération ; et
l'exécution d'un remplissage automatique, qui comporte une ou plusieurs options pour commander la façon dont un contenu est automatiquement injecté dans des carreaux (602-610) sans nécessiter une configuration individuelle d'une vue par l'utilisateur,
avant l'exécution du remplissage automatique, des agencements adaptés devant être appliqués à des écrans disponibles, les agencements étant déterminés compte tenu de l'élément de navigation (302) sélectionné afin de déterminer s'il existe des agencements particuliers à appliquer aux écrans,
s'il subsiste des écrans vides sans agencements, un élément de navigation (302) parent étant interrogé afin de poursuivre la recherche d'agencements adaptés à des écrans,
ce processus se poursuivant jusqu'à atteindre un nœud racine de la hiérarchie du modèle de navigation (300), ou jusqu'à ce que tous les écrans comportent des agencements.
